# EUROPEAN PATENT APPLICATION

(11) **EP 1 930 378 A1**
(43) Date of publication of application: **11.06.2008**
(21) Application number: 06292074.9
(22) Date of filing: 07.12.2006
(51) Int. Cl.: C09B 55/00, C09B 67/22, G11B 7/24

(54) **Nitro schiff base metal complex dyes and their use with monosubstituted squaric acid dyes**

(71) Applicant: Clariant International Ltd., 4132 Muttenz 1 (CH)
(72) Inventor: Lücke, Lars, 65719 Hofheim am Taunus (DE); Weiss, Andre, 86159 Augsburg (DE); Graciet, Jean-Christophe, 68128 Village-Neuf (FR); Steffanut, Pascal, 68128 Village-Neuf (FR); Klein, Cédric, 67170 Brumath (FR); Winter, Martin, Alexander, 79400 Kandern (DE)

(57) **Abstract**

The present invention relates to Nitro Schiff base metal complex dyes, to compositions comprising Nitro Schiff base metal complex dyes and monosubstituted squaric acid complex dyes, and their use in optical layers for optical data recording, preferably for optical data recording using a laser with a wavelength up to 450 nm.

The invention further relates to a write once read many (WORM) type optical data recording medium capable of recording and reproducing information with radiation of blue laser, which employs Nitro Schiff base metal complex dyes, or compositions comprising Nitro Schiff base metal complex dyes and monosubstituted squaric acid complex dyes, in the optical layer.

## Description

The present invention relates to Nitro Schiff base metal complex dyes, to compositions comprising Nitro Schiff base metal complex dyes and monosubstituted squaric acid complex dyes, and their use in optical layers for optical data recording, preferably for optical data recording using a laser with a wavelength up to 450 nm.

The invention further relates to a write once read many (WORM) type optical data recording medium capable of recording and reproducing information with radiation of blue laser, which employs Nitro Schiff base metal complex dyes, or compositions comprising Nitro Schiff base metal complex dyes and monosubstituted squaric acid complex dyes, in the optical layer.

Recently, organic dyes have attracted considerable attentions in the field of diode-laser optical data storage. WORM type optical data recording media like commercial recordable compact discs (CD-R) and recordable digital versatile discs (DVD-R) can contain in the recording layer dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, enhancement of photosensitivity, low thermal conductivity as well as light and thermal stabilities, durability for storage or non-toxicity. Important criteria are also good read-out stability, which means high number of cycles at a given intensity of laser-light, and sufficient solubilities of the dyes in the organic solvents generally applied in the spin coating process.

At the recorded region of such an organic dye type optical data recording medium, the optical properties have been changed not only by a change in the optical characteristics and a decrease in the layer thickness resulting from the thermal decomposition of the dye, but also by a deformation of the substrate.

This recording principle is the same for CD-R and DVD-R, the difference remaining the spot size and the wavelength of the laser light used. CD-R are writable at a wavelength of from 770 to 830 nm and DVD-R, by using more recent compact high-performance red diode lasers, at a wavelength from 600 to 700 nm achieving then a 6- to 8 fold improvement in data packing density in comparison with conventional CDs.

However, considering factors such as the recent spread of electronic networks (e.g. Internet) and the emergence of high definition television (HDTV) broadcasting, inexpensive and convenient recording media, capable of recording image information at even larger capacity, are required. While DVD-R's sufficiently serve as high-capacity recording media at present, demand for larger capacity and higher density has increased.

Blu-ray^{®} discs (Blu-ray^{®} disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) or HD-DVD discs (a standard developed by Toshiba and NEC) are going to be the next milestone in optical data recording technology. By these new specifications the data storage may be increased up to 27 Gigabytes per recording layer for a 12 cm diameter disc. By adopting a blue diode laser with a wavelength of 405 nm (GaN or SHG laser diodes), the pit size and track interval can be further reduced, again increasing the storage capacity by an order of magnitude.

The construction of such optical data recording media is known in the art. The optical recording medium comprises preferably a substrate with a guide groove for laser beam tracking, a recording layer, also called optical layer, containing an organic dye as the main component, a reflective layer and a protective layer. When recording/readout is carried out through the substrate, a transparent substrate is employed. As such a transparent substrate, one made of a resin such as polycarbonate, polymethacrylate or amorphous polyolefin, one made of glass or one having a resin layer made of radiation curable resin, i.e. photopolymerizable resin, formed on glass, may, for example, be employed. Advanced optical data recording media may comprise further layers, such as protective layers, adhesive layers or even additional optical recording layers.

For blue diode-laser optical data storage a variety of dye compounds has been proposed in the literature.

Monosubstituted squaric acid metal complex dyes, for example the compounds of formula (100) and (101), and methods for their preparation, are known e.g. from WO 2006/053834 A.

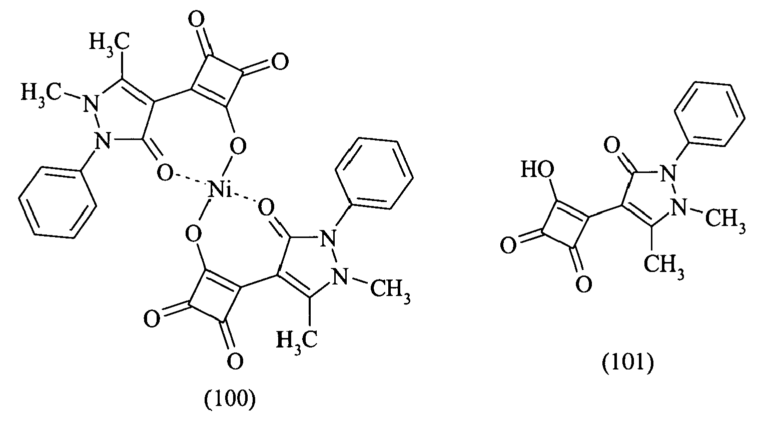

Schiff base based metal complexed dyes are known from JP 200434645.

Unfortunately the dye compounds described so far still show disadvantages which impede their satisfactory use as dyes for optical data storage.

There is a still a need for an optical data recording medium that is capable of recording data at high density with improved recording characteristics and with improved read-out stabilities, also for the recording at speeds exceeding 1X, i.e. for 2X speed and 4X speed recording, therefore a need for an optical data recording medium with improved recording characteristics.

Surprisingly the object was achieved by using compounds comprising Nitro Schiff base metal complex dyes, and by compositions comprising Nitro-Schiff base metal complex dyes, as described below.

In the following text "halogen" represents F, Cl, Br or I, preferably F, Cl or Br, more preferably F or Cl, even more preferably Cl, if not otherwise stated; "alkyl" represents linear and branched alkyl; "alkylthio" represents linear and branched alkylthio; and "alkoxy" represents linear and branched alkoxy; any alkyl, alkylthio and cycloalkyl group being unsubstituted, partially or completely substituted by one or more halogen atoms (preferably halogenated alkyl are selected from the group consisting of CF₃, CF₂CF₃, CF₂CF₂CF₃ and chloromethyl, more preferably from CF₃, CF₂CF₃ and CF₂CF₂CF₃); if not otherwise stated.

Subject of the invention is a compound of formula (I), 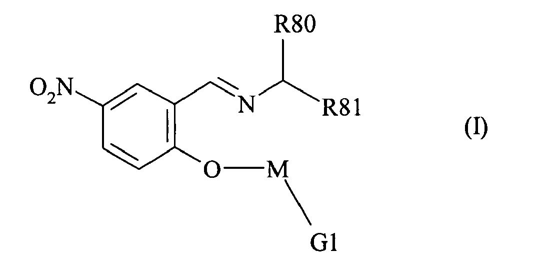 wherein
- M: is a divalent metal atom or oxidized divalent metal atom, preferably selected from main groups 1 to 5 or from transition groups 1 or 2 or 4 to 8 of the Periodic Table of the Chemical Elements;
- G1: is a group of formula (II) or of formula (III); 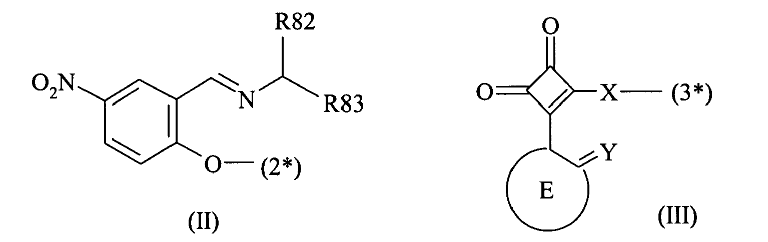
- R⁸⁰, R⁸¹, R⁸² and R⁸³: are independently from each other C₁₋₈ alkyl or C₃₋₈ cycloalkyl; or
- R⁸⁰ and R⁸¹: together with the C atom to which they are connected according to formula (I), or, independently from R⁸⁰ and R⁸¹, R⁸² and R⁸³ together with the C atom to which they are connected according to formula (II), form a five or six membered aromatic or heteroaromatic cycle, the heteroaromatic cycle containing 1, 2 or 3 heteroatoms independently from each other selected from the group consisting of O, N and S; the aromatic or heteroaromatic cycle or the C₃₋₈ cycloalkyl can be annealed with a five or six membered aromatic or heteroaromatic cycle, this second heteroaromatic cycle containing 1, 2 or 3 heteroatoms independently from each other selected from the group consisting of O, N and S;
- the C₁₋₈: alkyl, the C₃₋₈ cycloalkyl, the aromatic or the heteroaromatic cycles can be substituted by 1 to 8 substituents, the substituents being independently from each other selected from the group consisting of hydrogen, CN, CO₂H, CO₂R⁹, halogen, NO₂, OH, SH;
C₁₋₁₂ alkyl, the C₁₋₁₂-alkyl being unsubstituted or substituted by C₁₋₈ alkyl, OH, NO₂, CN, halogen, C₁-C₈ alkoxy, NR⁹R¹⁰ or C₆₋₁₂ aryl, this C₆₋₁₂ aryl residue being unsubstitued or substituted by C₁₋₈ alkyl, OH, NO₂, CN, halogen, C₆₋₁₂ aryl, C₁-C₈ alkoxy or NR⁹R¹⁰;
C₁₋₈ alkynyl, the C₁₋₈ alkynyl being unsubstituted or substituted by C₁₋₈ alkyl, OH, C₆₋₁₂ aryl or NR⁹R¹⁰;
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy, NR⁹R¹⁰ or NR¹¹R¹²;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy or NR⁹R¹⁰;
OC₁₋₈ alkyl, the OC₁₋₈ alkyl being unsubstituted or substituted by C₁₋₈ alkyl, OH, C₆₋₁₂ aryl or NR¹¹R¹²;
NR¹¹R¹²; and
SC₁₋₈ alkyl, the SC₁₋₈ alkyl being unsubstituted or substituted by C₁₋₈ alkyl, OH, C₆₋₁₂ aryl or NR⁹R¹⁰;
- E: together with the two C atoms, to which the Y is double bonded and the squaric acid moiety is single bonded in formula (III), is a five or six membered aromatic or heteroaromatic cycle, the aromatic or heteroaromatic cycle can be annealed with a five or six membered aromatic or heteroaromatic cycle,
the heteroaromatic cycles contain independently from each other 1, 2 or 3 heteroatoms selected from the group consisting of O, N and S,
the aromatic or heteroaromatic cycles can independently from each other be further substituted by 1 to 6 substituents, the substituents being independently from each other selected from the group consisting of hydrogen, CN, halogen, NO₂, OH, SH,
C₁₋₈ alkyl, the C₁₋₈ alkyl being unsubstituted or substituted by C₁₋₈ alkyl, halogen, OH, C₆₋₁₂ aryl or NR³⁰R³¹;
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy or NR³⁰R³¹;
OC₁₋₈ alkyl, the OC₁₋₈ alkyl being unsubstituted or substituted by C₁₋₈ alkyl, OH, C₆₋₁₂ aryl or NR³²R³³;
NR³²R³³; and
SC₁₋₈ alkyl, the SC₁₋₈ alkyl being unsubstituted or substituted by C₁₋₈ alkyl, OH, C₆₋₁₂ aryl or NR³⁰R³¹;
- R⁹, R¹⁰, R¹¹, R¹², R³⁰, R³¹, R³² and R³³: are independently from each other selected from the group consisting of hydrogen, C₁₋₈ alkyl and C₆₋₁₂ aryl; or
- R¹¹: together with R¹², or, independently from R¹¹ and R¹², R³² together with R³³ form together with the N, to which they are connected, a five- or six-membered ring, which may contain further 1, 2 or 3 heteroatoms independently from each other selected from the group consisting of O, N and S;
- X: is selected from the group consisting of O, S and imino-nitrogen N-R¹;
- Y: is selected from the group consisting of O, S and imino-nitrogen N-R²;
- R¹ and R²: are independently from each other selected from the group consisting of hydrogen, C₁₋₁₂ alkyl, benzyl and C₆₋₁₂ aryl; the C₁₋₁₂ alkyl being unsubstituted or substituted by OH, C₆₋₁₂ aryl, halogen or NR³⁰R³¹;
- (2*): in formula (II) denotes the bond of the O atom of the group G1 to the divalent metal atom in formula (I);
- (3*): in formula (III) denotes the bond of the X residue of the group G1 to the divalent metal atom in formula (I).

In a preferred aspect, subject of the invention is a compound of formula (I),
wherein
- M: represents a divalent metal atom or oxidized divalent metal atom selected from the group consisting of Ca, Sr, Ba, Al, Ga, In, Sc, Y, Ti, Zr, V(O), Nb, Ta, Cr, Mo, W, Mn, Fe, Ru, Os, Co, Rh, Ir, Ni, Pd, Pt, Cu, Ag, Au, Zn, Cd, Hg, La, Ce, Pr, Nd, Pm, Sm, Eu, Gd, Tb, Dy, Ho, Er, Tm, Yb and Lu;

R⁸⁰ and R⁸¹ together with the C atom to which they are connected according to formula (I), and, independently from R⁸⁰ and R⁸¹, R⁸² and R⁸³ together with the C atom to which they are connected according to formula (II), represent a residue selected from the group of residues consisting of formulae (f), (g), (h), (i), (j), (k), (1), (m), (n) and (o), preferably of formulae (f), (g), (h), (j), (1) and (n), and their tautomeric forms, 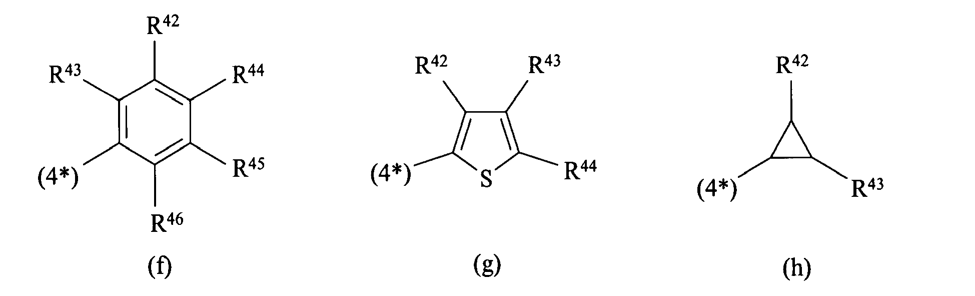 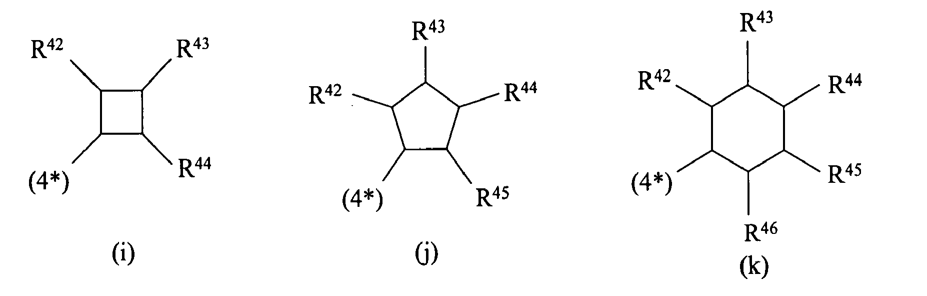 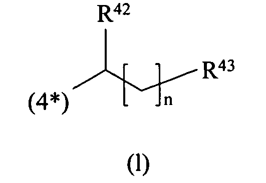 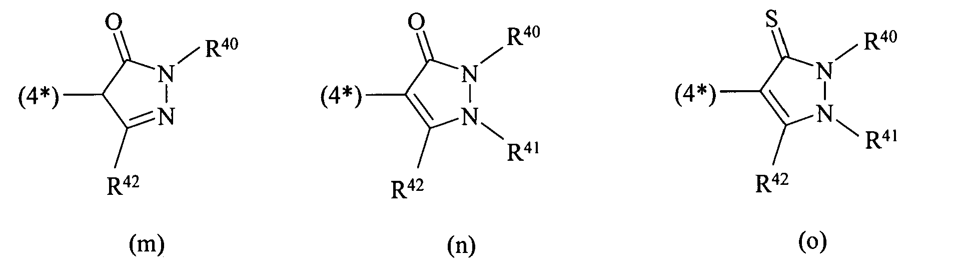 wherein
- (4*): denotes the bond between the C atom, to which R⁸⁰ and R⁸¹ in formula (I) or R⁸² and R⁸³ in formula (II) are connected, and the N atom in formula (I) or (II),
- n: represents a number from 0 to 5, i.e. 0, 1, 2, 3, 4 or 5;
- R⁴⁰ and R⁴¹: independently from each other are selected from the group consisting of hydrogen,
C₁₋₁₂ alkyl, the C₁₋₁₂-alkyl being unsubstituted or substituted by C₁₋₈ alkyl, OH, NO₂, CN, halogen, C₁-C₈ alkoxy, NR⁹R¹⁰ or C₆₋₁₂ aryl, this C₆₋₁₂ aryl residue being unsubstituted or substituted by C₁₋₈ alkyl, OH, NO₂, CN, halogen, C₆₋₁₂ aryl, C₁-C₈ alkoxy or NR⁹R¹⁰;
C₆₋₈-aryl-C₁₋₈-alkyl, the C₆₋₈-aryl-C₁₋₈-alkyl being unsubstituted or substituted by C₁₋₆ alkyl, OH, NO₂, CN, halogen, C₆₋₈ aryl, C₁-C₆ alkoxy or NR⁹R¹⁰; and
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR⁹R¹⁰;
- R⁴² to R⁴⁶: independently from each other are selected from the group consisting of hydrogen, CN, CO₂H, CO₂R⁹, halogen, NO₂, OH, SH;
OC₁₋₈ alkyl, the OC₁₋₈ alkyl being unsubstituted or substituted by C₁₋₈ alkyl, OH, C₆₋₁₂ aryl or NR¹¹R¹²;
NR¹¹R¹²;
C₁₋₈ alkyl, the C₁₋₈ alkyl being unsubstituted or substituted by C₁₋₈ alkyl, halogen, OH, C₆₋₁₂ aryl or NR⁹R¹⁰;
C₁₋₈ alkynyl, the C₁₋₈-alkynyl being unsubstituted or substituted by C₁₋₈ alkyl, OH, C₆₋₁₂ aryl or NR¹¹R¹²;
SC₁₋₈ alkyl, the SC₁₋₈ alkyl being unsubstituted or substituted by C₁₋₈ alkyl, OH, C₆₋₁₂ aryl or NR⁹R¹⁰; and
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy, NR⁹R¹⁰ or NR¹¹R¹²;
- E: together with the two C atoms, to which the Y is double bonded and the squaric acid moiety is single bonded in formula (III), and together with the Y in formula (III), is selected from the group consisting of residues of formulae (g2), (h2), (i2), (j2), (k2), (12), (m2), (n2), (o2), (p2), (q2), (r2) and (s2), preferably of formulae (j2), (k2), (12) and (m2), even more preferably of formulae (m2), and their tautomeric forms, 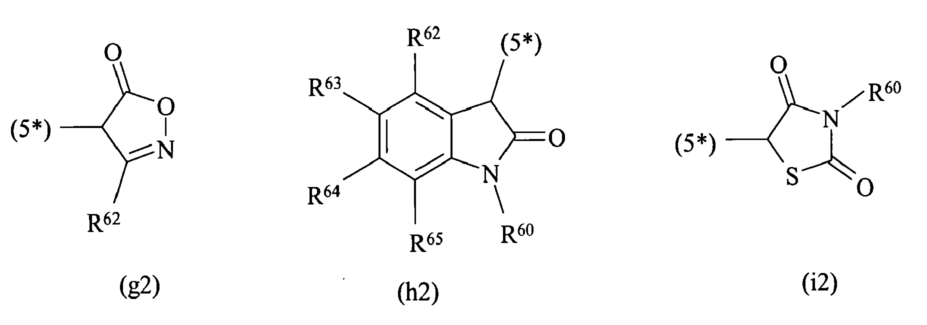 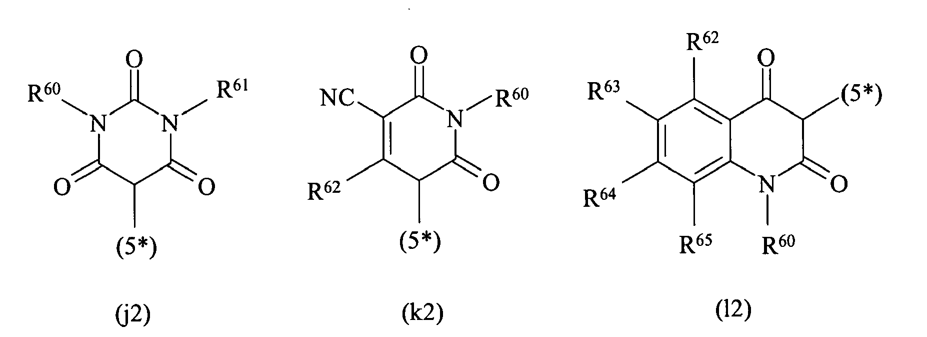 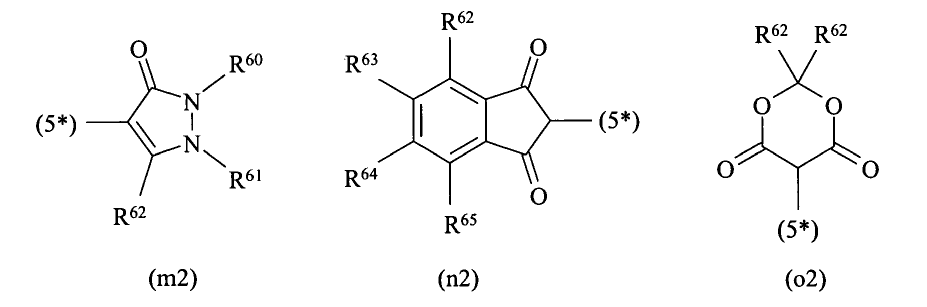 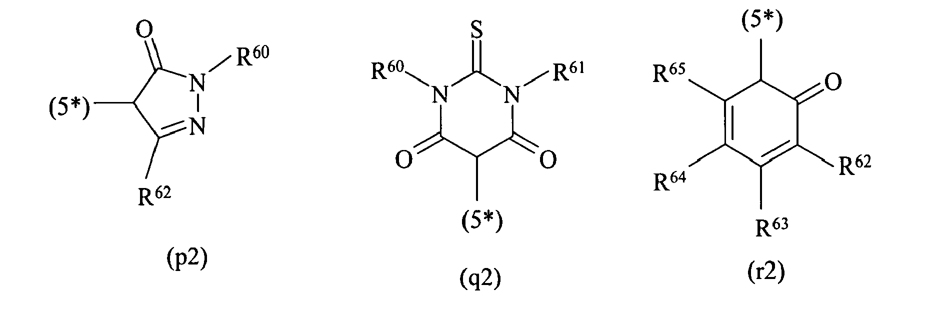 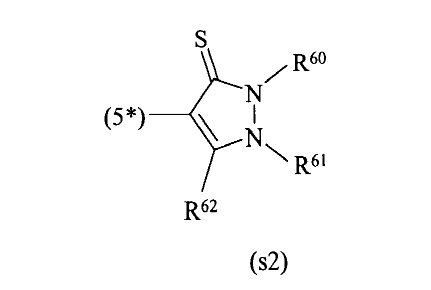 wherein
- (5*): denotes the bond between E and the squaric acid moiety in formula (III);
- R⁶⁰ and R⁶¹: independently from each other are selected from the group consisting of hydrogen,
C₁₋₈ alkyl, the C₁₋₈-alkyl being unsubstituted or substituted by C₁₋₈ alkyl, halogen, OH, C₆₋₁₂ aryl or NR³⁰R³¹;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy or NR³⁰R³¹; and
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
- R⁶² to R⁶⁵: independently from each other are selected from the group consisting of hydrogen, CN, halogen, NO₂, OH,
OC₁₋₈ alkyl, the OC₁₋₈ alkyl being unsubstituted or substituted by C₁₋₈ alkyl, OH, C₆₋₁₂ aryl or NR³²R³³;
NR³²R³³;
C₁₋₈ alkyl, the C₁₋₈ alkyl being unsubstituted or substituted by C₁₋₈ alkyl, halogen, OH, C₆₋₁₂ aryl or NR³⁰R³¹;
SC₁₋₈ alkyl, the SC₁₋₈ alkyl being unsubstituted or substituted by C₁₋₈ alkyl, OH, C₆₋₁₂ aryl or NR³⁰R³¹; and
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
- R⁹, R¹⁰, R¹¹, R¹², R³⁰, R³¹, R³² and R³³: are independently from each other selected from the group consisting of hydrogen, C₁₋₈ alkyl and C₆₋₁₂ aryl; or
- R¹¹ together with R¹²: or, independently from R¹¹ and R¹², R³² together with R³³ form together with the N, to which they are connected, a five- or six-membered ring, which may contain further 1, 2 or 3 heteroatoms independently from each other selected from the group consisting of O, N and S;
- X: represents O or S.

In a more preferred aspect, subject of the invention is a compound of formula (I),
- M: represents a divalent metal atom or oxidized divalent metal atom selected from the group consisting of Al, Y, Zr, V(O), Cr, Mn, Fe, Co, Ni, Cu, Zn and Yb;
- R⁸⁰ and R⁸¹: together with the C atom to which they are connected according to formula (I), represent a residue selected from the group of residues consisting of formulae (f), (g), (h), (j), (1) and (n) and their tautomeric forms,
- n: represents a number from 0 to 5, i.e. 0, 1, 2, 3, 4 or 5;
- R⁴⁰ and R⁴¹: independently from each other are selected from the group consisting of hydrogen,
C₁₋₆ alkyl, the C₁₋₆-alkyl being unsubstituted or substituted by C₁₋₆ alkyl, halogen, OH, NO₂, CN, C₁-C₆ alkoxy, NR⁹R¹⁰ or C₆₋₈ aryl, this C₆₋₈ aryl residue being unsubstituted or substituted by C₁₋₆ alkyl, OH, NO₂, CN, halogen, C₆₋₈ aryl, C₁-C₆ alkoxy or NR⁹R¹⁰;
C₆₋₈-aryl-C₁₋₈-alkyl, the C₆₋₈-aryl-C₁₋₈-alkyl being unsubstituted or substituted by C₁₋₆ alkyl, OH, NO₂, CN, halogen, C₆₋₈ aryl, C₁-C₆ alkoxy or NR⁹R¹⁰; and
C₆-C₈ aryl, the C₆₋₈ aryl being unsubstituted or substituted by C₁₋₆ alkyl, OH, NO₂, CN, halogen, C₆₋₈ aryl, C₁-C₆ alkoxy or NR⁹R¹⁰;
- R⁴² to R⁴⁶: independently from each other are selected from the group consisting of hydrogen, CN, CO₂H, CO₂R⁹, halogen, NO₂, OH, SH;
OC₁₋₆ alkyl, the OC₁₋₆ alkyl being unsubstituted or substituted by C₁₋₆ alkyl, OH, C₆₋₈ aryl or NR¹¹R¹²;
NR¹¹R¹²;
C₁₋₆ alkyl, the C₁₋₆ alkyl being unsubstituted or substituted by C₁₋₆ alkyl, halogen, OH, C₆₋₈ aryl or NR⁹R¹⁰;
C₁₋₆ alkynyl, the C₁₋₆-alkynyl being unsubstituted or substituted by C₁₋₆ alkyl, OH, C₆₋₈ aryl or NR¹¹R¹², preferably unsubstituted ethynyl;
SC₁₋₆ alkyl, the SC₁₋₆ alkyl being unsubstituted or substituted by C₁₋₆ alkyl, OH, C₆₋₈ aryl or NR⁹R¹⁰; and
C₆₋₈ aryl, the C₆₋₈ aryl being unsubstituted or substituted by C₁₋₆ alkyl, OH, NO₂, CN, halogen, C₆₋₈ aryl, C₁-C₆ alkoxy, NR⁹R¹⁰ or NR¹¹R¹²;
- G1: is a group of formula (III);
- E: together with the two C atoms, to which the Y is double bonded and the squaric acid moiety is single bonded in formula (III), and together with the Y in formula (III), is selected from the group consisting of residues of formulae (j2), (k2), (12) and (m2) and their tautomeric forms,
- R⁶⁰ and R⁶¹: independently from each other are selected from the group consisting of hydrogen;
C₁₋₈ alkyl, the C₁₋₈ alkyl being unsubstituted or substituted by C₁₋₈ alkyl, OH, C₆₋₁₂ aryl or NR³⁰R³¹;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy orNR³⁰R³¹; and
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
- R⁶² to R⁶⁵: independently from each other selected from the group consisting of hydrogen, CN, halogen, NO₂, OH;
OC₁₋₈ alkyl, the OC₁₋₈ alkyl being unsubstituted or substituted by C₁₋₈ alkyl, OH, C₆₋₁₂ aryl or NR³⁰R³¹;
NR³²R³³;
C₁₋₈ alkyl, the C₁₋₈ alkyl being unsubstituted or substituted by C₁₋₈ alkyl, halogen, OH, C₆₋₁₂ aryl or NR³⁰R³¹;
SC₁₋₈ alkyl, the SC₁₋₈ alkyl being unsubstituted or substituted by C₁₋₈ alkyl, OH, C₆₋₁₂ aryl or NR³⁰R³¹; and
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
- R⁹,R¹⁰, R¹¹,R¹², R³⁰, R³¹ R³² and R³³: are independently from each other selected from the group consisting of hydrogen, C₁₋₈ alkyl and C₆₋₁₂ aryl, preferably of hydrogen, methyl and ethyl; or
- R¹¹ together with R¹²,: or, independently from R¹¹ and R¹², R³² together with R³³ form together with the N, to which they are connected, a five- or six-membered ring, which may contain further 1, 2 or 3 heteroatoms independently from each other selected from the group consisting of O, N and S, preferably a morpholino ring;
- X: represents O.

In another more preferred aspect, subject of the invention is a compound of formula (I),
- M: represents a divalent metal atom or oxidized divalent metal atom selected from the group consisting of Al, Y, Zr, V(O), Cr, Mn, Fe, Co, Ni, Cu, Zn and Yb;
- G1: is a group of formula (II);
- R⁸⁰ and R⁸¹: together with the C atom to which they are connected according to formula (I), and R⁸² and R⁸³ together with the C atom to which they are connected according to formula (II), are identical, i.e. the compound of formula (I) represents a homoleptic complex, and represent a residue selected from the group of residues consisting of formulae (f), (g), (h), (j), (1) and (n) and their tautomeric forms,
- n: represents a number from 0 to 5, i.e. 0, 1, 2, 3, 4, or 5;
- R⁴⁰and R⁴¹: independently from each other are selected from the group consisting of hydrogen,
C₁₋₆ alkyl, the C₁₋₆-alkyl being unsubstituted or substituted by C₁₋₆ alkyl, OH, NO₂, CN, halogen, C₁-C₆ alkoxy, NR⁹R¹⁰ or C₆₋₈ aryl, this C₆₋₈ aryl residue being unsubstitued or substituted by C₁₋₆ alkyl, OH, NO₂, CN, halogen, C₆₋₈ aryl, C₁-C₆ alkoxy or NR⁹R¹⁰;
C₆₋₈-aryl-C₁₋₈-alkyl, the C₆₋₈-aryl-C₁₋₈-alkyl being unsubstituted or substituted by C₁₋₆ alkyl, OH, NO₂, CN, halogen, C₆₋₈ aryl, C₁-C₆ alkoxy or NR⁹R¹⁰; and
C₆-C₈ aryl, the C₆₋₈ aryl being unsubstituted or substituted by C₁₋₆ alkyl, OH, NO₂, CN, halogen, C₆₋₈ aryl, C₁-C₆ alkoxy or NR⁹R¹⁰;
- R⁴² to R⁴⁶: independently from each other are selected from the group consisting of hydrogen, CN, CO₂H, CO₂R⁹, halogen, NO₂, OH, SH;
OC₁₋₆ alkyl, the OC₁₋₆ alkyl being unsubstituted or substituted by C₁₋₆ alkyl, OH, C₆₋₈ aryl or NR¹¹R¹²;
NR¹¹R¹²;
C₁₋₆ alkyl, the C₁₋₆ alkyl being unsubstituted or substituted by C₁₋₆ alkyl, halogen, OH, C₆₋₈ aryl or NR⁹R¹⁰;
C₁₋₆ alkynyl, the C₁₋₆-alkynyl being unsubstituted or substituted by C₁₋₆ alkyl, OH, C₆₋₈ aryl or NR¹¹R¹², preferably unsubstituted ethynyl;
SC₁₋₆ alkyl, the SC₁₋₆ alkyl being unsubstituted or substituted by C₁₋₆ alkyl, OH, C₆₋₈ aryl or NR⁹R¹⁰; and
C₆₋₈ aryl, the C₆₋₈ aryl being unsubstituted or substituted by C₁₋₆ alkyl, OH, NO₂, CN, halogen, C₆₋₈ aryl, C₁-C₆ alkoxy, NR⁹R¹⁰ or NR¹¹R¹²;
- R⁹, R¹⁰, R¹¹ and R¹²: are independently from each other selected from the group consisting of hydrogen, C₁₋₈ alkyl and C₆₋₁₂ aryl, preferably of hydrogen, methyl and ethyl; or
- R¹¹ together with R¹²: form together with the N, to which they are connected, a five- or six-membered ring, which may contain further 1, 2 or 3 heteroatoms independently from each other selected from the group consisting of O, N and S, preferably a morpholino ring.

In another more preferred aspect, subject of the invention is a compound of formula (I),
M represents a divalent metal atom or oxidized divalent metal atom selected from the group consisting of Al, Y, Zr, V(O), Cr, Mn, Fe, Co, Ni, Cu, Zn and Yb;
G1 is a group of formula (II);
R⁸⁰ and R⁸¹ together with the C atom to which they are connected according to formula (I), and, independently from R⁸⁰ and R⁸¹, R⁸² and R⁸³ together with the C atom to which they are connected according to formula (II), are different, i.e. the compound of formula (I) represents a heteroleptic complex, and represent a residue selected from the group of residues consisting of formulae (f), (g), (h), (j), (1) and (n) and their tautomeric forms,
n represents a number from 0 to 5, i.e. 0, 1, 2, 3, 4, or 5;
R⁴⁰ and R⁴¹ independently from each other are selected from the group consisting of hydrogen,
   C₁₋₆ alkyl, the C₁₋₆-alkyl being unsubstituted or substituted by C₁₋₆ alkyl, OH, NO₂, CN, halogen, C₁-C₆ alkoxy, NR⁹R¹⁰ or C₆₋₈ aryl, this C₆₋₈ aryl residue being unsubstitued or substituted by C₁₋₆ alkyl, OH, NO₂, CN, halogen, C₆₋₈ aryl, C₁-C₆ alkoxy or NR⁹R¹⁰;
   C₆₋₈-aryl-C₁₋₈-alkyl, the C₆₋₈-aryl-C₁₋₈-alkyl being unsubstituted or substituted by C₁₋₆ alkyl, OH, NO₂, CN, halogen, C₆₋₈ aryl, C₁-C₆ alkoxy or NR⁹R¹⁰; and
   C₆-C₈ aryl, the C₆₋₈ aryl being unsubstituted or substituted by C₁₋₆ alkyl, OH, NO₂, CN, halogen, C₆₋₈ aryl, C₁-C₆ alkoxy or NR⁹R¹⁰;
R⁴² to R⁴⁶ independently from each other are selected from the group consisting of hydrogen, CN, CO₂H, CO₂R⁹, halogen, NO₂, OH, SH;
   OC₁₋₆ alkyl, the OC₁₋₆ alkyl being unsubstituted or substituted by C₁₋₆ alkyl, OH, C₆₋₈ aryl or NR¹¹R¹²;
   NR¹¹R¹²;
   C₁₋₆ alkyl, the C₁₋₆ alkyl being unsubstituted or substituted by C₁₋₆ alkyl, halogen, OH, C₆₋₈ aryl or NR⁹R¹⁰;
   C₁₋₆ alkynyl, the C₁₋₆-alkynyl being unsubstituted or substituted by C₁₋₆ alkyl, OH, C₆₋₈ aryl or NR¹¹R¹², preferably unsubstituted ethynyl;
   SC₁₋₆ alkyl, the SC₁₋₆ alkyl being unsubstituted or substituted by C₁₋₆ alkyl, OH, C₆₋₈ aryl or NR⁹R¹⁰; and
   C₆₋₈ aryl, the C₆₋₈ aryl being unsubstituted or substituted by C₁₋₆ alkyl, OH, NO₂, CN, halogen, C₆₋₈ aryl, C₁-C₆ alkoxy, NR⁹R¹⁰ or NR¹¹R¹²;
R⁹, R¹⁰, R¹¹ and R¹² are independently from each other selected from the group consisting of hydrogen, C₁₋₈ alkyl and C₆₋₁₂ aryl, preferably of hydrogen, methyl and ethyl; or
R¹¹ together with R¹² form together with the N, to which they are connected, a five- or six-membered ring, which may contain further 1, 2 or 3 heteroatoms independently from each other selected from the group consisting of O, N and S, preferably a morpholino ring.

In an even more preferred aspect, subject of the invention is a compound of formula (I),
M in formula (I) is a divalent metal atom or oxidized divalent metal atom selected from the group consisting of V(O), Cr, Mn, Co, Fe, Ni, Cu and Zn;
R⁸⁰ and R⁸¹ together with the C atom to which they are connected according to formula (I), represent a residue selected from the group of residues consisting of formulae (f), (g), (h), (j), (l) and (n) and their tautomeric forms,
n represents a number from 0 to 2, i.e. 0, 1 or 2;
R⁴⁰ and R⁴¹ independently from each other are selected from the group consisting of hydrogen,
   C₁₋₆ alkyl, the C₁₋₆-alkyl being unsubstituted or substituted by methyl, ethyl, propyl, OH, F, Br, Cl, C₁-C₃ alkoxy, NR⁹R¹⁰ or C₆-aryl, this C₆-aryl residue being unsubstituted or substituted by C₁₋₆ alkyl, OH, NO₂, CN, F, Br, Cl, C₆ aryl, C₁-C₃ alkoxy or NR⁹R¹⁰;
   C₆-aryl-C₁₋₆-alkyl, the C₆-aryl-C₁₋₆-alkyl being unsubstituted or substituted by methyl, ethyl, propyl, OH, NO₂, CN, F, Br, Cl, C₆ aryl, C₁-C₃ alkoxy, or NR⁹R¹⁰; and
   C₆-aryl, the C₆-aryl being unsubstituted or substituted by C₁₋₆ alkyl, OH, NO₂, CN, F, Br, Cl, C₆ aryl, C₁-C₃ alkoxy or NR⁹R¹⁰;
R⁴² to R⁴⁶ independently from each other are selected from the group consisting of hydrogen, CN, CO₂H, CO₂R⁹, halogen, NO₂, OH, SH;
   OC₁₋₃ alkyl, the OC₁₋₃ alkyl being unsubstituted or substituted by methyl, ethyl, propyl, OH, C₆ aryl or NR¹¹R¹²;
   NR¹¹R¹²;
   C₁₋₃ alkyl, the C₁₋₃ alkyl being unsubstituted or substituted by methyl, ethyl, propyl, F, Br, Cl, OH, C₆ aryl or NR⁹R¹⁰;
   C₁₋₃ alkynyl, the C₁₋₃-alkynyl being unsubstituted or substituted by methyl, ethyl, propyl, OH, C₆₋₈ aryl or NR¹¹R¹², preferably unsubstituted ethynyl;
   SC₁₋₃ alkyl, the SC₁₋₃ alkyl being unsubstituted or substituted by methyl, ethyl, propyl, OH, C₆ aryl or NR⁹R¹⁰; and
   C₆ aryl, the C₆ aryl being unsubstituted or substituted by methyl, ethyl, propyl, OH, NO₂ CN, F, Br, Cl, C₆ aryl, C₁-C₃ alkoxy, NR⁹R¹⁰ or NR¹¹R¹²;
G1 is a group of formula (III);
E together with the two C atoms, to which the Y is double bonded and the squaric acid moiety is single bonded in formula (III), and together with the Y in formula (III), is residue of formula (m2);
R⁶⁰ represents phenyl or p-tolyl, preferably phenyl;
R⁶¹ represents methyl or benzyl, preferably methyl;
R⁶² represents methyl or phenyl, preferably methyl;
R⁹, R¹⁰, R¹¹ and R¹² are independently from each other selected from the group consisting of hydrogen, C₁₋₈ alkyl and C₆₋₁₂ aryl, preferably of hydrogen, methyl and ethyl; or
R¹¹ together with R¹² form together with the N, to which they are connected, a five- or six-membered ring, which may contain further 1, 2 or 3 heteroatoms independently from each other selected from the group consisting of O, N and S, preferably a morpholino ring.

In another even more preferred aspect, subject of the invention is a compound of formula (I),
M represents a divalent metal atom or oxidized divalent metal atom selected from the group consisting of V(O), Cr, Mn, Co, Fe, Ni, Cu and Zn;
G1 is a group of formula (II);
R⁸⁰ and R⁸¹ together with the C atom to which they are connected according to formula (I), and R⁸² and R⁸³ together with the C atom to which they are connected according to formula (II), are identical, i.e. the compound of formula (I) represents a homoleptic complex, and represent a residue selected from the group of residues consisting of formulae (f), (g), (h), (j), (l) and (n) and their tautomeric forms,
n represents a number from 0 to 2, i.e. 0, 1 or 2;
R⁴⁰ and R⁴¹ independently from each other are selected from the group consisting of hydrogen,
   C₁₋₆ alkyl, the C₁₋₆-alkyl being unsubstituted or substituted by methyl, ethyl, propyl, OH, F, Br, Cl, C₁-C₃ alkoxy, NR⁹R¹⁰ or C₆-aryl, this C₆-aryl residue being unsubstitued or substituted by C₁₋₆ alkyl, OH, NO₂, CN, F, Br, Cl, C₆ aryl, C₁-C₃ alkoxy or NR⁹R¹⁰;
   C₆-aryl-C₁₋₆-alkyl, the C₆-aryl-C₁₋₆-alkyl being unsubstituted or substituted by methyl, ethyl, propyl, OH, NO₂, CN, F, Br, Cl, C₆ aryl, C₁-C₃ alkoxy or NR⁹R¹⁰; and
   C₆-aryl, the C₆-aryl being unsubstituted or substituted by C₁₋₆ alkyl, OH, NO₂, CN, F, Br, Cl, C₆ aryl, C₁-C₃ alkoxy or NR⁹R¹⁰;
R⁴² to R⁴⁶ independently from each other are selected from the group consisting of hydrogen, CN, CO₂H, CO₂R⁹, halogen, NO₂, OH, SH;
   OC₁₋₃ alkyl, the OC₁₋₃ alkyl being unsubstituted or substituted by methyl, ethyl, propyl, OH, C₆ aryl or NR¹¹R¹²;
   NR¹¹R¹²;
   C₁₋₃ alkyl, the C₁₋₃ alkyl being unsubstituted or substituted by methyl, ethyl, propyl, F, Br, Cl, OH, C₆ aryl or NR⁹R¹⁰;
   C₁₋₃ alkynyl, the C₁₋₃-alkynyl being unsubstituted or substituted by methyl, ethyl, propyl, OH, C₆₋₈ aryl or NR¹¹R¹², preferably unsubstituted ethynyl;
   SC₁₋₃ alkyl, the SC₁₋₃ alkyl being unsubstituted or substituted by methyl, ethyl, propyl, OH, C₆ aryl or NR⁹R¹⁰; and
   C₆ aryl, the C₆ aryl being unsubstituted or substituted by methyl, ethyl, propyl, OH, NO₂, CN, F, Br, Cl, C₆ aryl, C₁-C₃ alkoxy, NR⁹R¹⁰ or NR¹¹R¹²;
R⁹, R¹⁰, R¹¹ and R¹² are independently from each other selected from the group consisting of hydrogen, C₁₋₈ alkyl and C₆₋₁₂ aryl, preferably of hydrogen, methyl and ethyl; or
R¹¹ together with R¹² form together with the N, to which they are connected, a five- or six-membered ring, which may contain further 1, 2 or 3 heteroatoms independently from each other selected from the group consisting of O, N and S, preferably a morpholino ring.

In another even more preferred aspect, subject of the invention is a compound of formula (I),
- M: represents a divalent metal atom or oxidized divalent metal atom selected from the group consisting of Al, Y, Zr, V(O), Cr, Mn, Fe, Co, Ni, Cu, Zn and Yb;
- G1: is a group of formula (II);
- R⁸⁰ and R⁸¹: together with the C atom to which they are connected according to formula (I), and, independently from R⁸⁰ and R⁸¹, R⁸² and R⁸³ together with the C atom to which they are connected according to formula (II), are different, i.e. the compound of formula (I) represents a heteroleptic complex, and represent a residue selected from the group of residues consisting of formulae (f), (g), (h), (j), (1) and (n) and their tautomeric forms,
- n: represents a number from 0 to 2, i.e. 0, 1 or 2;
- R⁴⁰ and R⁴¹: independently from each other are selected from the group consisting of hydrogen,
C₁₋₆ alkyl, the C₁₋₆-alkyl being unsubstituted or substituted by methyl, ethyl, propyl, OH, F, Br, Cl, C₁-C₃ alkoxy, NR⁹R¹⁰ or C₆-aryl, this C₆-aryl residue being unsubstituted or substituted by C₁₋₆ alkyl, OH, NO₂, CN, F, Br, Cl, C₆ aryl, C₁-C₃ alkoxy or NR⁹R¹⁰;
C₆-aryl-C₁₋₆-alkyl, the C₆-aryl-C₁₋₆-alkyl being unsubstituted or substituted by methyl, ethyl, propyl, OH, NO₂, CN, F, Br, Cl, C₆ aryl, C₁-C₃ alkoxy, or NR⁹R¹⁰; and
C₆-aryl, the C₆-aryl being unsubstituted or substituted by C₁₋₆ alkyl, OH, NO₂, CN, F, Br, Cl, C₆ aryl, C₁-C₃ alkoxy or NR⁹R¹⁰;
- R⁴² to R⁴⁶: independently from each other are selected from the group consisting of hydrogen, CN, CO₂H, CO₂R⁹, halogen, NO₂, OH, SH;
OC₁₋₃ alkyl, the OC₁₋₃ alkyl being unsubstituted or substituted by methyl, ethyl, propyl, OH, C₆ aryl or NR¹¹R¹²;
NR¹¹R¹²;
C₁₋₃ alkyl, the C₁₋₃ alkyl being unsubstituted or substituted by methyl, ethyl, propyl, F, Br, Cl, OH, C₆ aryl or NR⁹R¹⁰;
C₁₋₃ alkynyl, the C₁₋₃-alkynyl being unsubstituted or substituted by methyl, ethyl, propyl, OH, C₆₋₈ aryl or NR¹¹R¹², preferably unsubstituted ethynyl;
SC₁₋₃ alkyl, the SC₁₋₃ alkyl being unsubstituted or substituted by methyl, ethyl, propyl, OH, C₆ aryl or NR⁹R¹⁰; and
C₆ aryl, the C₆ aryl being unsubstituted or substituted by methyl, ethyl, propyl, OH, NO₂, CN, F, Br, Cl, C₆ aryl, C₁-C₃ alkoxy, NR⁹R¹⁰ or NR¹¹R¹²;
- R⁹, R¹⁰, R¹¹ and R¹²: are independently from each other selected from the group consisting of hydrogen, C₁₋₈ alkyl and C₆₋₁₂ aryl, preferably of hydrogen, methyl and ethyl; or
- R¹¹ together with R¹²: form together with the N, to which they are connected, a five- or six-membered ring, which may contain further 1, 2 or 3 heteroatoms independently from each other selected from the group consisting of O, N and S, preferably a morpholino ring.

Especially preferably, the compounds of formula (I) are selected from the group consisting of compounds of formulae (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34) and (35).

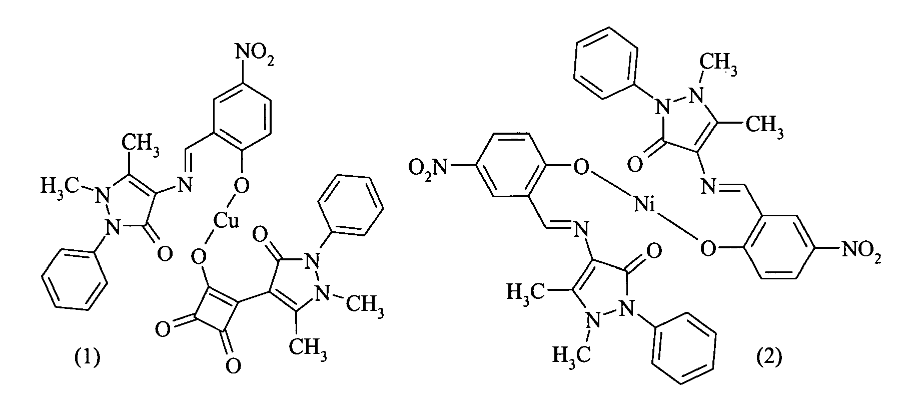

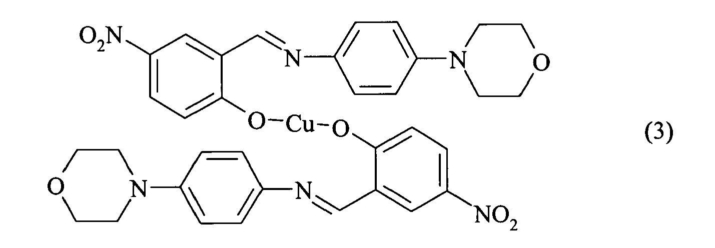

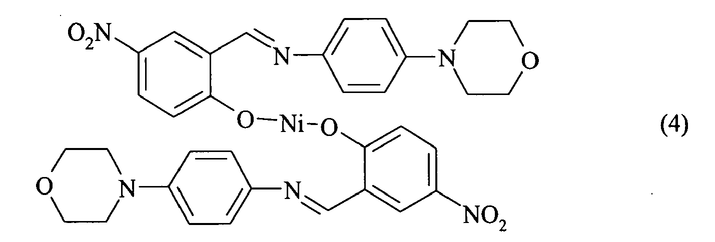

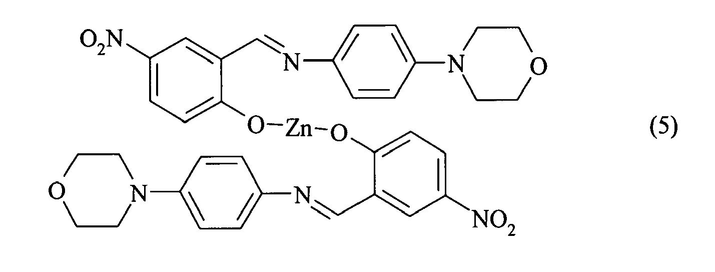

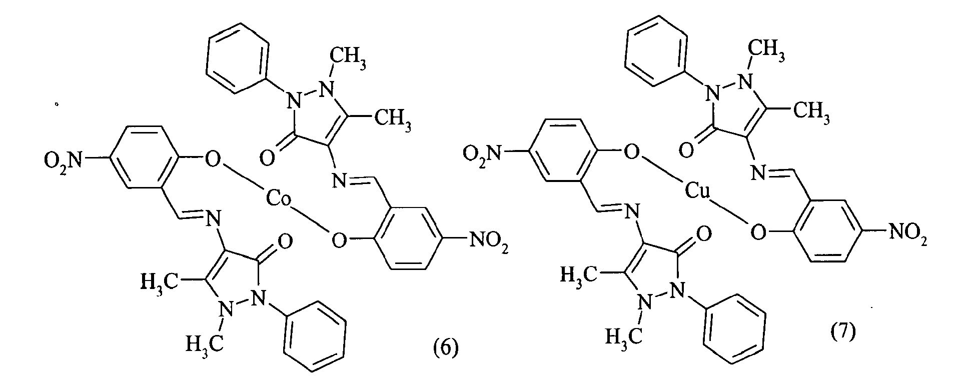

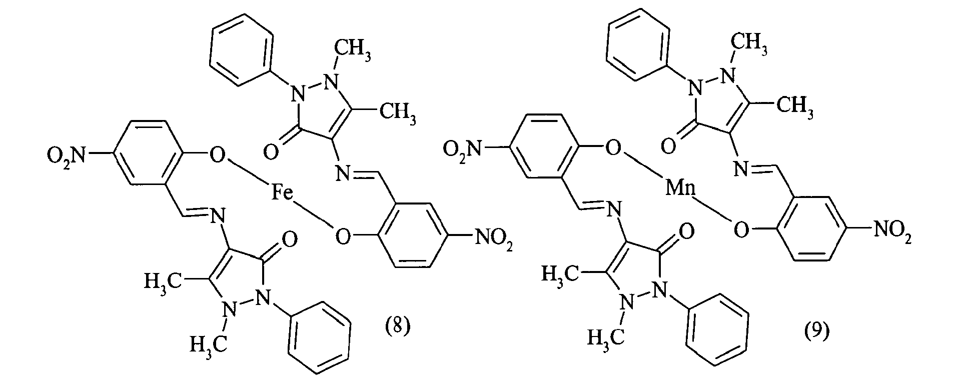

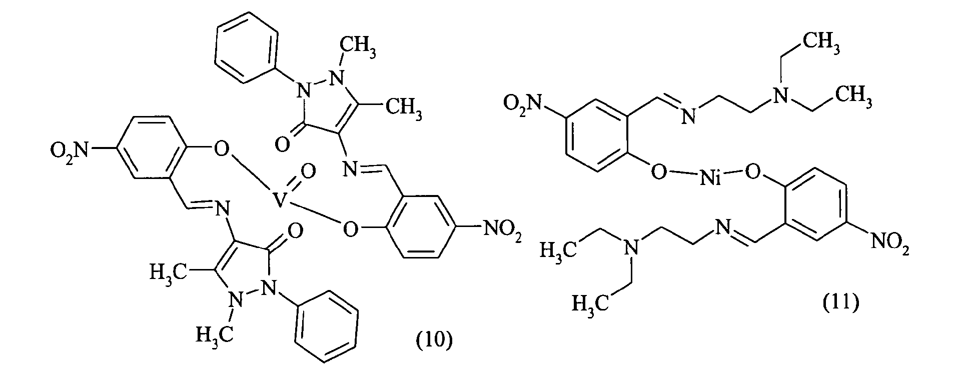

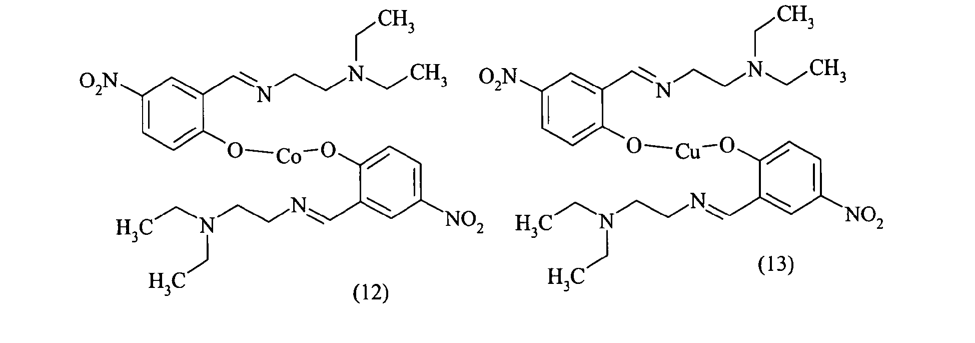

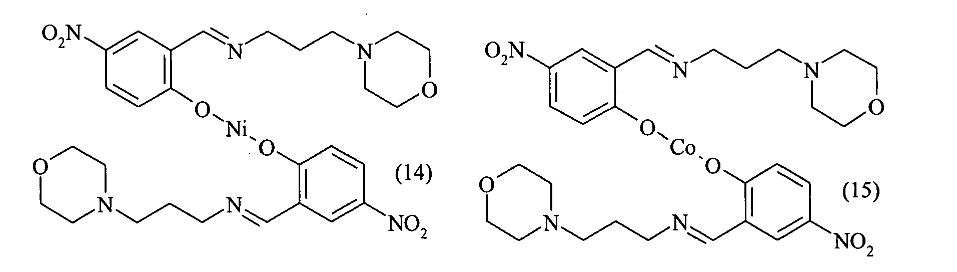

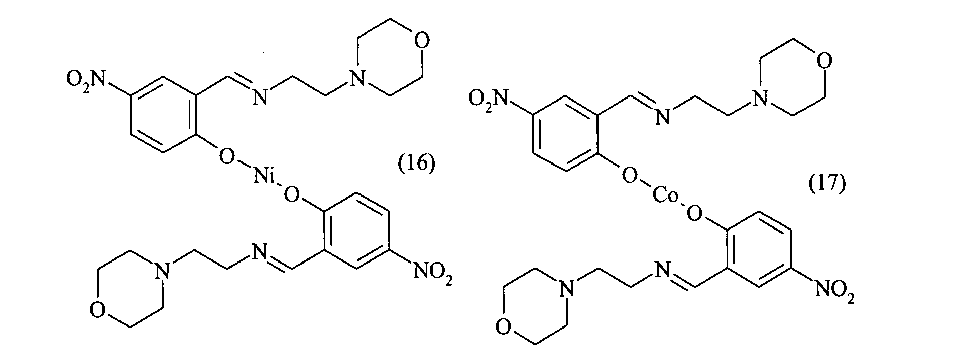

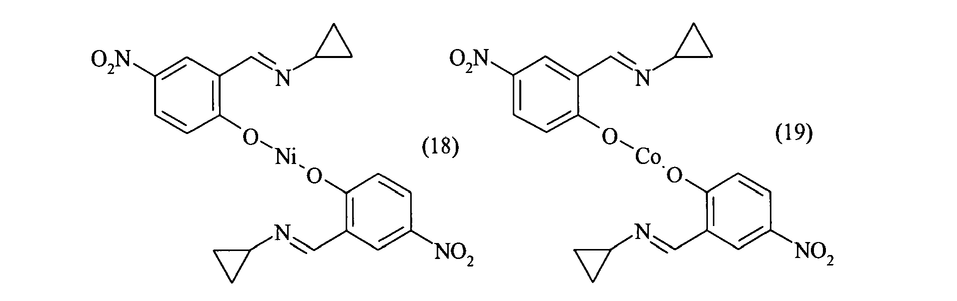

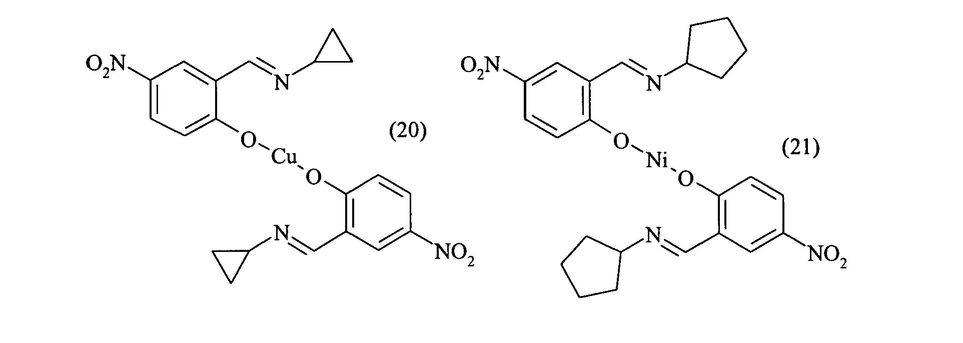

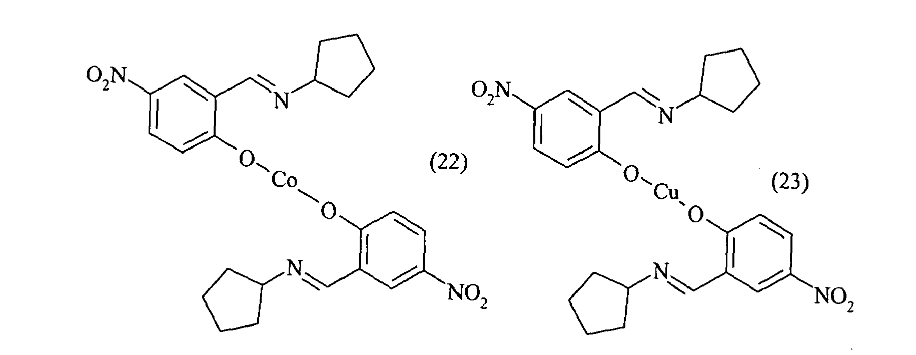

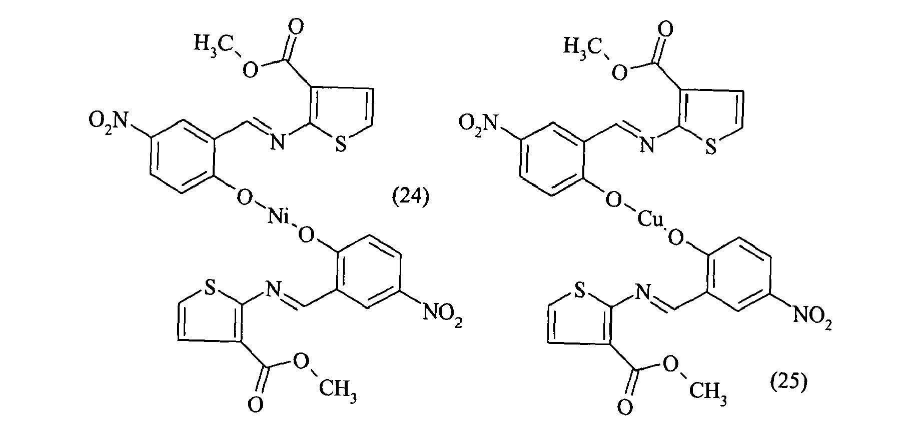

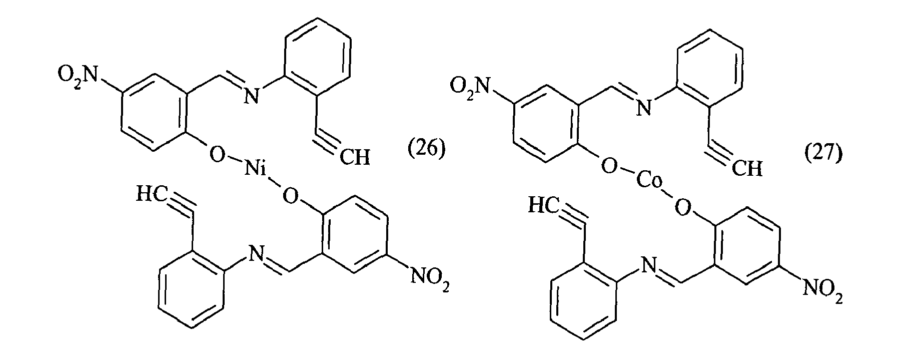

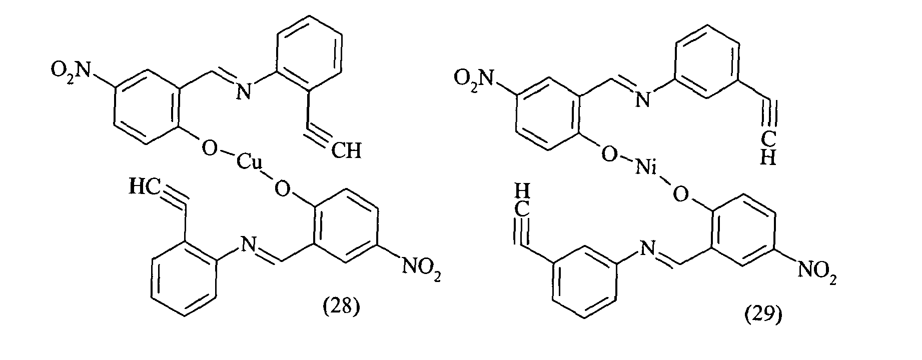

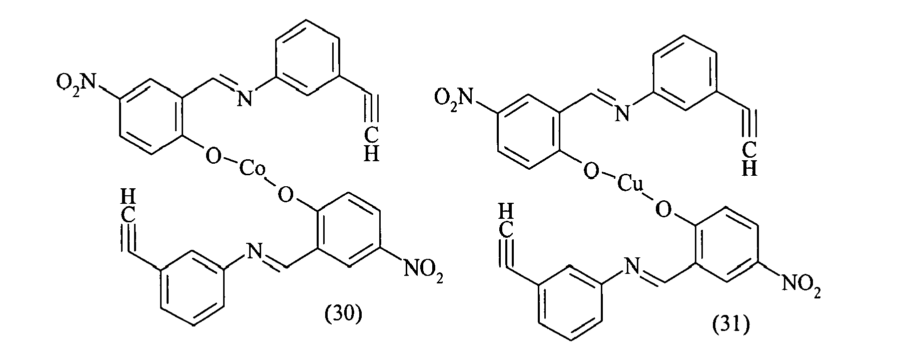

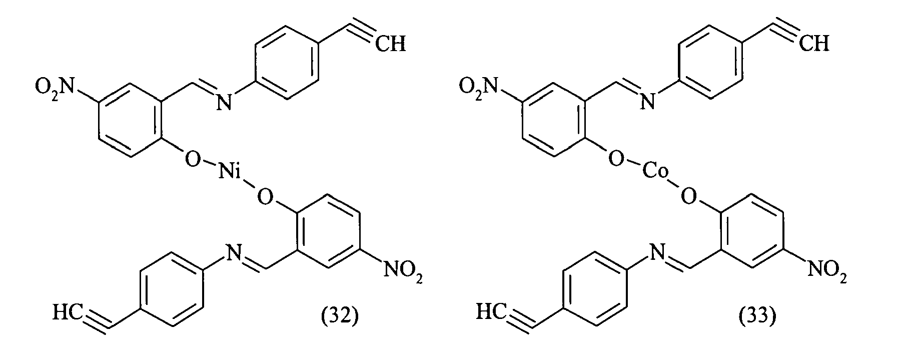

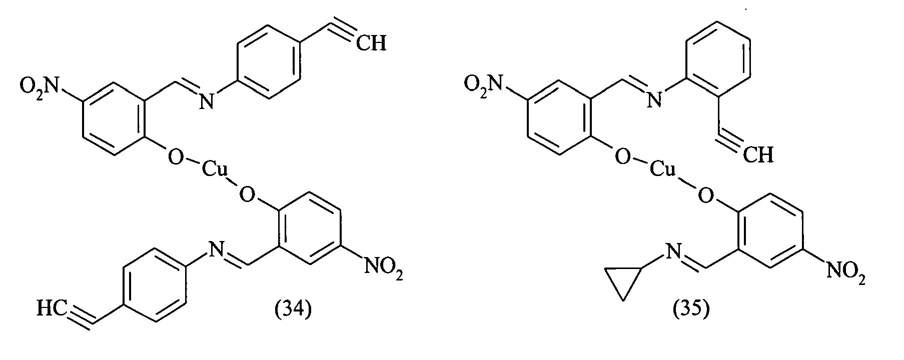

More especially preferably, the compounds of formula (I) are compounds of formula (1) or (7).

### Preparation of the compounds of formula (I)

The compounds of formula (I) are prepared by complexing reaction of one equivalent of a compound of formula (Ia) and one equivalent of a compound of formula (IIa) or (IIIa) with one equivalent of a divalent metal salt, 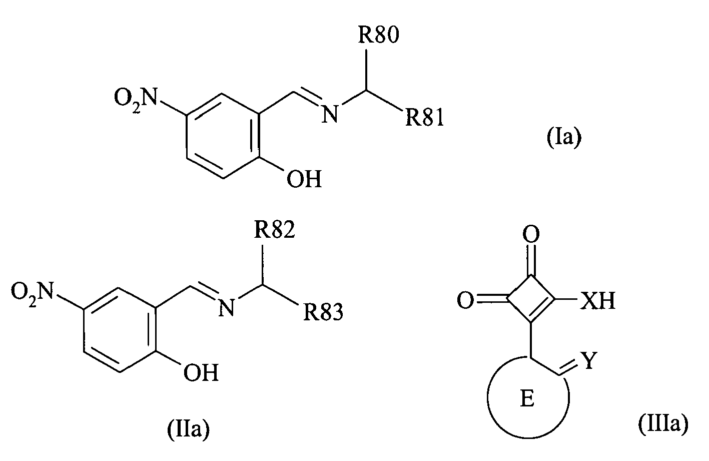 wherein
R⁸⁰, R⁸¹, R⁸² and R⁸³ are independently from each other C₁₋₈ alkyl or C₃₋₈ cycloalkyl; or R⁸⁰ and R⁸¹ together with the C atom to which they are connected according to formula (I), or, independently from R⁸⁰ and R⁸¹, R⁸² and R⁸³ together with the C atom to which they are connected according to formula (II), form a five or six membered aromatic or heteroaromatic cycle, the heteroaromatic cycle containing 1, 2 or 3 heteroatoms independently from each other selected from the group consisting of O, N and S;
   the aromatic or heteroaromatic cycle or the C₃₋₈ cycloalkyl can be annealed with a five or six membered aromatic or heteroaromatic cycle, this second heteroaromatic cycle containing 1, 2 or 3 heteroatoms independently from each other selected from the group consisting of O, N and S;
the C₁₋₈ alkyl, the C₃₋₈ cycloalkyl, the aromatic or the heteroaromatic cycles can be substituted by 1 to 8 substituents, the substituents being independently from each other selected from the group consisting of hydrogen, CN, CO₂H, CO₂R⁹, halogen, NO₂, OH, SH;
   C₁₋₁₂ alkyl, the C₁₋₁₂-alkyl being unsubstituted or substituted by C₁₋₈ alkyl, OH, NO₂, CN, halogen, C₁-C₈ alkoxy, NR⁹R¹⁰ or C₆₋₁₂ aryl, this C₆₋₁₂ aryl residue being unsubstitued or substituted by C₁₋₈ alkyl, OH, NO₂, CN, halogen, C₆₋₁₂ aryl, C₁-C₈ alkoxy or NR⁹R¹⁰;
   C₁₋₈ alkynyl, the C₁₋₈ alkynyl being unsubstituted or substituted by C₁₋₈ alkyl, OH, C₆₋₁₂ aryl or NR⁹R¹⁰;
   C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy, NR⁹R¹⁰ or NR¹¹R¹²;
   C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy or NR⁹R¹⁰;
   OC₁₋₈ alkyl, the OC₁₋₈ alkyl being unsubstituted or substituted by C₁₋₈ alkyl, OH, C₆₋₁₂ aryl or NR¹¹R¹²;
   NR¹¹R¹² ; and
   SC₁₋₈ alkyl, the SC₁₋₈ alkyl being unsubstituted or substituted by C₁₋₈ alkyl, OH, C₆₋₁₂ aryl or NR⁹R¹⁰;
E together with the two C atoms, to which the Y is double bonded and the squaric acid moiety is single bonded in formula (III), is a five or six membered aromatic or heteroaromatic cycle, the aromatic or heteroaromatic cycle can be annealed with a five or six membered aromatic or heteroaromatic cycle,
   the heteroaromatic cycles contain independently from each other 1, 2 or 3 heteroatoms selected from the group consisting of O, N and S,
   the aromatic or heteroaromatic cycles can independently from each other be further substituted by 1 to 6 substituents, the substituents being independently from each other selected from the group consisting of hydrogen, CN, halogen, NO₂, OH, SH,
   C₁₋₈ alkyl, the C₁₋₈ alkyl being unsubstituted or substituted by C₁₋₈ alkyl, halogen, OH, C₆₋₁₂ aryl or NR³⁰R³¹;
   C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
   C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy or NR³⁰R³¹;
   OC₁₋₈ alkyl, the OC₁₋₈ alkyl being unsubstituted or substituted by C₁₋₈ alkyl, OH, C₆₋₁₂ aryl or NR³²R³³;
   NR³²R³³; and
   SC₁₋₈ alkyl, the SC₁₋₈ alkyl being unsubstituted or substituted by C₁₋₈ alkyl, OH, C₆₋₁₂ aryl or NR³⁰R³¹;
R⁹, R¹⁰, R¹¹, R¹², R³⁰, R³¹, R³² and R³³ are independently from each other selected from the group consisting of hydrogen, C₁₋₈ alkyl and C₆₋₁₂ aryl; or
R¹¹ together with R¹², or, independently from R¹¹ and R¹², R³² together with R³³ form together with the N, to which they are connected, a five- or six-membered ring, which may contain further 1, 2 or 3 heteroatoms independently from each other selected from the group consisting of O, N and S;
X is selected from the group consisting of O, S and imino-nitrogen N-R¹;
Y is selected from the group consisting of O, S and imino-nitrogen N-R²;
R¹ and R² are independently from each other selected from the group consisting of hydrogen, C₁₋₁₂ alkyl, benzyl and C₆₋₁₂ aryl; the C₁₋₁₂ alkyl being unsubstituted or substituted by OH, C₆₋₁₂ aryl, halogen or NR³⁰R³¹.

Preferably, the divalent metal salt is derived from a metal selected from main groups 1 to 5 or from transition groups 1 or 2 or 4 to 8 of the Periodic Table of the Chemical Elements. More preferably, the divalent metal salt is derived from a metal selected from the group consisting of Ca, Sr, Ba, Al, Ga, In, Sc, Y, Ti, Zr, V(O), Nb, Ta, Cr, Mo, W, Mn, Fe, Ru, Os, Co, Rh, Ir, Ni, Pd, Pt, Cu, Ag, Au, Zn, Cd, Hg, La, Ce, Pr, Nd, Pm, Sm, Eu, Gd, Tb, Dy, Ho, Er, Tm, Yb and Lu, even more preferably of Al, Y, Zr, V(O), Cr, Mn, Fe, Co, Ni, Cu, Zn and Yb, especially preferably of V(O), Cr, Mn, Co, Fe, Ni, Cu, and Zn. Salts of the divalent metal are preferably acetoacetates, sulfates, halides (preferably fluoride, chloride, bromide, iodide, more preferably chloride and bromide, especially chlorides) and acetates and their respective hydrates.

Preferred metal salts are derived from V(O), Fe, Ni, Cu, Co, Zn, and Mn. More preferred metal salts are for example vanadyl-acetoacetate, nickel-, copper-, cobalt-, zinc-, or manganese sulfate; iron-, nickel-, copper-, cobalt-, zinc-, or manganese chloride or iron-, nickel-, copper-, cobalt-, zinc-, or manganese acetate and their respective hydrates, especially the metal salt is selected from the group consisting of Vanadyl(acetoacetate)₂, Fe(OAc)₂, Cu(SO₄), Cu(SO₄)*5 H₂O, CuCl₂, Ni(OAc)₂*4 H₂O, NiCl₂*6 H₂O, Co(SO₄), CoSO₄*7H₂O, Mn (OAc)₂*4 H₂O and Zn(OAc)₂*4 H₂O.

In the following text, the compounds of formula (Ia) and (IIa) are also called Schiff base ligands; and the compounds of formula (IIIa) are also called squaric acid ligands.

The complexing reaction is preferably done at temperatures of from-10°C to 200°C, preferably of from 0°C to 130°C, more preferably of from 20°C to 120°C, even more preferably the complexing reaction is carried out between room temperature and reflux temperature and at atmospheric pressure.

The reaction time of complexing reaction is preferably between 1 min and 24 h, more preferably between 10 min and 12 h, even more preferably between 15 min and 6 h.

Preferably, the compounds of formula (I) are prepared by complexing reaction of a solution of one equivalent of a metal salt with a boiling solution of one equivalent of the compounds of formula (Ia) and one equivalent of the compounds of formula (IIa) and/or of formula (IIIa) respectively. It is possible to use more than one compound of formula (Ia), as well as more than one compound of formula (IIa) and/or (IIIa) respectively. Preferably the combined amounts of the compounds of formula (Ia) and (IIa) and/or (IIIa) should preferably be equal to two equivalents of the metal salt. Of course it is also possible to use more than one metal salt, preferably a mixture of 2 or 3 metal salts, in the required stoichiometric amounts with regard to the compounds of fomula (Ia) and (IIa) and/or (IIIa); and a combination of these measures is also possible.

The complexing reaction usually results in a precipitate, the precipitate is isolated following standard methods, preferably by filtration. In case of a solution, the solvent can be removed until precipitation occurs, or the solution is combined with another solvent to initiate precipitation, preferably with water and/or hexane or toluene, and then the product is isolated by filtration.

The solvents that can be used in the complexing reaction are water, organic solvents and mixtures thereof. The solvents are preferably selected from the group consisting of C₁₋₈ alcohols, nitriles, preferably acetonitrile, acetone, aromatic solvents such as toluene or chlorobenzene, DMF, DMSO, NMP, pyridine.

More preferred solvents used for the complexing reaction are C₁₋₈ alcohols, nitriles an pyridine, especially ethanol, pyridine and acetonitrile.

It is also possible to add the metal salt already at an earlier stage of the synthesis of the compounds of formula (Ia), (IIa) and/or (IIIa) or their precursors, preferably before, during or after the Schiff base forming reaction, more preferably after the Schiff base forming reaction, to the resulting suspension or solution of the Schiff base ligand.

Even more preferably the Schiff base ligands are isolated and dried after synthesis, and the complexing reaction is carried out in a separate step.

### Preparation of the Schiff base ligands of formula (Ia) and (IIa)

The Schiff base ligands of the formula (Ia) and (IIa) are prepared by condensation reaction of the respective compounds of formula (Iaa) or (IIaa), also called amine components or the respective amines, with 2-Hydroxy-5-nitrobenzaldehyde; 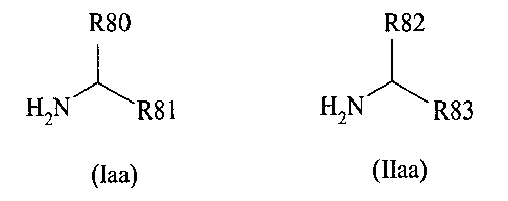 wherein
R80, R81, R82 and R83 have the same meaning as described above with all their preferred embodiments.

These respective amines, i.e. the compounds of formula (Iaa) or (IIaa), and 2-Hydroxy-5-nitrobenzaldehyde are known substances and can be prepared according to known procedures.

It is possible to use more than one amine component, resulting in the respective mixture of Schiff base ligands.

The condensation reaction preferably is carried out in an organic acid. The organic acid is more preferably selected from the group consisting of formic acid, acetic acid, propionic acid and mixtures thereof, more preferably acetic acid is used.

Also preferably the condensation reaction is carried out in a solvent, more preferably in water, in organic solvents or in mixtures thereof. The solvents are preferably selected from the group consisting of C₁₋₈ alcohols, nitriles, preferably acetonitrile, acetone, aromatic solvents such as toluene or chlorobenzene, DMF, DMSO, NMP, pyridine.

More preferred solvents used for the condensation reaction are C₁₋₈ alcohols and aromatic solvents, especially ethanol and toluene.

The condensation reaction is preferably carried out in a stoichiometric ratio between the 2-Hydroxy-5-nitrobenzaldehyde and the amine component. The condensation reaction is preferably done at temperatures between -10°C to 200°C, preferably between 0°C to 130°C, more preferably between 15°C to 120°C, even more preferably the condensation reaction is carried out between room temperature and reflux temperature and at atmospheric pressure.

It is also possible to strip off the solvent during condensation reaction to remove water from the reaction mixture. Preferably, this is done by a solvent that forms an azeotropic mixture with water, preference being given to ethanol and toluene and mixtures thereof, particular preference to ethanol.

The condensation reaction is preferably catalysed by acids, more preferably by organic acids, even more preferably by formic acid, acetic acid, propionic acid, para-toluene sulfonic acid and mixtures thereof, especially preferably by acetic acid and para-toluene sulfonic acid.

Preferably, the Schiff base ligand is isolated following standard methods, in case of a precipitate preferably by filtration, and preferably dried.

In case of a solution, the solvent can be removed until precipitation occurs or the solution is combined with another solvent to initiate precipitation, preferably with aliphatic or aromatic solvents, more preferably hexane and toluene, and then the product is isolated by filtration.

### Preparation of the squaric acid ligands of formula (IIIa)

The compounds of formula (IIIa) are known compounds and can be produced according to or in analogy to known procedures.

A further subject of the invention is therefore a process for the preparation of the compounds of formula (I), as well as of the compounds of formula (I) in all the preferred aspects of the formula (I) as described above, by a complexing reaction of the ligands of formula (Ia) and (IIa) and/or (IIIa), with a metal salt;
with the compounds of formula (Ia) and (IIa) preferably being prepared by a condensation reaction of the 2-Hydroxy-5-nitrobenzaldehyde with the respective amines.

Another subject of the invention is a compound of formula (105), (106), (109), (110) or (112).

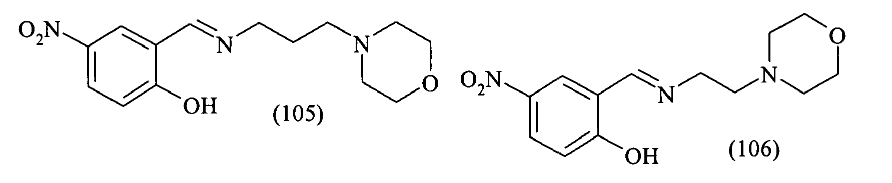

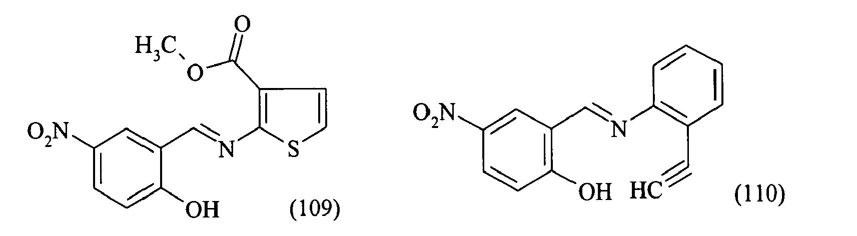

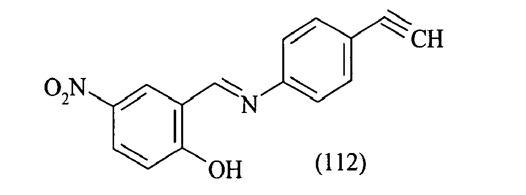

Another subject of the invention is a process for the preparation of a compound of formula (105), (106), (109), (110) or (112) by condensation reaction of the respective amine with 2-Hydroxy-5-nitrobenzaldehyde.

The preferred embodiments of this condensation reaction are those described above under the heading "Preparation of the Schiff base ligands of formula (Ia) and (IIa)"

A further subject of the invention is the use of a compound of a formula selected from the group of formulae (105), (106), (109), (110) and (112), as a ligand, preferably as a ligand in metal complex dyes; the metal complex dyes preferably being used in optical layers, more preferably in optical layers for optical data recording.

A further subject of the invention is the use of the compounds of formula (I) and the use of the compounds of formula (I) in all the preferred aspects of the formula (I) as described above, especially the use of a compound of formula (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34) or (35), even more especially (1) or (7), in an optical layer, preferably in an optical layer for optical data recording.

A further subject of the invention is the use of the compounds of formula (I) and the use of the compounds of formula (I) in all the preferred aspects of the formula (I) as described above, especially the use of a compound of formula (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34) or (35), even more especially (1) or (7), as a dye in an optical layer, preferably in an optical layer for optical data recording.

Further subject of the invention is a composition (C) comprising a component (A) and a component (B), wherein
the component (A) is a compound of formula (I); wherein
M is a divalent metal atom or oxidized divalent metal atom, preferably selected from main groups 1 to 5 or from transition groups 1 or 2 or 4 to 8 of the Periodic Table of the Chemical Elements;
G1 is a group of formula (II) or of formula (III);
R⁸⁰, R⁸¹, R⁸² and R⁸³ are independently from each other C₁₋₈ alkyl or C₃₋₈ cycloalkyl; or
R⁸⁰ and R⁸¹ together with the C atom to which they are connected according to formula (I), or, independently from R⁸⁰ and R⁸¹, R⁸² and R⁸³ together with the C atom to which they are connected according to formula (II), form a five or six membered aromatic or heteroaromatic cycle, the heteroaromatic cycle containing 1, 2 or 3 heteroatoms independently from each other selected from the group consisting of O, N and S;
   the aromatic or heteroaromatic cycle or the C₃₋₈ cycloalkyl can be annealed with a five or six membered aromatic or heteroaromatic cycle, this second heteroaromatic cycle containing 1, 2 or 3 heteroatoms independently from each other selected from the group consisting of O, N and S;
the C₁₋₈ alkyl, the C₃₋₈ cycloalkyl, the aromatic or the heteroaromatic cycles can be substituted by 1 to 8 substituents, the substituents being independently from each other selected from the group consisting of hydrogen, CN, CO₂H, CO₂R⁹, halogen, NO₂, OH, SH;
   C₁₋₁₂ alkyl, the C₁₋₁₂-alkyl being unsubstituted or substituted by C₁₋₈ alkyl, OH, NO₂, CN, halogen, C₁-C₈ alkoxy, NR⁹R¹⁰ or C₆₋₁₂ aryl, this C₆₋₁₂ aryl residue being unsubstitued or substituted by C₁₋₈ alkyl, OH, NO₂, CN, halogen, C₆₋₁₂ aryl, C₁-C₈ alkoxy or NR⁹R¹⁰;
   C₁₋₈ alkynyl, the C₁₋₈ alkynyl being unsubstituted or substituted by C₁₋₈ alkyl, OH, C₆₋₁₂ aryl or NR⁹R¹⁰;
   C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy, NR⁹R¹⁰ or NR¹¹R¹²;
   C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy or NR⁹R¹⁰;
   OC₁₋₈ alkyl, the OC₁₋₈ alkyl being unsubstituted or substituted by C₁₋₈ alkyl, OH, C₆₋₁₂ aryl or NR¹¹R¹²;
   NR¹¹R¹²; and
   SC₁₋₈ alkyl, the SC₁₋₈ alkyl being unsubstituted or substituted by C₁₋₈ alkyl, OH, C₆₋₁₂ aryl or NR⁹R¹⁰;
E together with the two C atoms, to which the Y is double bonded and the squaric acid moiety is single bonded in formula (III), is a five or six membered aromatic or heteroaromatic cycle, the aromatic or heteroaromatic cycle can be annealed with a five or six membered aromatic or heteroaromatic cycle,
   the heteroaromatic cycles contain independently from each other 1, 2 or 3 heteroatoms selected from the group consisting of O, N and S,
   the aromatic or heteroaromatic cycles can independently from each other be further substituted by 1 to 6 substituents, the substituents being independently from each other selected from the group consisting of hydrogen, CN, halogen, NO₂, OH, SH,
      C₁₋₈ alkyl, the C₁₋₈ alkyl being unsubstituted or substituted by C₁₋₈ alkyl, halogen, OH, C₆₋₁₂ aryl or NR³⁰R³¹;
      C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
      C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy or NR³⁰R³¹;
      OC₁₋₈ alkyl, the OC₁₋₈ alkyl being unsubstituted or substituted by C₁₋₈ alkyl, OH, C₆₋₁₂ aryl or NR³²R³³;
      NR³²R³³; and
      SC₁₋₈ alkyl, the SC₁₋₈ alkyl being unsubstituted or substituted by C₁₋₈ alkyl, OH, C₆₋₁₂ aryl or NR³⁰R³¹;
R⁹, R¹⁰, R¹¹, R¹², R³⁰, R³¹, R³² and R³³ are independently from each other selected from the group consisting of hydrogen, C₁₋₈ alkyl and C₆₋₁₂ aryl; or
R¹¹ together with R¹², or, independently from R¹¹ and R¹², R³² together with R³³ form together with the N, to which they are connected, a five- or six-membered ring, which may contain further 1, 2 or 3 heteroatoms independently from each other selected from the group consisting of O, N and S;
X is selected from the group consisting of O, S and imino-nitrogen N-R¹;
Y is selected from the group consisting of O, S and imino-nitrogen N-R²;
R¹ and R² are independently from each other selected from the group consisting of hydrogen, C₁₋₁₂ alkyl, benzyl and C₆₋₁₂ aryl; the C₁₋₁₂ alkyl being unsubstituted or substituted by OH, C₆₋₁₂ aryl, halogen or NR³⁰R³¹;
(2*) in formula (II) denotes the bond of the O atom of the group G1 to the divalent metal atom in formula (I);
(3*) in formula (III) denotes the bond of the X residue of the group G1 to the divalent metal atom in formula (I);
or the component (A) is a compound of formula (I) in anyone of the preferred aspects of the compound of formula (I) as described above;
and
the component (B) is a compound of formula (X), wherein 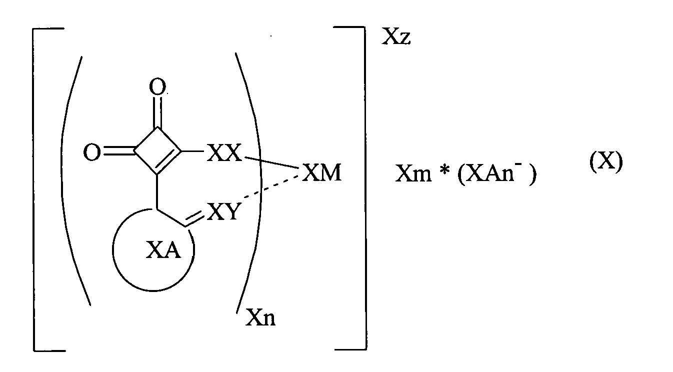
- XX: is selected from the group consisting of O, S and N-R51;
- XY: is selected from the group consisting of O, S or imino-nitrogen N-R52;
- R51 and R52: are independently from each other selected from the group consisting of hydrogen, C₁₋₁₂ alkyl, benzyl and C₆₋₁₂ aryl; the C₁₋₁₂ alkyl being unsubstituted or substituted by OH, C₆₋₁₂ aryl, halogen, NR55R56;
- Xz: represents a charge equal to 0, +1 or +2;
- Xm: represents a number equal to Xz;
- XAn⁻: represents an anion counter-part selected from inorganic anions such as iodine, fluorine, bromine, chlorine, perchlorate, hexafluoroantimonate, hexafluorophosphate, tetrafluoroborate, tetraphenylborate or from organic anions such as dicyanoamide (N(CN)₂) or trifluoromethanesulfonimide (N(SO₂CF₃)₂; or
- XAn⁻: can also be an anionic azo metal complex;
- XM: represents a metal ion;
- XA: is a five or six membered aromatic or heteroaromatic cycle, the aromatic or heteroaromatic cycle can be annealed with a five or six membered aromatic or heteroaromatic cycle, the heteroaromatic cycles contain 1, 2 or 3 heteroatoms selected from the group consisting of O, N and S, the aromatic or heteroaromatic cycles can be further substituted by 1 to 8 substituents independently from each other selected from the group consisting of
hydrogen, CN, halogen, NO₂, OH, SH,
C₁₋₈ alkyl, the C₁₋₈-alkyl being unsubstituted or substituted by C₁₋₈ alkyl, OH, C₆₋₁₂ aryl or NR55R56;
C(XU)₃;
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy, NR55R56;
C₁₋₈ alkoxy, the C₁₋₈ alkoxy being unsubstituted or substituted by C₁₋₈ alkyl; OH, C₆₋₁₂ aryl or NR57R58;
NR57R58; and
C₁₋₈ alkylthio, the C₁₋₈ alkylthio being unsubstituted or substituted by C₁₋₈ alkyl, OH, C₆₋₁₂ aryl or NR55R56; the
- R55 and R56: are independently from each other hydrogen, C₁₋₈ alkyl or C₆₋₁₂ aryl;
- R57 and R58: are independently from each other hydrogen, C₁₋₈ alkyl or C₆₋₁₂ aryl; or
- R57 and R58: form together with the N, to which they are connected, a five- or six-membered ring, which may contain further 1, 2 or 3 heteroatoms selected from the group consisting of O, N and S;
- XU: represents chlorine, fluorine or bromine;
- Xn: represents a number 1, 2 or 3.

Preferably,
the component (A) is either a compound of formula (I), wherein
- M: represents a divalent metal atom or oxidized divalent metal atom selected from the group consisting of Al, Y, Zr, V(O), Cr, Mn, Fe, Co, Ni, Cu, Zn and Yb;
- R⁸⁰ and R⁸¹: together with the C atom to which they are connected according to formula (I), represent a residue selected from the group of residues consisting of formulae (f), (g), (h), (j), (1) and (n) and their tautomeric forms,
- n: represents a number from 0 to 5, i.e. 0, 1, 2, 3, 4, or 5;
- R⁴⁰ and R⁴¹: independently from each other are selected from the group consisting of hydrogen,
C₁₋₆ alkyl, the C₁₋₆-alkyl being unsubstituted or substituted by C₁₋₆ alkyl, halogen, OH, NO₂, CN, C₁-C₆ alkoxy, NR⁹R¹⁰ or C₆₋₈ aryl, this C₆₋₈ aryl residue being unsubstituted or substituted by C₁₋₆ alkyl, OH, NO₂, CN, halogen, C₆₋₈ aryl, C₁-C₆ alkoxy or NR⁹R¹⁰;
C₆₋₈-aryl-C₁₋₈-alkyl, the C₆₋₈-aryl-C₁₋₈-alkyl being unsubstituted or substituted by C₁₋₆ alkyl, OH, NO₂, CN, halogen, C₆₋₈ aryl, C₁-C₆ alkoxy or NR⁹R¹⁰; and
C₆-C₈ aryl, the C₆₋₈ aryl being unsubstituted or substituted by C₁₋₆ alkyl, OH, NO₂, CN, halogen, C₆₋₈ aryl, C₁-C₆ alkoxy or NR⁹R¹⁰;
- R⁴² to R⁴⁶: independently from each other are selected from the group consisting of hydrogen, CN, CO₂H, CO₂R⁹, halogen, NO₂, OH, SH;
OC₁₋₆ alkyl, the OC₁₋₆ alkyl being unsubstituted or substituted by C₁₋₆ alkyl, OH, C₆₋₈ aryl or NR¹¹R¹²;
NR¹¹R¹²;
C₁₋₆ alkyl, the C₁₋₆ alkyl being unsubstituted or substituted by C₁₋₆ alkyl, halogen, OH, C₆₋₈ aryl or NR⁹R¹⁰;
C₁₋₆ alkynyl, the C₁₋₆-alkynyl being unsubstituted or substituted by C₁₋₆ alkyl, OH, C₆₋₈ aryl or NR¹¹R¹², preferably unsubstituted ethynyl;
SC₁₋₆ alkyl, the SC₁₋₆ alkyl being unsubstituted or substituted by C₁₋₆ alkyl, OH, C₆₋₈ aryl or NR⁹R¹⁰; and
C₆₋₈ aryl, the C₆₋₈ aryl being unsubstituted or substituted by C₁₋₆ alkyl, OH, NO₂, CN, halogen, C₆₋₈ aryl, C₁-C₆ alkoxy, NR⁹R¹⁰ or NR¹¹R¹²;
- G1: is a group of formula (III);
- E: together with the two C atoms, to which the Y is double bonded and the squaric acid moiety is single bonded in formula (III), and together with the Y in formula (III), is selected from the group consisting of residues of formulae (j2), (k2), (12) and (m2) and their tautomeric forms,
- R⁶⁰ and R⁶¹: independently from each other are selected from the group consisting of hydrogen;
C₁₋₈ alkyl, the C₁₋₈ alkyl being unsubstituted or substituted by C₁₋₈ alkyl, OH, C₆₋₁₂ aryl or NR³⁰R³¹;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy orNR³⁰R³¹; and
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
- R⁶² to R⁶⁵: independently from each other selected from the group consisting of hydrogen, CN, halogen, NO₂, OH;
OC₁₋₈ alkyl, the OC₁₋₈ alkyl being unsubstituted or substituted by C₁₋₈ alkyl, OH, C₆₋₁₂ aryl or NR³⁰R³¹;
NR³²R³³;
C₁₋₈ alkyl, the C₁₋₈ alkyl being unsubstituted or substituted by C₁₋₈ alkyl, halogen, OH, C₆₋₁₂ aryl or NR³⁰R³¹;
SC₁₋₈ alkyl, the SC₁₋₈ alkyl being unsubstituted or substituted by C₁₋₈ alkyl, OH, C₆₋₁₂ aryl or NR³⁰R³¹; and
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
- R⁹, R¹⁰, R¹¹, R¹², R³⁰, R³¹, R³² and R³³: are independently from each other selected from the group consisting of hydrogen, C₁₋₈ alkyl and C₆₋₁₂ aryl, preferably of hydrogen, methyl and ethyl; or
- R¹¹: together with R¹², or, independently from R¹¹ and R¹², R³² together with R³³ form together with the N, to which they are connected, a five- or six-membered ring, which may contain further 1, 2 or 3 heteroatoms independently from each other selected from the group consisting of O, N and S, preferably a morpholino ring;
- X: represents O;
or the component (A) is a compound of formula (I), wherein
- M: represents a divalent metal atom or oxidized divalent metal atom selected from the group consisting of Al, Y, Zr, V(O), Cr, Mn, Fe, Co, Ni, Cu, Zn and Yb;
- G1: is a group of formula (II);
- R⁸⁰ and R⁸¹: together with the C atom to which they are connected according to formula (I), and R⁸² and R⁸³ together with the C atom to which they are connected according to formula (II), are identical, i.e. the compound of formula (I) represents a homoleptic complex, and represent a residue selected from the group of residues consisting of formulae (f), (g), (h), (j), (1) and (n) and their tautomeric forms,
- n: represents a number from 0 to 5, i.e. 0, 1, 2, 3, 4, or 5;
- R⁴⁰ and R⁴¹: independently from each other are selected from the group consisting of hydrogen,
C₁₋₆ alkyl, the C₁₋₆-alkyl being unsubstituted or substituted by C₁₋₆ alkyl, OH, NO₂, CN, halogen, C₁-C₆ alkoxy, NR⁹R¹⁰ or C₆₋₈ aryl, this C₆₋₈ aryl residue being unsubstitued or substituted by C₁₋₆ alkyl, OH, NO₂, CN, halogen, C₆₋₈ aryl, C₁-C₆ alkoxy or NR⁹R¹⁰;
C₆₋₈-aryl-C₁₋₈-alkyl, the C₆₋₈-aryl-C₁₋₈-alkyl being unsubstituted or substituted by C₁₋₆ alkyl, OH, NO₂, CN, halogen, C₆₋₈ aryl, C₁-C₆ alkoxy or NR⁹R¹⁰; and
C₆-C₈ aryl, the C₆₋₈ aryl being unsubstituted or substituted by C₁₋₆ alkyl, OH, NO₂, CN, halogen, C₆₋₈ aryl, C₁-C₆ alkoxy or NR⁹R¹⁰;
- R⁴² to R⁴⁶: independently from each other are selected from the group consisting of hydrogen, CN, CO₂H, CO₂R⁹, halogen, NO₂, OH, SH;
OC₁₋₆ alkyl, the OC₁₋₆ alkyl being unsubstituted or substituted by C₁₋₆ alkyl, OH, C₆₋₈ aryl or NR¹¹R¹²;
NR¹¹R¹²;
C₁₋₆ alkyl, the C₁₋₆ alkyl being unsubstituted or substituted by C₁₋₆ alkyl, halogen, OH, C₆₋₈ aryl or NR⁹R¹⁰;
C₁₋₆ alkynyl, the C₁₋₆-alkynyl being unsubstituted or substituted by C₁₋₆ alkyl, OH, C₆₋₈ aryl or NR¹¹R¹², preferably unsubstituted ethynyl;
SC₁₋₆ alkyl, the SC₁₋₆ alkyl being unsubstituted or substituted by C₁₋₆ alkyl, OH, C₆₋₈ aryl or NR⁹R¹⁰; and
C₆₋₈ aryl, the C₆₋₈ aryl being unsubstituted or substituted by C₁₋₆ alkyl, OH, NO₂, CN, halogen, C₆₋₈ aryl, C₁-C₆ alkoxy, NR⁹R¹⁰ or NR¹¹R¹²;
- R⁹, R¹⁰, R¹¹ and R¹²: are independently from each other selected from the group consisting of hydrogen, C₁₋₈ alkyl and C₆₋₁₂ aryl, preferably of hydrogen, methyl and ethyl; or
- R¹¹: together with R¹² form together with the N, to which they are connected, a five- or six-membered ring, which may contain further 1, 2 or 3 heteroatoms independently from each other selected from the group consisting of O, N and S, preferably a morpholino ring;
and
the component (B) is a compound of formula (X), wherein
- XX: represents O;
- Xz: represents a charge equal to 0 or +1;
- Xm: represents a number equal to Xz;
- XAn⁻: represents chloride;
- XM: represents a metal ion selected from the group consisting of Al, Y, Zr, Cr, Fe, Co, Ni, Cu, Zn, Yb;
- Xn: represents the number 2 or 3;
- XA: together with XY is selected from the group consisting of residues of formulae (Xj), (Xk), (Xl) and (Xm) and their tautomeric forms, the (*) denoting the bond of XA to the squaric acid moiety in formula (X), 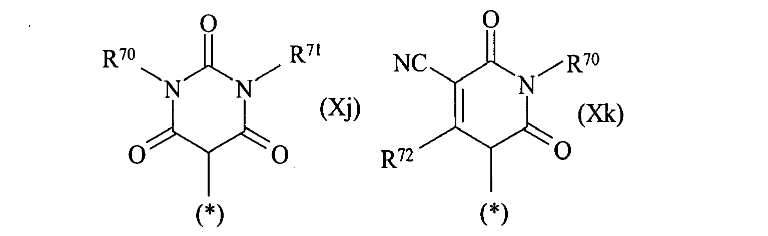 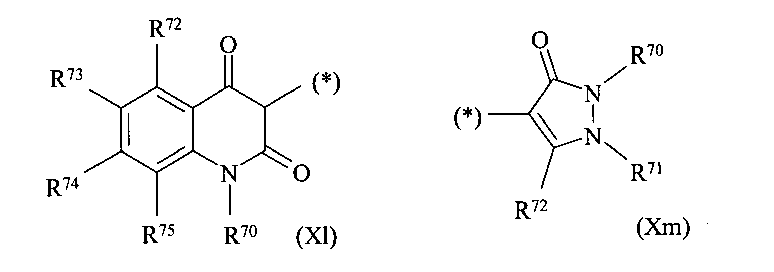
wherein
- R70 and R71: independently from each other represent hydrogen;
C₁₋₈ alkyl, the C₁₋₈ alkyl being unsubstituted or substituted by C₁₋₈ alkyl, OH, C₆₋₁₂ aryl or NR55R56;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy, NR55R56; or
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR55R56;
- R72 to R75: independently from each other represent hydrogen, CN, halogen, NO₂, hydroxyl;
C₁₋₈ alkoxy, the C₁₋₈ alkoxy being unsubstituted or substituted by C₁₋₈ alkyl, OH, C₆₋₁₂ aryl or NR55R56;
NR57R58;
C₁₋₈ alkyl, the C₁₋₈ alkyl being unsubstituted or substituted by C₁₋₈ alkyl, OH, C₆₋₁₂ aryl or NR55R56;
C(XU)₃;
C₁₋₈ alkylthio, the C₁₋₈ alkyl being unsubstituted or substituted by C₁₋₈ alkyl, OH, C₆₋₁₂ aryl or NR55R56; or
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR55R56;
- R55 and R56: are independently from each other hydrogen, C₁₋₈ alkyl or C₆₋₁₂ aryl;
- R57 and R58: are independently from each other hydrogen, C₁₋₈ alkyl or C₆₋₁₂ aryl; or
- R57 and R58: form together with the N, to which they are connected, a five- or six-membered ring, which may contain further 1, 2 or 3 heteroatoms selected from the group consisting of O, N and S;
- XU: represents chlorine, fluorine or bromine.

More preferably,
the component (A) is either a compound of formula (I), wherein
- M: in formula (I) is a divalent metal atom or oxidized divalent metal atom selected from the group consisting of V(O), Cr, Mn, Co, Fe, Ni, Cu and Zn;
- R⁸⁰ and R⁸¹: together with the C atom to which they are connected according to formula (I), represent a residue selected from the group of residues consisting of formulae (f), (g), (h), (j), (1) and (n) and their tautomeric forms,
- n: represents a number from 0 to 2, i.e. 0, 1 or 2;
- R⁴⁰ and R⁴¹: independently from each other are selected from the group consisting of hydrogen,
C₁₋₆ alkyl, the C₁₋₆-alkyl being unsubstituted or substituted by methyl, ethyl, propyl, OH, F, Br, Cl , C₁-C₃ alkoxy, NR⁹R¹⁰ or C₆-aryl, this C₆-aryl residue being unsubstituted or substituted by C₁₋₆ alkyl, OH, NO₂, CN, F, Br, Cl, C₆ aryl, C₁-C₃ alkoxy or NR⁹R¹⁰;
C₆-aryl-C₁₋₆-alkyl, the C₆-aryl-C₁₋₆-alkyl being unsubstituted or substituted by methyl, ethyl, propyl, OH, NO₂, CN, F, Br, Cl, C₆ aryl, C₁-C₃ alkoxy, or NR⁹R¹⁰; and
C₆-aryl, the C₆-aryl being unsubstituted or substituted by C₁₋₆ alkyl, OH, NO₂, CN, F, Br, Cl, C₆ aryl, C₁-C₃ alkoxy or NR⁹R¹⁰;
- R⁴² to R⁴⁶: independently from each other are selected from the group consisting of hydrogen, CN, CO₂H, CO₂R⁹, halogen, NO₂, OH, SH;
OC₁₋₃ alkyl, the OC₁₋₃ alkyl being unsubstituted or substituted by methyl, ethyl, propyl, OH, C₆ aryl or NR¹¹R¹²;
NR¹¹R¹²;
C₁₋₃ alkyl, the C₁₋₃ alkyl being unsubstituted or substituted by methyl, ethyl, propyl, F, Br, Cl, OH, C₆ aryl or NR⁹R¹⁰;
C₁₋₃ alkynyl, the C₁₋₃-alkynyl being unsubstituted or substituted by methyl, ethyl, propyl, OH, C₆₋₈ aryl or NR¹¹R¹², preferably unsubstituted ethynyl;
SC₁₋₃ alkyl, the SC₁₋₃ alkyl being unsubstituted or substituted by methyl, ethyl, propyl, OH, C₆ aryl or NR⁹R¹⁰; and
C₆ aryl, the C₆ aryl being unsubstituted or substituted by methyl, ethyl, propyl, OH, NO₂, CN, F, Br, Cl, C₆ aryl, C₁-C₃ alkoxy, NR⁹R¹⁰ or NR¹¹R¹²;
- G1: is a group of formula (III);
- E: together with the two C atoms, to which the Y is double bonded and the squaric acid moiety is single bonded in formula (III), and together with the Y in formula (III), is residue of formula (m2);
- R⁶⁰: represents phenyl or p-tolyl, preferably phenyl;
- R⁶¹: represents methyl or benzyl, preferably methyl;
- R⁶²: represents methyl or phenyl, preferably methyl;
- R⁹, R¹⁰, R¹¹ and R¹²: are independently from each other selected from the group consisting of hydrogen, C₁₋₈ alkyl and C₆₋₁₂ aryl, preferably of hydrogen, methyl and ethyl; or
- R¹¹ together with R¹²: form together with the N, to which they are connected, a five- or six-membered ring, which may contain further 1, 2 or 3 heteroatoms independently from each other selected from the group consisting of O, N and S, preferably a morpholino ring;
or the component (A) is a compound of formula (I), wherein
- M: represents a divalent metal atom or oxidized divalent metal atom selected from the group consisting of V(O), Cr, Mn, Co, Fe, Ni, Cu and Zn;
- G1: is a group of formula (II);
- R⁸⁰ and R⁸¹: together with the C atom to which they are connected according to formula (I), and R⁸² and R⁸³ together with the C atom to which they are connected according to formula (II), are identical, i.e. the compound of formula (I) represents a homoleptic complex, and represent a residue selected from the group of residues consisting of formulae (f), (g), (h), (j), (1) and (n) and their tautomeric forms,
- n: represents a number from 0 to 2, i.e. 0, 1 or 2;
- R⁴⁰ and R⁴¹: independently from each other are selected from the group consisting of hydrogen,
C₁₋₆ alkyl, the C₁₋₆-alkyl being unsubstituted or substituted by methyl, ethyl, propyl, OH, F, Br, Cl , C₁-C₃ alkoxy, NR⁹R¹⁰ or C₆-aryl, this C₆-aryl residue being unsubstitued or substituted by C₁₋₆ alkyl, OH, NO₂, CN, F, Br, Cl, C₆ aryl, C₁-C₃ alkoxy or NR⁹R¹⁰;
C₆-aryl-C₁₋₆-alkyl, the C₆-aryl-C₁₋₆-alkyl being unsubstituted or substituted by methyl, ethyl, propyl, OH, NO₂, CN, F, Br, Cl, C₆ aryl, C₁-C₃ alkoxy or NR⁹R¹⁰; and
C₆-aryl, the C₆-aryl being unsubstituted or substituted by C₁₋₆ alkyl, OH, NO₂, CN, F, Br, Cl, C₆ aryl, C₁-C₃ alkoxy or NR⁹R¹⁰;
- R⁴² to R⁴⁶: independently from each other are selected from the group consisting of hydrogen, CN, CO₂H, CO₂R⁹, halogen, NO₂, OH, SH;
OC₁₋₃ alkyl, the OC₁₋₃ alkyl being unsubstituted or substituted by methyl, ethyl, propyl, OH, C₆ aryl or NR¹¹R¹²;
NR¹¹R¹²;
C₁₋₃ alkyl, the C₁₋₃ alkyl being unsubstituted or substituted by methyl, ethyl, propyl, F, Br, Cl, OH, C₆ aryl or NR⁹R¹⁰;
C₁₋₃ alkynyl, the C₁₋₃-alkynyl being unsubstituted or substituted by methyl, ethyl, propyl, OH, C₆₋₈ aryl or NR¹¹R¹², preferably unsubstituted ethynyl;
SC₁₋₃ alkyl, the SC₁₋₃ alkyl being unsubstituted or substituted by methyl, ethyl, propyl, OH, C₆ aryl or NR⁹R¹⁰; and
C₆ aryl, the C₆ aryl being unsubstituted or substituted by methyl, ethyl, propyl, OH, NO₂, CN, F, Br, Cl, C₆ aryl, C₁-C₃ alkoxy, NR⁹R¹⁰ or NR¹¹R¹²;
- R⁹, R¹⁰, R¹¹ and R¹²: are independently from each other selected from the group consisting of hydrogen, C₁₋₈ alkyl and C₆₋₁₂ aryl, preferably of hydrogen, methyl and ethyl; or
- R¹¹ together with R¹²: form together with the N, to which they are connected, a five- or six-membered ring, which may contain further 1, 2 or 3 heteroatoms independently from each other selected from the group consisting of O, N and S, preferably a morpholino ring;
and
the component (B) is a compound of formula (X), which is represented by formula (XIV), wherein 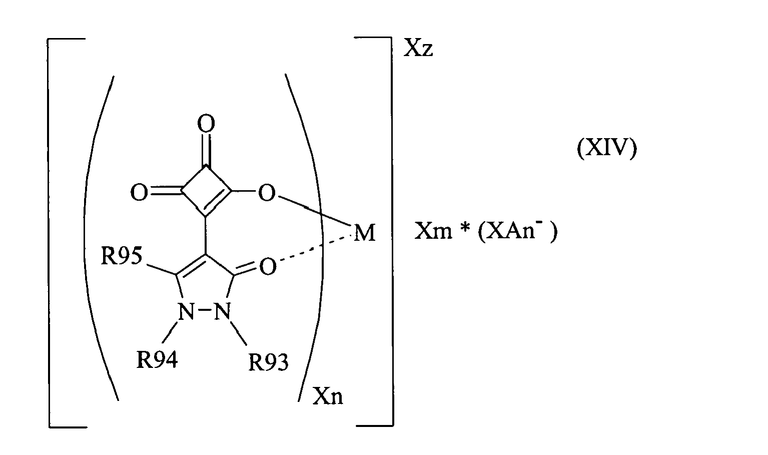
- Xz: represents a charge equal to 0 and +1;
- Xm: represents a number equal to Xz;
- XAn⁻: represents chloride;
- XM: represents a metal ion selected from the group consisting of Al, Zr, Cr, Co, Ni, Cu, Zn;
- Xn: represents a whole number from 2 to 3;
- R93: represents phenyl or p-tolyl;
- R94: represents methyl or benzyl;
- R95: represents methyl or phenyl.

Even more preferably,
the component (A) is a compound of formula (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34) or (35); and
the component (B) is a compound of formula (100).

Especially preferably,
the component (A) is a compound of formula (1), (4) or (6); and
the component (B) is a compound of formula (100).

The composition (C) can also comprise as component (A) more than 1, preferably 2, 3 or 4, more preferably 2 or 3, compounds of formula (I), and/or as component (B) more than 1, preferably 2, 3 or 4, more preferably 2 or 3, compounds of formula (X).

Preferably, the ratio of the weight of the component (A) to the weight of the component (B) is of from between 0.001 and 0.999 to 0.999 and 0.001, more preferably of from between 0.01 and 0.99 to 0.99 and 0.01, even more preferably of from between 0.05 and 0.95 to 0.95 and 0.05.

Especially preferably the ratio of the weight of the component (A) to the weight of the component (B) is of from between 0.01 and 0.40 to 0.99 and 0.60, more preferably of from between 0.025 and 0.35 to 0.975 and 0.65, even more preferably of from between 0.05 and 0.35 to 0.95 and 0.65

Preferably, the composition (C) comprises preferably 10 to 100 % by weight, more preferably 25 to 100 % by weight, even more preferably 50 to 100 % by weight, especially 75 to 100 % by weight, in particular 90 to 100 % by weight, based on the weight of the total composition (C), of the combined amounts of the component (A) and component (B).

Preferably, the composition (C) consists essentially of the component (A) and (B).

The composition (C) are prepared by physically combining the (individual) components (A) and (B), preferably by blending or mixing, the blending or mixing is preferably done in the solid, molten or dissolved state of the components; preferably the blending or mixing is done by dry blending, by mixing the slurries or the solutions of the components; or the mixing is done by a combination of any of the mentioned measures.

For the dry blending, the component (A) is mixed physically with the component (B) in a mill, in a shaker or in any other mechanical device leading to homogeneous mixture of components (A) and (B).

For the slurry blending, also called wet mixing, the component (A) is mixed physically with the component (B) in a solvent. The solvent is preferably at least one organic solvent, water or a mixture of at least one organic solvent with water.

More preferably, the solvent is selected from the group consisting of alkanes, alcohols, aromatic solvents, chlorinated solvents and ketones, even more preferably of hexane, heptane, octane, methanol, ethanol, propanol, butanol, tetrafluoropropanol, dichlorobenzene, toluene, dichloromethane, chloroform, acetone, methyl ethyl ketone and methyl tert-butyl ketone.

To obtain dry blends from the slurry, the solvent is removed by conventional methods known in the art, preferably by filtration or distillation, and the resulting presscake is dried.

In the case that the components are blended in form of their solutions, the components are dissolved in the solvent either individually or in form of a premixture of the components.

A further subject of the invention is therefore a process for the preparation of the composition (C) comprising the components (A) and (B) by physically combining the (individual) components (A) and (B).

A further subject of the invention is the use of the composition (C) comprising the component (A) and the component (B); and the use of the composition (C) comprising the component (A) and the component (B) in all the preferred aspects of the components (A) and (B) as described above, in an optical layer, preferably in an optical layer for optical data recording.

A further subject of the invention is the use of the composition (C) comprising the component (A) and the component (B); and the use of the composition (C) comprising the component (A) and the component (B) in all the preferred aspects of the components (A) and (B) as described above, as a dye in an optical layer, preferably for optical data recording.

A further subject of the present invention is an optical layer comprising at least one compound of formula (I), the compound of formula (I) also being in all the preferred aspects of the formula (I) as described above, especially comprising at least one compound of formula (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34) or (35), more especially (1) or (7), and the use of said optical layer for optical data recording media. An optical layer according to the invention may also comprise a mixture of two or more, preferably of two or three, more preferably of two compounds of formula (I). A further subject of the invention therefore is an optical data recording medium comprising an optical layer comprising at least one compound of formula (I) in all the preferred aspects of the formula (I) as described above.

A further subject of the invention is an optical layer comprising at least one compound of formula (I), with the compound of formula (I) also in all its described embodiments, particularly at least one compound of formula (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34) or (35), more particularly (1) or (7), and at least one compound of formula (X), with the compound of formula (X) also in all its described embodiments; and the use of said optical layer for optical data recording media. An optical layer according to the invention may also comprise two or more, preferably two or three, more preferably two compounds of formula (I), and two or more, preferably two or three, more preferably two compounds of formula (X). A further subject of the invention therefore is an optical data recording medium comprising an optical layer comprising at least one compound of formula (I) and at least one compound of formula (X).

Further, the invention relates to a method for producing optical layers on a substrate comprising the following steps
(a) providing a substrate,
(b) dissolving at least one compound of formula (I), particularly at least one compound of formula (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34) or (35), more particularly (1) or (7), in an organic solvent to form a solution,
(c) coating the solution (b) on the substrate (a),
(d) evaporating the solvent to form an optical layer (also called dye layer or recording layer).

Further, the invention relates to a method for producing optical layers on a substrate comprising the following steps
(a) providing a substrate,
(b) dissolving at least one compound of formula (I), particularly at least one compound of formula (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34) or (35), more particularly (1), (4) or (6), and at least one compound of formula (X), by
   (b1) dissolving a composition (C) comprising the component (A) and the component (B) in an organic solvent to form a solution, or
   (b2a) dissolving at least one compound of formula (I) in an organic solvent to form a solution, and
   (b2b) dissolving at least one compound of formula (X) in an organic solvent to form a solution, or
   (b3) dissolving at least one compound of formula (I) together with at least one compound of formula (X) in an organic solvent to form a solution,
(c) coating the solution or the solutions on the substrate by
   (c1) coating the solution (b1) or the solution (b3) on the substrate (a), or
   (c2) coating the solution (b2a) on the substrate (a), evaporating the solvent, and coating the solution (b2b) on the substrate (a),
(d) evaporating the solvent to form an optical layer (also called dye layer or recording layer).

### (a) Substrate

The substrate, which functions as support for the layers applied thereto, is advantageously semi-transparent (transmittance T>10%) or preferably transparent (transmittance T>90%). The support can have a thickness of from 0.01 to 10 mm, preferably from 0.1 to 5 mm.

Suitable substrates are, for example, glass, minerals, ceramics and thermosetting or thermoplastic plastics. Preferred supports are glass and homo- or co-polymeric plastics. Suitable plastics are, for example, thermoplastic polycarbonates, polyamides, polyesters, polyacrylates and polymethacrylates, polyurethanes, polyolefins, polyvinyl chloride, polyvinylidene fluoride, polyimides, thermosetting polyesters and epoxy resins. The most preferred substrates are polycarbonate (PC) or polymethylmethacrylate (PMMA).

The substrate can be in pure form or may also comprise customary additives, for example UV absorbers as light-stabilizers for the optical layer.

The substrate is advantageously transparent over at least a portion of the range from 350 to 500 nm, so that it is permeable to at least 90% of the incident light of the writing or readout wavelength.

### (b) Organic solvents

Organic solvents are selected from C₁₋₈ alcohol, halogen substituted C₁₋₈ alcohols, C₁₋₈ ketone, C₁₋₈ ether, halogen substituted C₁₋₄ alkane, nitriles, preferably acetonitrile, or amides, or mixtures thereof.

Preferred C₁₋₈ alcohols or halogen substituted C₁₋₈ alcohols are for example methanol, ethanol, isopropanol, diacetone alcohol (DAA), 2,2,3,3-tetrafluoropropanol, trichloroethanol, 2-chloroethanol, octafluoropentanol or hexafluorobutanol, more preferred 2,2,3,3-tetrafluoro-1-propanol.

Preferred C₁₋₈ ketones are for example acetone, methylisobutylketone, methylethylketone, or 3-hydroxy-3-methyl-2-butanone.

Preferred halogen substituted C₁₋₄ alkanes are for example chloroform, dichloromethane or 1-chlorobutane.

Preferred amides are for example dimethylformamide or dimethylacetamide.

### (c) Coating methods

Suitable coating methods are, for example, immersion, pouring, brush-coating, blade-application and spin-coating, as well as vapor-deposition methods carried out under a high vacuum. When pouring methods are used, solutions in organic solvents are generally used. When solvents are employed, care should be taken that the supports used are insensitive to those solvents. The optical layer is preferably applied by spin-coating with a dye solution.

### (d) Optical layer (also called dye layer or recording layer)

The optical layer is preferably arranged between the transparent substrate and the reflecting layer. The thickness of the recording layer is from 10 to 1000 nm, preferably from 30 to 300 nm, more preferably from 70 to 250 nm, especially about 80 nm, for example from 60 to 120 nm.

The optical layer comprises at least one compound of formula (I), or both the compound of formula (I) and the compound of formula (X), or a composition (C), preferably in an amount sufficient to have a substantial influence on the refractive index, for example at least 30% by weight of the total weight of the optical layer, more preferably at least 60% by weight, most preferably at least 80% by weight.

Further customary components are stabilizers, for example ¹0₂-, triplet- or luminescence quenchers, melting-point reducers, decomposition accelerators or any other additives that have already been described in optical data recording media. Preferably, stabilizers or fluorescence-quenchers are added if desired.

Stabilizers, ¹0₂-, triplet- or luminescence-quenchers are, for example, metal complexes of N- or S-containing enolates, phenolates, bisphenolates, thiolates or bisthiolates, hindered phenols and derivatives thereof such as o-hydroxyphenyl-triazoles or -triazines or other UV absorbers, such as hindered amines (TEMPO or HALS, as well as nitroxides or NOR-HALS), and also as cations diimmonium, Paraquat^{™} or Orthoquat salts, such as ^{®}Kayasorb IRG 022, ^{®}Kayasorb IRG 040, optionally also as radical ions, such as N,N,N',N'-tetrakis(4-dibutylaminophenyl)-p-phenylene amine-ammonium hexafluorophosphate, hexafluoroantimonate or perchlorate. The latter are available from Organica (Wolfen/DE); ^{®}Kayasorb brands are available from Nippon Kayaku Co. Ltd.

In a preferred aspect, the present invention provides for an optical layer suitable for high-density recording material, e.g. of the WORM disc format, in a laser wavelength range of from 350-450nm, preferably around 405 nm.

### Preparation of the optical data recording medium

A method for producing an optical data recording medium comprising an optical layer according to the invention usually comprises the following additional steps
(e) applying a metal layer (also called reflective layer) onto the optical layer,
(f) applying a second polymer based layer to complete the disk (cover layer or protective layer).

### (e) Reflective layer

The application of the metallic reflective layer is preferably effected by sputtering, vapor-deposition in vacuum or by chemical vapor deposition (CVD). The sputtering technique is especially preferred for the application of the metallic reflective layer.

Reflecting materials suitable for the reflective layer include especially metals, which provide good reflection of the laser radiation used for recording and playback, for example the metals of Main Groups III, IV and V and of the Sub-groups of the Periodic Table of the Elements. Al, In, Sn, Pb, Sb, Bi, Cu, Ag, Au, Zn, Cd, Hg, Sc, Y, La, Ti, Zr, Hf, V, Nb, Ta, Cr, Mo, W, Fe, Co, Ni, Ru, Rh, Pd, Os, Ir, Pt, Ce, Pr, Nd, Pm, Sm, Eu, Gd, Tb, Dy, Ho, Er, Tm, Yb and Lu and alloys thereof are especially suitable. Special preference is given to a reflective layer of aluminum, silver, copper, gold or an alloy thereof, on account of their high reflectivity and ease of production.

### (f) Cover layer (also called protective layer)

Materials suitable for the cover layer include plastics, which are applied in a thin layer to the support or the uppermost layer either directly or with the aid of adhesive layers. The material of the cover layer may for example be the same as the material of the substrate. It is advantageous to select mechanically and thermally stable plastics having good surface properties, which may be modified further.

The plastics may be thermosetting plastics and thermoplastic plastics. Preference is given to radiation-cured (e.g. using UV radiation) protective layers, which are particularly simple and economical to produce. A wide variety of radiation-curable materials are known. Examples of radiation-curable monomers and oligomers are acrylates and methacrylates of diols, triols and tetrols, polyimides of aromatic tetracarboxylic acids and aromatic diamines having C₁-C₄alkyl groups in at least two ortho-positions of the amino groups, and oligomers with dialkylmaleinimidyl groups, e.g. dimethyl maleinimidyl groups.

A high-density optical data recording medium according to the invention therefore preferably is a recordable optical disc comprising: a first substrate, which is a transparent substrate with grooves, a optical layer (recording layer), which is formed on the first substrate surface using at least one compound of formula (I), or using both the compound of formula (I) and the compound of formula (X), or using the compositions (C), a reflective layer formed on the optical layer, a second substrate, which is a transparent substrate connected to the reflective layer with an attachment layer.

The optical data recording medium according to the invention is preferably a recordable optical disc of the WORM type. It may be used, for example, as a playable HD-DVD (high density digital versatile disc) or Blu-ray^{®} disc, as storage medium for a computer or as an identification and security card or for the production of diffractive optical elements, for example holograms.

The optical data recording media according to the invention may also have additional layers, for example interference layers. It is also possible to construct optical data recording media having a plurality of (for example two) recording layers. The structure and the use of such materials are known to the person skilled in the art. Preferred, if present, are interference layers that are arranged between the recording layer and the reflecting layer and/or between the recording layer and the substrate and consist of a dielectric material of TiO₂, Si₃N₄, ZnS or silicone resins.

These optical data recording media according to the invention can be produced by processes known in the art.

### Readout methods

The structure of the optical data recording medium according to the invention is governed primarily by the readout method; known function principles include the measurement of the change in the transmission or, preferably, in the reflection, but it is also known to measure, for example, the fluorescence instead of the transmission or reflection.

When the optical data recording medium is structured for a change in reflection, the following structures can be used: transparent support / recording layer (optionally multilayered) / reflective layer and, if expedient, protective layer (not necessarily transparent); or support (not necessarily transparent) / reflective layer / recording layer and, if expedient, transparent protective layer. In the first case, the light is incident from the support side, whereas in the latter case the radiation is incident from the recording layer side or, where applicable, from the protective layer side. In both cases the light detector is located on the same side as the light source. The first-mentioned structure of the recording material to be used according to the invention is generally preferred.

When the optical data recording medium is structured for a change in light transmission, the following different structure comes into consideration: transparent support/ recording layer (optionally multilayered) and, if expedient, transparent protective layer. The light for recording and for readout can be incident either from the support side or from the recording layer side or, where applicable, from the protective layer side, the light detector in this case always being located on the opposite side.

Suitable lasers are those having a wavelength of 350-500 nm, for example commercially available lasers having a wavelength of 405 to 414 nm, especially semi-conductor lasers. The recording is done, for example, point for point, by modulating the laser in accordance with the mark lengths and focusing its radiation onto the recording layer. It is known from the specialist literature that other methods are currently being developed which may also be suitable for use.

The process according to the invention allows the storage of information with great reliability and stability, distinguished by very good mechanical and thermal stability and by high light stability and by sharp boundary zones of the pits. Special advantages include the high contrast, the low jitter and the surprisingly high signal/noise ratio, so that excellent readout is achieved.

The readout of information is carried out according to methods known in the art by registering the change in absorption or reflection using laser radiation.

The invention accordingly relates also to a method for the optical data recording, storage and playback of information, wherein an optical data recording medium according to the invention is used. The recording and the playback advantageously take place in a wavelength range of from 350 to 500 nm.

The compounds of formula (I), and the combination of the compounds of formula (I) together with the compounds of formula (X), and the compositions (C), provide for particularly preferable properties when used in optical layers for optical data recording media according to the invention. They possess the required optical characteristics, demonstrated when used in the form of a solid film:
- an advantageously homogeneous, amorphous and low-scattering optical layer,
- a high refractive index at the longer wavelength flank of the absorption band, which preferably achieves n values of the refractive index of from 1.0 to 3.0 in the range of from 350 to 500 nm,
- a high sensitivity under laser radiation of high power density and good playback characteristics in the desired spectral range,
- an uniform script width and a high contrast,
- an absorption maximum (λ max) in the preferred range between 320 nm and 410 nm as being preferred for blue laser applications, more precisely from 340 to 390 nm,
- a decomposition point (DP) in the preferred temperature range between 200°C and 400°C, more precisely 230°C to 350°C.

Recording performance of a compound is related to specific parameters measured on disc like:
- a low jitter
- a low laser recording power (Pw: power, or OPC: optimum power control): the lower the better
- good readout stability at different laser reading powers.
- an appropriate carrier to noise ratio (CNR)

The absorption edge is surprisingly steep even in the solid phase.

The compounds of formula (I), the combination of the compounds of formula (I) together with the compounds of formula (X), and the compositions (C), also show a narrow decomposition temperature of 200-350°C, fitting with the thermal requirements. Additionally, these compounds show a high solubility in organic solvents, which is ideal for the spin-coating process to manufacture optical layers.

Further surprisingly the compositions (C) or the use of both the compounds of formula (I) together with the compounds of formula (X) in the optical layer, provide for unexpected better results, when compared with the performance of the individual compounds.

The use of the compositions (C) or of a combination of a compound of formula (I) together with a compound of formula (X) in an optical layer for optical data recording allows unexpectedly the data recoding at higher speeds than the conventional 1X speed in HD-DVD and Blu-ray-discs.

As a result of the use of the dyes of the invention, the recording media of the invention advantageously have homogeneous, amorphous and low scattering recording layers. Further advantages is the light stability in day light and under laser radiation of 0.4 mW, combined with a high sensitivity under laser radiation of moderate, this means as low as possible, power density (OPC preferably 6.0 mW for 1X speed and preferably 7 mW for 2X speed), the good thermal and storage stability and also, in particular the high power margin. Especially in case of recording at higher speed, the OPC required should be as low as possible.

### Examples

### UV-vis

For UV-vis spectra, λ max and ε values of a compound are determined by using an UV-vis spectrophotometer, the compositions were dissolved in CH₂Cl₂, DMSO or in tfp. The values are obtained by balancing the measurements performed on compound solutions at three different concentrations.

### Thermal Decomposition: Decomposition point (DP) and heat release (HR)

For the determination of DP and HR, the compound or the composition is incorporated into a sealed aluminum pan. Analysis conditions are as following: Temperature range from 25 to 400°C, heating rate 10°C/min, nitrogen flow of 50 ml/min. Values are determined by single measurement.

### Melting point (MP)

For the determination of melting point, the compound or the composition is incorporated in a glass capillary. The capillary was heated using the following profile: temperature range from 20 to 350 °C, heating rate 2 °C/min.

### Carrier to noise ratio (CNR)

CNR is a measure of signal strength relative to background noise. The ratio is measured in decibels (dB). CNR is measured in a state in which information has been recorded in the adjacent tracks. The higher the CNR the better is the signal resolution.

### Reflectivity (R)

A definition and the measuring techniques for the light reflectivity (R) is described in a book available from DVD Format Logo Licensing Co., Ltd. for example, Annex D of Version 0.9, PART 1 Physical Specifications, DVD Specifications for High Density Read-Only Disk. The higher the R the better.

### Refractive index n and k-value k (n/k)

A definition and the measuring techniques for the refractive index n and k-value k is described in a book available from DVD Format Logo Licensing Co., Ltd. for example, Annex D of Version 0.9, PART 1 Physical Specifications, DVD Specifications for High Density Read-Only Disk.

### Jitter

A definition and the measuring techniques for the jitter is described in a book available from DVD Format Logo Licensing Co., Ltd. for example, Annex D of Version 0.9, PART 1 Physical Specifications, DVD Specifications for High Density Read-Only Disk. The lower the jitter the better.

### Example 102

To a suspension of a 5.0 g of 2-Hydroxy-5-nitrobenzaldehyde in 50 mL of ethanol were added 6.1 g of 4-Amino-antipyrine (called "the amine" in the following text) at room temperature. Immediately after addition a thick, yellow suspension was formed. The suspension was refluxed for 1 h.

After cooling to room temperature, the suspension was filtered, washed with 20 mL of ethanol and dried in vacuum at 80 °C for 4 h. 10.1 g of a compound of formula (102) are obtained.

Analytical data for compound of formula (102):
λ max = 365 nm, ε = 63 L/g*cm
MP: 198 °C

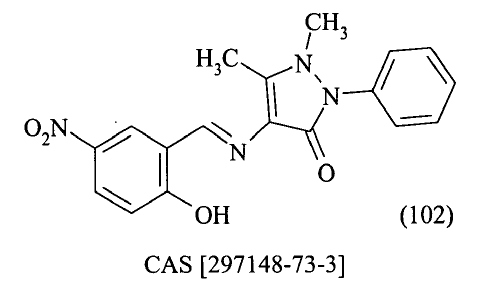

### Examples (103) to (112)

The ligand synthesis was repeated according to example (102) with 2-hydroxy-5-nitrobenzaldehyde and with the respective amine to yield compounds of formulae (103) to (112). The combinations and details are given in tables (A1) and (A2). In the case of examples (111) and (112), to the reaction mixture were added 0.5 mL of acetic acid before heating to reflux.

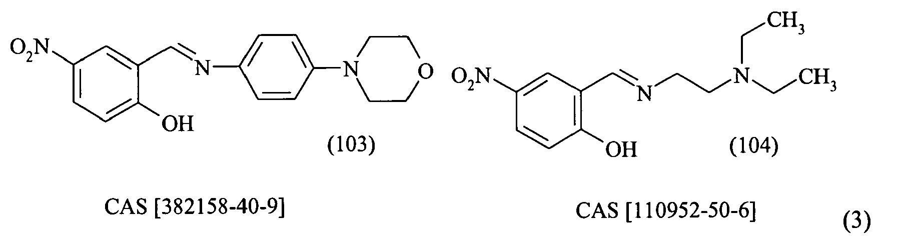

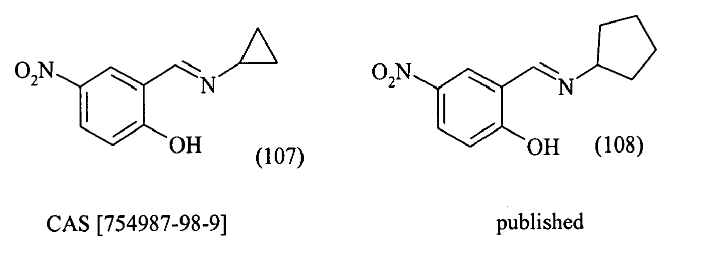

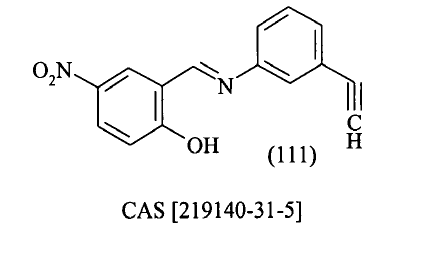

| **Table (A1)** | | | | | |
|---|---|---|---|---|---|
| **Ex.** | **2-Hydroxy-5-nitro-benzaldehyde** | **the amine** | | **Compound of formula** | |
| | **[g]** | **[g]** | | **[g]** | |
| **102** | 5.0 | 6,1 | 4-Amino-antipyrine | 10,1 | (102) |
| **103** | 5.0 | 5,5 | 4-(N-morpholino) aniline | 9,4 | (103) |
| **104** | 6,7 | 4,9 | 2-Diethylamino-ethylamine | 8,9 | (104) |
| **105** | 6,7 | 6.0 | 3-Morpholino-propylamine | 9.0 | (105) |
| **106** | 3,4 | 2,8 | 2-Morpholino-ethylamine | 5,3 | (106) |
| **107** | 3,4 | 1,2 | Cyclopropylamine | 3,5 | (107) |
| **108** | 3,4 | 1,8 | Cyclopentylamine | 2,9 | (108) |
| **109** | 1.0 | 1,1 | Methyl-2-aminothiophene-3-carboxylate | 1,6 | (109) |
| **110** | 1,4 | 1.0 | 2-Ethynyl-aniline | 2.0 | (110) |
| **111** | 1,4 | 1.0 | 3-Ethynyl-aniline | 2.0 | (111) |
| **112** | 1,4 | 1.0 | 4-Ethynyl-aniline | 2.0 | (112) |

| **Table (A2)** | | | | |
|---|---|---|---|---|
| **Ex.** | **λ ₘₐₓ [nm]** | **ε** (λ ₘₐₓ) **[L/g/cm]** | **MP/DP [°C]** | **Compound of formula** |
| **102** | 365 | 63 | 198 (MP) | (102) |
| **103** | 382 | 73 | 227 (MP) | (103) |
| **104** | 414 | 57 | 115 (MP) | (104) |
| **105** | 409 | 54 | 130 (MP) | (105) |
| **106** | 420 | 62 | 153 (MP) | (106) |
| **107** | 317 | 51 | 100 (MP) | (107) |
| **108** | 406 | 54 | 110 (MP) | (108) |
| **109** | 383 | 48 | 240 (DP) | (109) |
| **110** | 350 | 51 | 174 (MP) | (110) |
| **111** | 447 | 33 | 196 (MP) | (111) |
| **112** | 449 | 33 | 185 (DP) | (112) |

### Example 201

0.35 g of a compound of formula (102), 0.28 g of a compound of formula (101) and 0.1 g of copper-(II)-acetate monohydrate are suspended in 10 ml of ethanol. After stirring at reflux temperature for 6 h, the suspension is cooled to room temperature and filtered. The remaining yellow residue is washed with 10 mL of ethanol and dried in vacuum at 80 °C for 4 h. 0.66 g of a compound of formula (1) is obtained. Analytical data for compound of formula (1):
λ ₘₐₓ = 346 nm, ε = 57 L/g*cm
MP: no melting
DP: 281 °C.

### Example 202

0.7 g of a compound of formula (102) and 0.2 g of nickel-(II)-acetate tetrahydrate are suspended in 80 ml of ethanol. After stirring at reflux temperature for 15 min, the greenish suspension is cooled to room temperature and filtered. The remaining yellow residue is washed with 10 mL of ethanol and dried in vacuum at 80 °C for 4 h. 0.7 g of a compound of formula (2) is obtained.

Analytical data for compound of formula (2):
λ ₘₐₓ = 370 nm, ε = 56 L/g*cm
MP: 229 °C
DP: 256 °C.

### Examples 203 to 235

The complexing reaction according to example 202 was repeated with the respective metal salts and with the respective compounds of formulae (102) to (112), prepared according to examples (102) to (112), to yield compounds of formulae (3) to (35). Refluxing time was 6 h. To the reactions of examples 207, 208, 218, 219 and 221 was added pyridine (Py in table B1) before refluxing, to the reactions of examples 231 and 234 was added acetonitrile (ACN in table B1) before refluxing. The reaction of example (35) was carried out in 10 ml refluxing acetonitrile. The combinations and the details are given in tables (B1) and (B2). Work-up and isolation of product was performed as described in example 202.

In the case of examples 209, 210, 220, 222 and 223 the reaction was carried out in pyridine instead of ethanol as solvent. After complete conversion, the resulting reaction mixtures were poured onto 50 mL of water. The residue was washed and dried as described in example 202, yielding the complexes (9), (10), (11), (12) and (13).

| **Table (B1)** | | | | | | | | | |
|---|---|---|---|---|---|---|---|---|---|
| **Ex.** | **M** | **Used Metal salt** | | **Ligand(s)** | | **Ethanol** | **Addition Py or ACN** | **Metal complex** | |
| | | | **[g]** | **Compound of formula** | **[g]** | **[mL]** | **[mL]** | **Compound of formula** | **[g]** |
| **201** | Cu | Cu(OAc)2 | 0.1 | (102) (101) | 0.35 0.28 | 10 | - | (1) | 0.66 |
| **202** | Ni | Ni(OAc)2 | 0.2 | (102) | 0.7 | 15 | - | (2) | 0,7 |
| **203** | Cu | Cu(OAc)2 | 0.8 | (103) | 3 | 80 | - | (3) | 3.3 |
| **204** | Ni | Ni(OAc)2 | 1.2 | (103) | 3 | 80 | - | (4) | 3.2 |
| **205** | Zn | Zn(OAc)2 | 1 | (103) | 3 | 80 | - | (5) | 3.3 |
| **206** | Co | Co(OAc)2 | 0.2 | (102) | 0.7 | 25 | - | (6) | 0.7 |
| **207** | Cu | Cu(OAc)2 | 0.2 | (102) | 0.7 | 15 | 0,5 (Py) | (7) | 0.6 |
| **208** | Fe | Fe(OAc)2 | 0.1 | (102) | 0.5 | 15 | 15 (Py) | (8) | 0.5 |
| **209** | Mn | Mn(OAc)2 | 0.1 | (102) | 0.5 | - | 15 (Py) | (9) | 0.3 |
| **210** | V(O) | V(O)acac2 | 0.2 | (102) | 0.5 | - | 15 (Py) | (10) | 0.3 |
| **211** | Ni | Ni(OAc)2 | 0.2 | (104) | 0.5 | 10 | - | (11) | 0.6 |
| **212** | Co | Co(OAc)2 | 0.2 | (104) | 0.5 | 10 | - | (12) | 0.5 |
| **213** | Cu | Cu(OAc)2 | 0.2 | (104) | 0.5 | 10 | - | (13) | 0.4 |
| **214** | Ni | Ni(OAc)2 | 0.2 | (105) | 0.6 | 10 | - | (14) | 0.6 |
| **215** | Co | Co(OAc)2 | 0.2 | (105) | 0.6 | 10 | - | (15) | 0.6 |
| **216** | Ni | Ni(OAc)2 | 0.2 | (106) | 0.6 | 10 | - | (16) | 0.5 |
| **217** | Co | Co(OAc)2 | 0.2 | (106) | 0.6 | 10 | - | (17) | 0.5 |
| **218** | Ni | Ni(OAc)2 | 0.4 | (107) | 0.6 | 15 | 15 (Py) | (18) | 0.7 |
| **219** | Co | Co(OAc)2 | 0.4 | (107) | 0.6 | 15 | 15 (Py) | (19) | 0.7 |
| **220** | Cu | Cu(OAc)2 | 0.3 | (107) | 0.6 | - | 15 (Py) | (20) | 0.6 |
| **221** | Ni | Ni(OAc)2 | 0.4 | (108) | 0.7 | 15 | 15 (Py) | (21) | 0.7 |
| **222** | Co | Co(OAc)2 | 0.4 | (108) | 0.7 | - | 15 (Py) | (22) | 0.6 |
| **223** | Cu | Cu(OAc)2 | 0.3 | (108) | 0.7 | - | 15 (Py) | (23) | 0.7 |
| **224** | Ni | Ni(OAc)2 | 0.2 | (109) | 0.5 | 10 | - | (24) | 0.4 |
| **225** | Cu | Cu(OAc)2 | 0.2 | (109) | 0.5 | 10 | - | (25) | 0.4 |
| **226** | Ni | Ni(OAc)2 | 0.2 | (110) | 0.5 | 10 | - | (26) | 0.5 |
| **227** | Co | Co(OAc)2 | 0.2 | (110) | 0.5 | 10 | - | (27) | 0.4 |
| **228** | Cu | Cu(OAc)2 | 0.2 | (110) | 0.5 | 10 | - | (28) | 0.6 |
| **229** | Ni | Ni(OAc)2 | 0.2 | (111) | 0.4 | 10 | - | (29) | 0.1 |
| **230** | Co | Co(OAc)2 | 0.2 | (111) | 0.4 | 10 | - | (30) | 0.4 |
| **231** | Cu | Cu(OAc)2 | 0.2 | (111) | 0.4 | 10 | 10 (ACN) | (31) | 0.4 |
| **232** | Ni | Ni(OAc)2 | 0.2 | (112) | 0.4 | 10 | - | (32) | 0.2 |
| **233** | Co | Co(OAc)2 | 0.2 | (112) | 0.4 | 10 | - | (33) | 0.2 |
| **234** | Cu | Cu(OAc)2 | 0.2 | (112) | 0.4 | 10 | 10 (ACN) | (34) | 0.4 |
| **235** | Cu | Cu(OAc)2 | 0,2 | (110) (107) | 0,2 0,2 | - | - | (35) | 0,4 |

| **Table (B2)** | | | | |
|---|---|---|---|---|
| **Ex.** | **λ ₘₐₓ [nm]** | **ε (at λₘₐₓ) [l/g/cm]** | **MP / DP [°C]** | **Compound of formula** |
| **201** | 346 | 57 | 281 (DP) | (1) |
| **202** | 370 | 56 | 229 (MP) | (2) |
| **203** | 382 | 59 | 285 (DP) | (3) |
| **204** | 391 | 64 | MP>300 °C | (4) |
| **205** | 387 | 63 | 300 (DP) | (5) |
| **206** | 363 | 62 | 325 (DP) | (6) |
| **207** | 383 | 45 | 275 (DP) | (7) |
| **208** | 364 | 46 | 230 (DP) | (8) |
| **209** | 380 | 48 | 320 (DP) | (9) |
| **210** | 366 | 62 | 187 (MP) | (10) |
| **211** | 411 | 64 | 95 (MP) | (11) |
| **212** | 392 | 25 | 293 (DP) | (12) |
| **213** | 384 | 57 | 185 (MP) | (13) |
| **214** | 410 | 75 | 260 (DP) | (14) |
| **215** | 402 | 57 | 220 (MP) | (15) |
| **216** | 403 | 63 | 263 (DP) | (16) |
| **217** | 398 | 54 | 240 (DP) | (17) |
| **218** | 413 | 80 | 101 (MP) | (18) |
| **219** | 408 | 59 | 200 (DP) | (19) |
| **220** | 382 | 60 | 290 (DP) | (20) |
| **221** | 413 | 72 | 190 (DP) | (21) |
| **222** | 378 | 59 | 235 (MP) | (22) |
| **223** | 384 | 74 | 245 (MP) | (23) |
| **224** | 448 | 55 | MP>300 °C | (24) |
| **225** | 413 | 34 | 225 (DP) | (25) |
| **226** | 349 | 50 | MP>300 °C | (26) |
| **227** | 384 | 53 | 260 (DP) | (27) |
| **228** | 378 | 68 | 210 (DP) | (28) |
| **229** | 397 | 68 | 250 (DP) | (29) |
| **230** | 389 | 64 | 220 (MP) | (30) |
| **231** | 385 | 73 | MP>300 °C | (31) |
| **232** | 405 | 36 | MP>300 °C | (32) |
| **233** | 425 | 26 | MP>300 °C | (33) |
| **234** | 373 | 53 | MP>300 °C | (34) |
| **235** | 377 | 66 | 220 (DP) | (35) |

### Preparation of the compositions (C)

In the following, "%" means "% by weight", and the amount of a component in a composition (C) is given in % by weight based on the weight of the total composition, if not otherwise stated.

### Example 30: Process of dry blending of powders of the components (DB)

A composition (c30), consisting of 10 % by weight of compound of formula (1) and 90 % by weight of compound of formula (100), is prepared by blending the corresponding powders of the components.

### Process of wet mixing of the components (WM)

In case of wet mixing, the solvent has to be carefully selected in order to prevent a complete solubilization of any component, because this wouldn't result in the desired composition.

### Example 31: Wet mixing (WM)

A composition (c31), consisting of 10 % by weight of compound of formula (1) and 90 % by weight of compound of formula (100), is prepared by suspending the corresponding powders of the components in hexane. The suspension is stirred for 10 min at room temperature. The resulting precipitate is filtered off and the press cake is dried.

### Process of Dissolving of the components (DISS)

The solvent has to be carefully selected in order to obtain a complete solubilization of the mixture components.

### Example 32: Dissolving (DISS)

A composition (c32), consisting of 5 % by weight of compound of formula (4) and 95 % by weight of compound of formula (100), is prepared by completely dissolving the corresponding powders of the components in 2,2,3,3-tetra-fluoro-propanol. The solution is stirred for 1 hour at room temperature and evaporated in vacuum using a rotating evaporator. The resulting precipitate is further dried in an oven at 60°C for 3 hours.

### Examples 33 to 35

Details about the amounts and the preparation of the examples 30 to 35 are given in table C.

| **Table C** | | | | | | |
|---|---|---|---|---|---|---|
| **Example** | **Composition (C)** | **Process** | **Component (B)** | | **Component (A)** | |
| | | | **formula of the compound of formula (X)** | **%** | **formula of the compound of formula (I)** | **%** |
| **30** | (c30) | DB | (100) | 90 | (1) | 10 |
| **31** | (c31) | WM | (100) | 90 | (1) | 10 |
| **32** | (c32) | DISS | (100) | 95 | (4) | 5 |
| **33** | (c33) | DB | (100) | 80 | (1) | 20 |
| **34** | (c34) | DB | (100) | 70 | (1) | 30 |
| **35** | (c35) | DISS | (100) | 55 | (6) | 45 |

### Application Example 1

The optical and thermal properties of compounds of formula (I) and of the compositions (C) were studied. The compounds of formula (I) and the compositions (C) show high absorptions at the desired wavelengths. In addition, the shapes of the absorption spectra, that still remain critical to the disc reflectivity and formation of clean mark edges, are composed of one major band, comprised in a range of from 340 to 500 nm.

More precisely, n values of the refractive index were evaluated between 1.0 and 1.9. Light stabilities were found comparable to commercial dyes which are already stabilized with quenchers for the use in optical data recording.

A sharp threshold of thermal decomposition within the required temperature range characterizes the compounds of formula (I) and the compositions (C), which is desirable for the application in optical layers for optical data recording.

### Application example 2 to 8 Optical layer and optical data recording medium

For the optical layer, a 25 nm thick reflection layer of silver was applied to a 1.1 mm thick spiral like pre-grooved polycarbonate disc (made by injection molding, diameter 120 mm, groove depth 28 nm, track width 140 nm, track spacing 320 nm) using sputtering technology. Using the spin-coating process a 2% by weight solution, based on the weight of the solution, of the compounds of formula (I) or of the compositions (C) in 2,2,3,3-tetrafluoropropanol was applied onto the reflection layer (recording layer), details are given in table (D). After drying for 20 min at 75 °C, the resulting thickness of recording layer was 80 nm. On the recording layer was applied a 10 nm thick layer of SiON by reactive sputtering as a barrier layer. For protecting the reflective layer, recording layer and barrier-layer, a cover layer/film consisting of polycarbonate (80 µm thickness) is laminated on the surface of the barrier layer using binder. The total thickness of cover layer and binder is set to be 100 µm. The barrier layer, binding layer and cover layer are connected by pressure welding.

The testing conditions are the following ones:
- Numerical aperture (NA) of the optical head: 0.85
- Wavelength of a laser light for recording and reproduction: 405 nm
- Track pitch: 0.32 µm

Results of the evaluation tests are summarized in table (D), Pw and CNR were determined for the 8T signal.

### Comparative example 1

Application example 2 was carried out using a compound of formula (100) instead of the compound of formula (1), as detailed in table (D). ("Comp.Ex." means comparative example).

| **Table (D)** | | | | | | |
|---|---|---|---|---|---|---|
| **Application example** | **Sample of example** | **Compound of formula** | **Pw** | **CNR** | **n/k** | **Jitter** |
| | | | **[mW]** | **[dB]** | | **[%]** |
| **2** | 201 | (1) | 6 | 60 | - | - |
| **3** | 207 | (7) | - | - | 1.89/0.42 | - |
| | | | | | | |

| **Application example** | **Sample of example** | **Composition (C)** | **Pw** | **CNR** | **n/k** | **Jitter** |
|---|---|---|---|---|---|---|
| | | | **[mW]** | **[dB]** | | **[%]** |
| **4** | 32 | (c32) | 6 | 20 | 1.88/0.06 | - |
| **5** | 35 | (c35) | - | - | 1.68/0.31 | - |
| **6** | 30 | (c30) | 7.6 | - | - | 7.6 |
| **7** | 33 | (c33) | 6.2 | - | - | 6.4 |
| **8** | 34 | (c34) | 5.5 | - | - | 6.1 |
| | | | | | | |

| **Comp. Ex.** | | **Compound of formula** | **Pw** | **CNR** | **n/k** | **Jitter** |
|---|---|---|---|---|---|---|
| | | | **[mW]** | **[dB]** | | **[%]** |
| 1 | | (100) | 6 | 27 | 1.87/0.05 | 11 |

## Claims

1. A compound of formula (I), 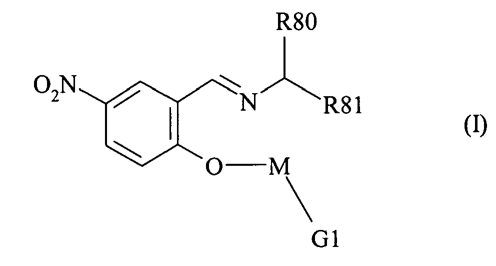 wherein
is a divalent metal atom or oxidized divalent metal atom;
G1 is a group of formula (II) or of formula (III); 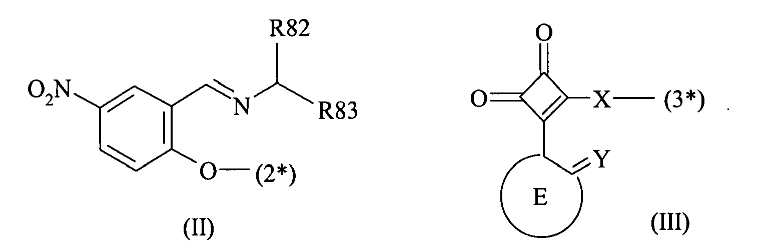
R⁸⁰, R⁸¹, R⁸² and R⁸³ are independently from each other C₁₋₈ alkyl or C₃₋₈ cycloalkyl; or
R⁸⁰ and R⁸¹ together with the C atom to which they are connected according to formula (I), or, independently from R⁸⁰ and R⁸¹, R⁸² and R⁸³ together with the C atom to which they are connected according to formula (II), form a five or six membered aromatic or heteroaromatic cycle, the heteroaromatic cycle containing 1, 2 or 3 heteroatoms independently from each other selected from the group consisting of O, N and S;
the aromatic or heteroaromatic cycle or the C₃₋₈ cycloalkyl can be annealed with a five or six membered aromatic or heteroaromatic cycle, this second heteroaromatic cycle containing 1, 2 or 3 heteroatoms independently from each other selected from the group consisting of O, N and S;
the C₁₋₈ alkyl, the C₃₋₈ cycloalkyl, the aromatic or the heteroaromatic cycles can be substituted by 1 to 8 substituents, the substituents being independently from each other selected from the group consisting of hydrogen, CN, CO₂H, CO₂R⁹, halogen, NO₂, OH, SH;
C₁₋₁₂ alkyl, the C₁₋₁₂-alkyl being unsubstituted or substituted by C₁₋₈ alkyl, OH, NO₂, CN, halogen, C₁-C₈ alkoxy, NR⁹R¹⁰ or C₆₋₁₂ aryl, this C₆₋₁₂ aryl residue being unsubstitued or substituted by C₁₋₈ alkyl, OH, NO₂, CN, halogen, C₆₋₁₂ aryl, C₁-C₈ alkoxy or NR⁹R¹⁰;
C₁₋₈ alkynyl, the C₁₋₈ alkynyl being unsubstituted or substituted by C₁₋₈ alkyl, OH, C₆₋₁₂ aryl or NR⁹R¹⁰;
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy, NR⁹R¹⁰ or NR¹¹R¹²;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy or NR⁹R¹⁰;
OC₁₋₈ alkyl, the OC₁₋₈ alkyl being unsubstituted or substituted by C₁₋₈ alkyl, OH, C₆₋₁₂ aryl or NR¹¹R¹²;
NR¹¹R¹²; and
SC₁₋₈ alkyl, the SC₁₋₈ alkyl being unsubstituted or substituted by C₁₋₈ alkyl, OH, C₆₋₁₂ aryl or NR⁹R¹⁰;
E together with the two C atoms, to which the Y is double bonded and the squaric acid moiety is single bonded in formula (III), is a five or six membered aromatic or heteroaromatic cycle, the aromatic or heteroaromatic cycle can be annealed with a five or six membered aromatic or heteroaromatic cycle,
the heteroaromatic cycles contain independently from each other 1, 2 or 3 heteroatoms selected from the group consisting of O, N and S,
the aromatic or heteroaromatic cycles can independently from each other be further substituted by 1 to 6 substituents, the substituents being independently from each other selected from the group consisting of hydrogen, CN, halogen, NO₂, OH, SH,
C₁₋₈ alkyl, the C₁₋₈ alkyl being unsubstituted or substituted by C₁₋₈ alkyl, halogen, OH, C₆₋₁₂ aryl or NR³⁰R³¹;
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy or NR³⁰R³¹;
OC₁₋₈ alkyl, the OC₁₋₈ alkyl being unsubstituted or substituted by C₁₋₈ alkyl, OH, C₆₋₁₂ aryl or NR³²R³³,
NR³²R³³; and
SC₁₋₈ alkyl, the SC₁₋₈ alkyl being unsubstituted or substituted by C₁₋₈ alkyl, OH, C₆₋₁₂ aryl or NR³⁰R³¹;
R⁹, R¹⁰, R¹¹, R¹², R³⁰, R³¹, R³² and R³³ are independently from each other selected from the group consisting of hydrogen, C₁₋₈ alkyl and C₆₋₁₂ aryl; or
R¹¹ together with R¹², or, independently from R¹¹ and R¹², R³² together with R³³ form together with the N, to which they are connected, a five- or six-membered ring, which may contain further 1, 2 or 3 heteroatoms independently from each other selected from the group consisting of O, N and S;
X is selected from the group consisting of O, S and imino-nitrogen N-R¹;
Y is selected from the group consisting of O, S and imino-nitrogen N-R²;
R¹ and R² are independently from each other selected from the group consisting of hydrogen, C₁₋₁₂ alkyl, benzyl and C₆₋₁₂ aryl; the C₁₋₁₂ alkyl being unsubstituted or substituted by OH, C₆₋₁₂ aryl, halogen or NR³⁰R³¹;
(2*) in formula (II) denotes the bond of the O atom of the group G1 to the divalent metal atom in formula (I);
(3*) in formula (III) denotes the bond of the X residue of the group G1 to the divalent metal atom in formula (I).

2. A compound of formula (I) according to claim 1, wherein
M represents a divalent metal atom or oxidized divalent metal atom selected from the group consisting of Ca, Sr, Ba, Al, Ga, In, Sc, Y, Ti, Zr, V(O), Nb, Ta, Cr, Mo, W, Mn, Fe, Ru, Os, Co, Rh, Ir, Ni, Pd, Pt, Cu, Ag, Au, Zn, Cd, Hg, La, Ce, Pr, Nd, Pm, Sm, Eu, Gd, Tb, Dy, Ho, Er, Tm, Yb and Lu;
R⁸⁰ and R⁸¹ together with the C atom to which they are connected according to formula (I), and, independently from R⁸⁰ and R⁸¹, R⁸² and R⁸³ together with the C atom to which they are connected according to formula (II), represent a residue selected from the group of residues consisting of formulae (f), (g), (h), (i), (j), (k), (1), (m), (n) and (o) and their tautomeric forms, 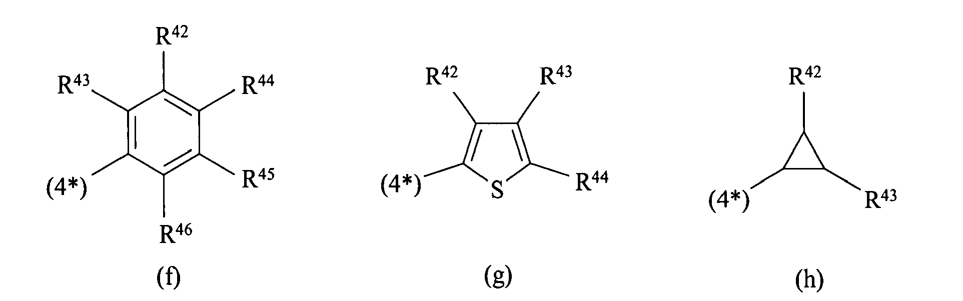 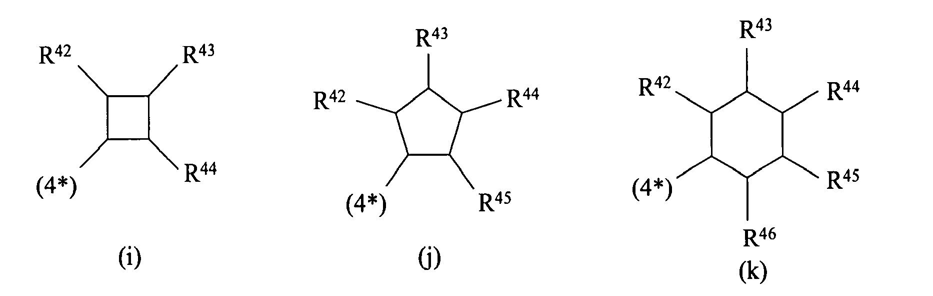 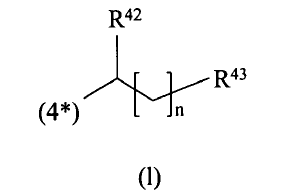 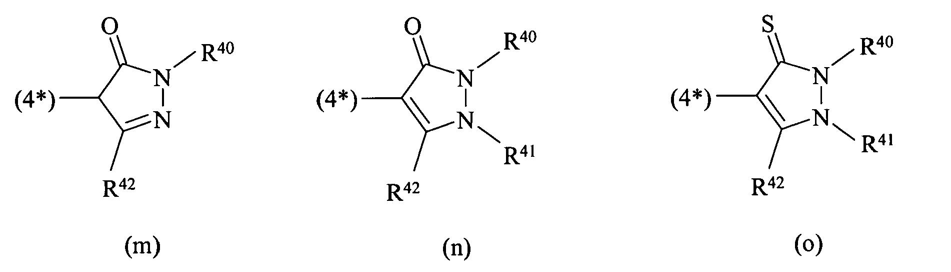 wherein
(4*) denotes the bond between the C atom, to which R⁸⁰ and R⁸¹ in formula (I) or R⁸² and R⁸³ in formula (II) are connected, and the N atom in formula (I) or (II),
n represents a number from 0 to 5;
R⁴⁰and R⁴¹ independently from each other are selected from the group consisting of hydrogen,
C₁₋₁₂ alkyl, the C₁₋₁₂-alkyl being unsubstituted or substituted by C₁₋₈ alkyl, OH, NO₂, CN, halogen, C₁-C₈ alkoxy, NR⁹R¹⁰ or C₆₋₁₂ aryl, this C₆₋₁₂ aryl residue being unsubstituted or substituted by C₁₋₈ alkyl, OH, NO₂, CN, halogen, C₆₋₁₂ aryl, C₁-C₈ alkoxy or NR⁹R¹⁰;
C₆₋₈-aryl-C₁₋₈-alkyl, the C₆₋₈-aryl-C₁₋₈-alkyl being unsubstituted or substituted by C₁₋₆ alkyl, OH, NO₂, CN, halogen, C₆₋₈ aryl, C₁-C₆ alkoxy or NR⁹R¹⁰; and
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR⁹R¹⁰;
R⁴² to R⁴⁶ independently from each other are selected from the group consisting of hydrogen, CN, CO₂H, CO₂R⁹, halogen, NO₂, OH, SH;
OC₁₋₈ alkyl, the OC₁₋₈ alkyl being unsubstituted or substituted by C₁₋₈ alkyl, OH, C₆₋₁₂ aryl or NR¹¹R¹²;
NR¹¹R¹²;
C₁₋₈ alkyl, the C₁₋₈ alkyl being unsubstituted or substituted by C₁₋₈ alkyl, halogen, OH, C₆₋₁₂ aryl or NR⁹R¹⁰;
C₁₋₈ alkynyl, the C₁₋₈-alkynyl being unsubstituted or substituted by C₁₋₈ alkyl, OH, C₆₋₁₂ aryl or NR¹¹R¹²;
SC₁₋₈ alkyl, the SC₁₋₈ alkyl being unsubstituted or substituted by C₁₋₈ alkyl, OH, C₆₋₁₂ aryl or NR⁹R¹⁰; and
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy, NR⁹R¹⁰ or NR¹¹R¹²;
E together with the two C atoms, to which the Y is double bonded and the squaric acid moiety is single bonded in formula (III), and together with the Y in formula (III), is selected from the group consisting of residues of formulae (g2), (h2), (i2), (j2), (k2), (12), (m2), (n2), (o2), (p2), (q2), (r2) and (s2) and their tautomeric forms, 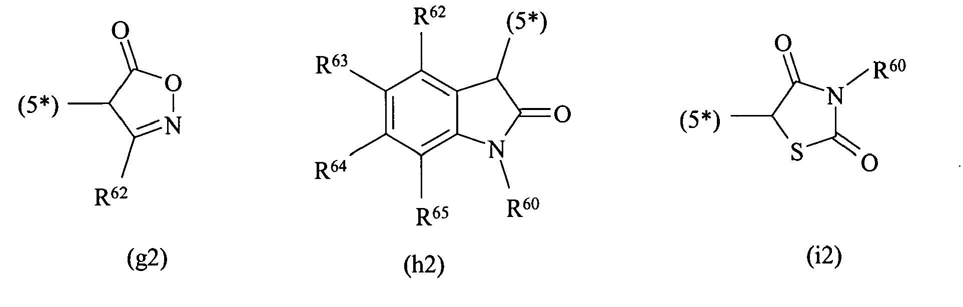 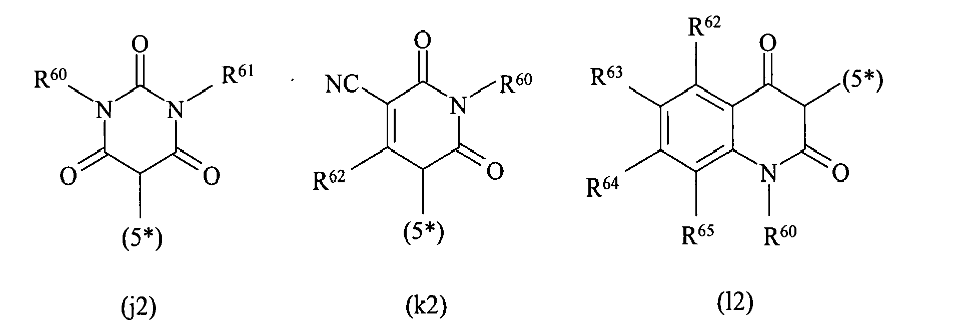 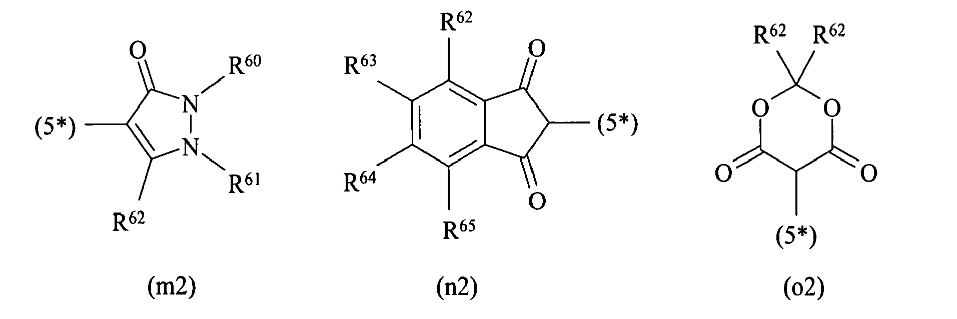 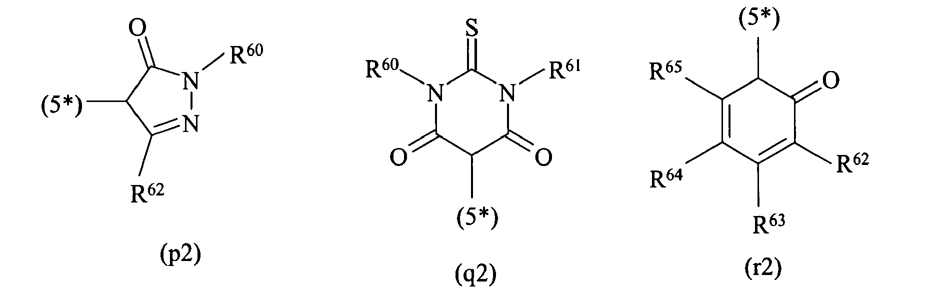 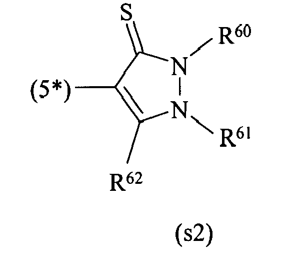 wherein
(5*) denotes the bond between E and the squaric acid moiety in formula (III);
R⁶⁰ and R⁶¹ independently from each other are selected from the group consisting of hydrogen,
C₁₋₈ alkyl, the C₁₋₈-alkyl being unsubstituted or substituted by C₁₋₈ alkyl, halogen, OH, C₆₋₁₂ aryl or NR³⁰R³¹;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy or NR³⁰R³¹; and
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
R⁶² to R⁶⁵ independently from each other are selected from the group consisting of hydrogen, CN, halogen, NO₂, OH,
OC₁₋₈ alkyl, the OC₁₋₈ alkyl being unsubstituted or substituted by C₁₋₈ alkyl, OH, C₆₋₁₂ aryl or NR³²R³³;
NR³²R³³;
C₁₋₈ alkyl, the C₁₋₈ alkyl being unsubstituted or substituted by C₁₋₈ alkyl, halogen, OH, C₆₋₁₂ aryl or NR³⁰R³¹;
SC₁₋₈ alkyl, the SC₁₋₈ alkyl being unsubstituted or substituted by C₁₋₈ alkyl, OH, C₆₋₁₂ aryl or NR³⁰R³¹; and
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
R⁹, R¹⁰, R¹¹, R¹², R³⁰, R³¹, R³² and R³³ are independently from each other selected from the group consisting of hydrogen, C₁₋₈ alkyl and C₆₋₁₂ aryl; or
R¹¹ together with R¹², or, independently from R¹¹ and R¹², R³² together with R³³ form together with the N, to which they are connected, a five- or six-membered ring, which may contain further 1, 2 or 3 heteroatoms independently from each other selected from the group consisting of O, N and S;
X represents O or S.

3. A compound of formula (I) according to claim 1 or 2, wherein
M represents a divalent metal atom or oxidized divalent metal atom selected from the group consisting of Al, Y, Zr, V(O), Cr, Mn, Fe, Co, Ni, Cu, Zn and Yb;
R⁸⁰ and R⁸¹ together with the C atom to which they are connected according to formula (I), represent a residue selected from the group of residues consisting of formulae (f), (g), (h), (j), (1) and (n) and their tautomeric forms,
n represents a number from 0 to 5;
R⁴⁰ and R⁴¹ independently from each other are selected from the group consisting of hydrogen,
C₁₋₆ alkyl, the C₁₋₆-alkyl being unsubstituted or substituted by C₁₋₆ alkyl, halogen, OH, NO₂, CN, C₁-C₆ alkoxy, NR⁹R¹⁰ or C₆₋₈ aryl, this C₆₋₈ aryl residue being unsubstituted or substituted by C₁₋₆ alkyl, OH, NO₂, CN, halogen, C₆₋₈ aryl, C₁-C₆ alkoxy or NR⁹R¹⁰;
C₆₋₈-aryl-C₁₋₈-alkyl, the C₆₋₈-aryl-C₁₋₈-alkyl being unsubstituted or substituted by C₁₋₆ alkyl, OH, NO₂, CN, halogen, C₆₋₈ aryl, C₁-C₆ alkoxy or NR⁹R¹⁰; and
C₆-C₈ aryl, the C₆₋₈ aryl being unsubstituted or substituted by C₁₋₆ alkyl, OH, NO₂, CN, halogen, C₆₋₈ aryl, C₁-C₆ alkoxy or NR⁹R¹⁰;
R⁴² to R⁴⁶ independently from each other are selected from the group consisting of hydrogen, CN, CO₂H, CO₂R⁹, halogen, NO₂, OH, SH;
OC₁₋₆ alkyl, the OC₁₋₆ alkyl being unsubstituted or substituted by C₁₋₆ alkyl, OH, C₆₋₈ aryl or NR¹¹R¹²;
NR¹¹R¹²;
C₁₋₆ alkyl, the C₁₋₆ alkyl being unsubstituted or substituted by C₁₋₆ alkyl, halogen, OH, C₆₋₈ aryl or NR⁹R¹⁰;
C₁₋₆ alkynyl, the C₁₋₆-alkynyl being unsubstituted or substituted by C₁₋₆ alkyl, OH, C₆₋₈ aryl or NR¹¹R¹²;
SC₁₋₆ alkyl, the SC₁₋₆ alkyl being unsubstituted or substituted by C₁₋₆ alkyl, OH, C₆₋₈ aryl or NR⁹R¹⁰; and
C₆₋₈ aryl, the C₆₋₈ aryl being unsubstituted or substituted by C₁₋₆ alkyl, OH, NO₂, CN, halogen, C₆₋₈ aryl, C₁-C₆ alkoxy, NR⁹R¹⁰ or NR¹¹R¹²;
G1 is a group of formula (III);
E together with the two C atoms, to which the Y is double bonded and the squaric acid moiety is single bonded in formula (III), and together with the Y in formula (III), is selected from the group consisting of residues of formulae (j2), (k2), (12) and (m2) and their tautomeric forms,
R⁶⁰ and R⁶¹ independently from each other are selected from the group consisting of hydrogen;
C₁₋₈ alkyl, the C₁₋₈ alkyl being unsubstituted or substituted by C₁₋₈ alkyl, OH, C₆₋₁₂ aryl or NR³⁰R³¹;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy orNR³⁰R³¹; and
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
R⁶² to R⁶⁵ independently from each other selected from the group consisting of hydrogen, CN, halogen, NO₂, OH;
OC₁₋₈ alkyl, the OC₁₋₈ alkyl being unsubstituted or substituted by C₁₋₈ alkyl, OH, C₆₋₁₂ aryl or NR³⁰R³¹;
NR³²R³³.
C₁₋₈ alkyl, the C₁₋₈ alkyl being unsubstituted or substituted by C₁₋₈ alkyl, halogen, OH, C₆₋₁₂ aryl or NR³⁰R³¹;
SC₁₋₈ alkyl, the SC₁₋₈ alkyl being unsubstituted or substituted by C₁₋₈ alkyl, OH, C₆₋₁₂ aryl or NR³⁰R³¹; and
C₆-₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
R⁹, R¹⁰, R¹¹, R¹², R³⁰, R³¹, R³² and R³³ are independently from each other selected from the group consisting of hydrogen, C₁₋₈ alkyl and C₆₋₁₂ aryl; or
R¹¹ together with R¹², or, independently from R¹¹ and R¹², R³² together with R³³ form together with the N, to which they are connected, a five- or six-membered ring, which may contain further 1, 2 or 3 heteroatoms independently from each other selected from the group consisting of O, N and S;
X represents O.

4. A compound of formula (I) according to claim 1 or 2, wherein
M represents a divalent metal atom or oxidized divalent metal atom selected from the group consisting of Al, Y, Zr, V(O), Cr, Mn, Fe, Co, Ni, Cu, Zn and Yb;
G1 is a group of formula (II);
R⁸⁰ and R⁸¹ together with the C atom to which they are connected according to formula (I), and R⁸² and R⁸³ together with the C atom to which they are connected according to formula (II), are identical, i.e. the compound of formula (I) represents a homoleptic complex, and represent a residue selected from the group of residues consisting of formulae (f), (g), (h), (j), (1) and (n) and their tautomeric forms,
n represents a number from 0 to 5;
R⁴⁰ and R⁴¹ independently from each other are selected from the group consisting of hydrogen,
C₁₋₆ alkyl, the C₁₋₆-alkyl being unsubstituted or substituted by C₁₋₆ alkyl, OH, NO₂, CN, halogen, C₁-C₆ alkoxy, NR⁹R¹⁰ or C₆₋₈ aryl, this C₆₋₈ aryl residue being unsubstitued or substituted by C₁₋₆ alkyl, OH, NO₂, CN, halogen, C₆₋₈ aryl, C₁-C₆ alkoxy or NR⁹R¹⁰;
C₆₋₈-aryl-C₁₋₈-alkyl, the C₆₋₈-aryl-C₁₋₈-alkyl being unsubstituted or substituted by C₁₋₆ alkyl, OH, NO₂, CN, halogen, C₆₋₈ aryl, C₁-C₆ alkoxy or NR⁹R¹⁰; and
C₆-C₈ aryl, the C₆₋₈ aryl being unsubstituted or substituted by C₁₋₆ alkyl, OH, NO₂, CN, halogen, C₆₋₈ aryl, C₁-C₆ alkoxy or NR⁹R¹⁰;
R⁴² to R⁴⁶ independently from each other are selected from the group consisting of hydrogen, CN, CO₂H, CO₂R⁹, halogen, NO₂, OH, SH;
OC₁₋₆ alkyl, the OC₁₋₆ alkyl being unsubstituted or substituted by C₁₋₆ alkyl, OH, C₆₋₈ aryl or NR¹¹R¹²;
NR¹¹R¹²;
C₁₋₆ alkyl, the C₁₋₆ alkyl being unsubstituted or substituted by C₁₋₆ alkyl, halogen, OH, C₆₋₈ aryl or NR⁹R¹⁰;
C₁₋₆ alkynyl, the C₁₋₆-alkynyl being unsubstituted or substituted by C₁₋₆ alkyl, OH, C₆₋₈ aryl or NR¹¹R¹²;
SC₁₋₆ alkyl, the SC₁₋₆ alkyl being unsubstituted or substituted by C₁₋₆ alkyl, OH, C₆₋₈ aryl or NR⁹R¹⁰; and
C₆₋₈ aryl, the C₆₋₈ aryl being unsubstituted or substituted by C₁₋₆ alkyl, OH, NO₂, CN, halogen, C₆₋₈ aryl, C₁-C₆ alkoxy, NR⁹R¹⁰ or NR¹¹R¹²;
R⁹, R¹⁰, R¹¹ and R¹² are independently from each other selected from the group consisting of hydrogen, C₁₋₈ alkyl and C₆₋₁₂ aryl; or
R¹¹ together with R¹² form together with the N, to which they are connected, a five- or six-membered ring, which may contain further 1, 2 or 3 heteroatoms independently from each other selected from the group consisting of O, N and S.

5. A compound of formula (I) according to claim 1 or 2, wherein
M represents a divalent metal atom or oxidized divalent metal atom selected from the group consisting of Al, Y, Zr, V(O), Cr, Mn, Fe, Co, Ni, Cu, Zn and Yb;
G1 is a group of formula (II);
R⁸⁰ and R⁸¹ together with the C atom to which they are connected according to formula (I), and, independently from R⁸⁰ and R⁸¹, R⁸² and R⁸³ together with the C atom to which they are connected according to formula (II), are different, i.e. the compound of formula (I) represents a heteroleptic complex, and represent a residue selected from the group of residues consisting of formulae (f), (g), (h), (j), (1) and (n) and their tautomeric forms,
n represents a number from 0 to 5;
R⁴⁰ and R⁴¹ independently from each other are selected from the group consisting of hydrogen,
C₁₋₆ alkyl, the C₁₋₆-alkyl being unsubstituted or substituted by C₁₋₆ alkyl, OH, NO₂, CN, halogen, C₁-C₆ alkoxy, NR⁹R¹⁰ or C₆₋₈ aryl, this C₆₋₈ aryl residue being unsubstitued or substituted by C₁₋₆ alkyl, OH, NO₂, CN, halogen, C₆₋₈ aryl, C₁-C₆ alkoxy or NR⁹R¹⁰;
C₆₋₈-aryl-C₁₋₈-alkyl, the C₆₋₈-aryl-C₁₋₈-alkyl being unsubstituted or substituted by C₁₋₆ alkyl, OH, NO₂, CN, halogen, C₆₋₈ aryl, C₁-C₆ alkoxy or NR⁹R¹⁰; and
C₆-C₈ aryl, the C₆₋₈ aryl being unsubstituted or substituted by C₁₋₆ alkyl, OH, NO₂, CN, halogen, C₆₋₈ aryl, C₁-C₆ alkoxy or NR⁹R¹⁰;
R⁴² to R⁴⁶ independently from each other are selected from the group consisting of hydrogen, CN, CO₂H, CO₂R⁹, halogen, NO₂, OH, SH;
OC₁₋₆ alkyl, the OC₁₋₆ alkyl being unsubstituted or substituted by C₁₋₆ alkyl, OH, C₆₋₈ aryl or NR¹¹R¹²;
NR¹¹R¹²;,
C₁₋₆ alkyl, the C₁₋₆ alkyl being unsubstituted or substituted by C₁₋₆ alkyl, halogen, OH, C₆₋₈ aryl or NR⁹R¹⁰;
C₁₋₆ alkynyl, the C₁₋₆-alkynyl being unsubstituted or substituted by C₁₋₆ alkyl, OH, C₆₋₈ aryl or NR¹¹R¹²;
SC₁₋₆ alkyl, the SC₁₋₆ alkyl being unsubstituted or substituted by C₁₋₆ alkyl, OH, C₆₋₈ aryl or NR⁹R¹⁰; and
C₆₋₈ aryl, the C₆₋₈ aryl being unsubstituted or substituted by C₁₋₆ alkyl, OH, NO₂, CN, halogen, C₆₋₈ aryl, C₁-C₆ alkoxy, NR⁹R¹⁰ or NR¹¹R¹²;
R⁹, R¹⁰, R¹¹ and R¹² are independently from each other selected from the group consisting of hydrogen, C₁₋₈ alkyl and C₆₋₁₂ aryl; or
R¹¹ together with R¹² form together with the N, to which they are connected, a five- or six-membered ring, which may contain further 1, 2 or 3 heteroatoms independently from each other selected from the group consisting of O, N and S.

6. A process for the preparation of a compound of formula (I), as defined in any one of claims 1 to 5, by complexing reaction of one equivalent of a compound of formula (Ia) and one equivalent of a compound of formula (IIa) or (IIIa) with one equivalent of a divalent metal salt, 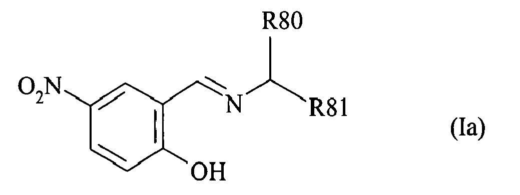 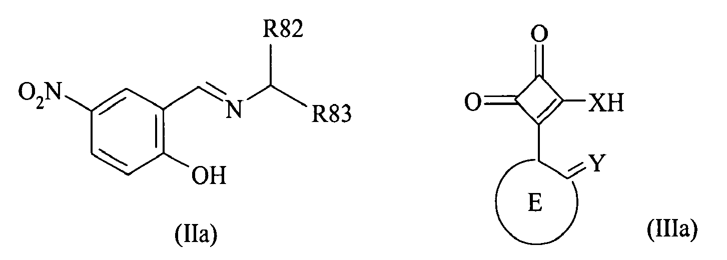 wherein
R⁸⁰, R⁸¹, R⁸² and R⁸³ are independently from each other C₁₋₈ alkyl or C₃₋₈ cycloalkyl; or
R⁸⁰ and R⁸¹ together with the C atom to which they are connected according to formula (I), or, independently from R⁸⁰ and R⁸¹, R⁸² and R⁸³ together with the C atom to which they are connected according to formula (II), form a five or six membered aromatic or heteroaromatic cycle, the heteroaromatic cycle containing 1, 2 or 3 heteroatoms independently from each other selected from the group consisting of O, N and S; the aromatic or heteroaromatic cycle or the C₃₋₈ cycloalkyl can be annealed with a five or six membered aromatic or heteroaromatic cycle, this second heteroaromatic cycle containing 1, 2 or 3 heteroatoms independently from each other selected from the group consisting of O, N and S;
the C₁₋₈ alkyl, the C₃₋₈ cycloalkyl, the aromatic or the heteroaromatic cycles can be substituted by 1 to 8 substituents, the substituents being independently from each other selected from the group consisting of hydrogen, CN, CO₂H, CO₂R⁹, halogen, NO₂, OH, SH;
C₁₋₁₂ alkyl, the C₁₋₁₂-alkyl being unsubstituted or substituted by C₁₋₈ alkyl, OH, NO₂, CN, halogen, C₁-C₈ alkoxy, NR⁹R¹⁰ or C₆₋₁₂ aryl, this C₆₋₁₂ aryl residue being unsubstitued or substituted by C₁₋₈ alkyl, OH, NO₂, CN, halogen, C₆₋₁₂ aryl, C₁-C₈ alkoxy or NR⁹R¹⁰;
C₁₋₈ alkynyl, the C₁₋₈ alkynyl being unsubstituted or substituted by C₁₋₈ alkyl, OH, C₆₋₁₂ aryl or NR⁹R¹⁰;
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy, NR⁹R¹⁰ or NR¹¹R¹²;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy or NR⁹R¹⁰;
OC₁₋₈ alkyl, the OC₁₋₈ alkyl being unsubstituted or substituted by C₁₋₈ alkyl, OH, C₆₋₁₂ aryl or NR¹¹R¹²;
NR¹¹R¹²; and
SC₁₋₈ alkyl, the SC₁₋₈ alkyl being unsubstituted or substituted by C₁₋₈ alkyl, OH, C₆₋₁₂ aryl or NR⁹R¹⁰;
E together with the two C atoms, to which the Y is double bonded and the squaric acid moiety is single bonded in formula (III), is a five or six membered aromatic or heteroaromatic cycle, the aromatic or heteroaromatic cycle can be annealed with a five or six membered aromatic or heteroaromatic cycle,
the heteroaromatic cycles contain independently from each other 1, 2 or 3 heteroatoms selected from the group consisting of O, N and S,
the aromatic or heteroaromatic cycles can independently from each other be further substituted by 1 to 6 substituents, the substituents being independently from each other selected from the group consisting of hydrogen, CN, halogen, NO₂, OH, SH,
C₁₋₈ alkyl, the C₁₋₈ alkyl being unsubstituted or substituted by C₁₋₈ alkyl, halogen, OH, C₆₋₁₂ aryl or NR³⁰R³¹;
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy or NR³⁰R³¹;
OC₁₋₈ alkyl, the OC₁₋₈ alkyl being unsubstituted or substituted by C₁₋₈ alkyl, OH, C₆₋₁₂ aryl or NR³²R³³;
NR³²R³³; and
SC₁₋₈ alkyl, the SC₁₋₈ alkyl being unsubstituted or substituted by C₁₋₈ alkyl, OH, C₆₋₁₂ aryl or NR³⁰R³¹;
R⁹,R¹⁰ R¹¹, R¹², R³⁰, R³¹, R³² and R³³ are independently from each other selected from the group consisting of hydrogen, C₁₋₈ alkyl and C₆₋₁₂ aryl; or
R¹¹ together with R¹², or, independently from R¹¹ and R¹², R³² together with R³³ form together with the N, to which they are connected, a five- or six-membered ring, which may contain further 1, 2 or 3 heteroatoms independently from each other selected from the group consisting of O, N and S;
X is selected from the group consisting of O, S and imino-nitrogen N-R¹;
Y is selected from the group consisting of O, S and imino-nitrogen N-R²;
R¹ and R² are independently from each other selected from the group consisting of hydrogen, C₁₋₁₂ alkyl, benzyl and C₆₋₁₂ aryl; the C₁₋₁₂ alkyl being unsubstituted or substituted by OH, C₆₋₁₂ aryl, halogen or NR³⁰R³¹.

7. A process according to claim 6, wherein the compounds of formula (Ia) and (IIa) are prepared by a condensation reaction of the 2-Hydroxy-5-nitrobenzaldehyde with the respective amines.

8. A process according to claim 6 or 7, wherein the divalent metal salt is a derived from a metal selected of the group consisting of V(O), Fe, Ni, Cu, Co, Zn, and Mn.

9. A process according to one or more of claim 6 to 8, wherein the divalent metal salt is selected of the group consisting Vanadyl(acetoacetate)₂, Fe(OAc)₂, Cu(SO₄), Cu(SO₄)*5 H₂O, CuCl₂, Ni(OAc)₂*4 H₂O, NiCl₂*6 H₂O, Co(SO₄), CoSO₄*7H₂O, Mn (OAc)₂*4 H₂O and Zn(OAc)₂*4 H₂O.

10. A compound of formula (105), (106), (109), (110) or (112).

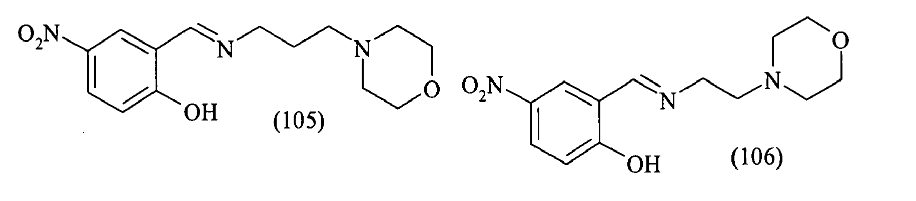

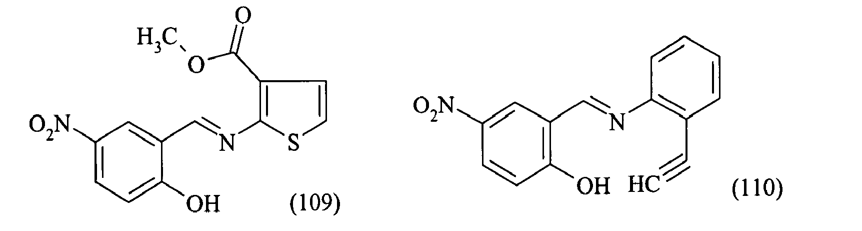

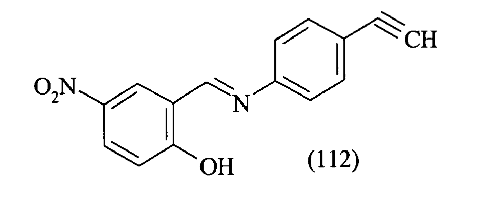

11. A process for the preparation of a compound of formula (105), (106), (109), (110) or (112), as defined in claim 10, by condensation reaction of the respective amine with 2-Hydroxy-5-nitrobenzaldehyde.

12. The use of a compound of formula (105), (106), (109), (110) or (112), as defined in claim 10, as a ligand in metal complex dyes.

13. A composition (C) comprising a component (A) and a component (B), wherein the component (A) is a compound of formula (I) as defined in one or more of claims 1 to 5;
and
the component (B) is a compound of formula (X), wherein 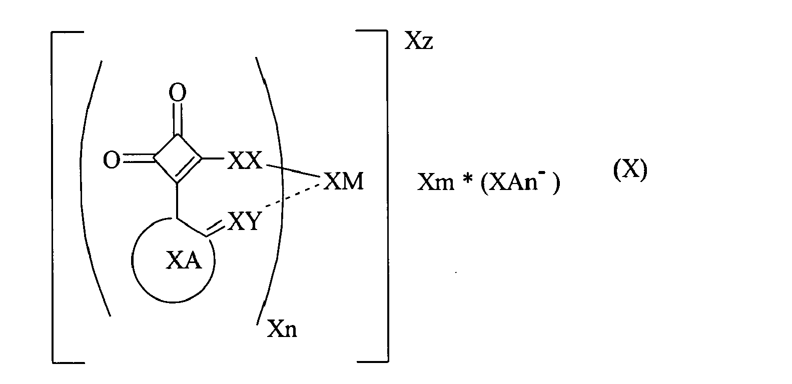
XX is selected from the group consisting of O, S and N-R51;
XY is selected from the group consisting of O, S or imino-nitrogen N-R52;
R51 and R52 are independently from each other selected from the group consisting of hydrogen, C₁₋₁₂ alkyl, benzyl and C₆₋₁₂ aryl; the C₁₋₁₂ alkyl being unsubstituted or substituted by OH, C₆₋₁₂ aryl, halogen, NR55R56;
Xz represents a charge equal to 0, +1 or +2;
Xm represents a number equal to Xz;
XAn⁻ represents an anion counter-part selected from inorganic anions such as iodine, fluorine, bromine, chlorine, perchlorate, hexafluoroantimonate, hexafluorophosphate, tetrafluoroborate, tetraphenylborate or from organic anions such as dicyanoamide (N(CN)₂) or trifluoromethanesulfonimide (N(SO₂CF₃)₂; or
XAn⁻ can also be an anionic azo metal complex;
XM represents a metal ion;
XA is a five or six membered aromatic or heteroaromatic cycle, the aromatic or heteroaromatic cycle can be annealed with a five or six membered aromatic or heteroaromatic cycle, the heteroaromatic cycles contain 1, 2 or 3 heteroatoms selected from the group consisting of O, N and S, the aromatic or heteroaromatic cycles can be further substituted by 1 to 8 substituents independently from each other selected from the group consisting of
hydrogen, CN, halogen, NO₂, OH, SH,
C₁₋₈ alkyl, the C₁₋₈-alkyl being unsubstituted or substituted by C₁₋₈ alkyl, OH, C₆₋₁₂ aryl or NR55R56;
C(XU)₃;
C₆-C₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy, NR55R56;
C₁₋₈ alkoxy, the C₁₋₈ alkoxy being unsubstituted or substituted by C₁₋₈ alkyl, OH, C₆₋₁₂ aryl or NR57R58;
NR57R58; and
C₁₋₈ alkylthio, the C₁₋₈ alkylthio being unsubstituted or substituted by C₁₋₈ alkyl, OH, C₆₋₁₂ aryl or NR55R56; the
R55 and R56 are independently from each other hydrogen, C₁₋₈ alkyl or C₆₋₁₂ aryl;
R57 and R58 are independently from each other hydrogen, C₁₋₈ alkyl or C₆₋₁₂ aryl; or
R57 and R58 form together with the N, to which they are connected, a five- or six-membered ring, which may contain further 1, 2 or 3 heteroatoms selected from the group consisting of O, N and S;
XU represents chlorine, fluorine or bromine;
Xn represents a number 1, 2 or 3.

14. A composition (C) according to claim 13, wherein
the component (A) is either a compound of formula (I), wherein
M represents a divalent metal atom or oxidized divalent metal atom selected from the group consisting of Al, Y, Zr, V(O), Cr, Mn, Fe, Co, Ni, Cu, Zn and Yb;
R⁸⁰ and R⁸¹ together with the C atom to which they are connected according to formula (I), represent a residue selected from the group of residues consisting of formulae (f), (g), (h), (j), (1) and (n) and their tautomeric forms,
n represents a number from 0 to 5;
R⁴⁰ and R⁴¹ independently from each other are selected from the group consisting of hydrogen,
C₁₋₆ alkyl, the C₁₋₆-alkyl being unsubstituted or substituted by C₁₋₆ alkyl, halogen, OH, NO₂, CN, C₁-C₆ alkoxy, NR⁹R¹⁰ or C₆₋₈ aryl, this C₆₋₈ aryl residue being unsubstituted or substituted by C₁₋₆ alkyl, OH, NO₂, CN, halogen, C₆₋₈ aryl, C₁-C₆ alkoxy or NR⁹R¹⁰;
C₆₋₈-aryl-C₁₋₈-alkyl, the C₆₋₈-aryl-C₁₋₈-alkyl being unsubstituted or substituted by C₁₋₆ alkyl, OH, NO₂, CN, halogen, C₆₋₈ aryl, C₁-C₆ alkoxy or NR⁹R¹⁰; and
C₆-C₈ aryl, the C₆₋₈ aryl being unsubstituted or substituted by C₁₋₆ alkyl, OH, NO₂, CN, halogen, C₆₋₈ aryl, C₁-C₆ alkoxy or NR⁹R¹⁰;
R⁴² to R⁴⁶ independently from each other are selected from the group consisting of hydrogen, CN, CO₂H, CO₂R⁹, halogen, NO₂, OH, SH;
OC₁₋₆ alkyl, the OC₁₋₆ alkyl being unsubstituted or substituted by C₁₋₆ alkyl, OH, C₆₋₈ aryl or NR¹¹R¹²;
NR¹¹R¹²;
C₁₋₆ alkyl, the C₁₋₆ alkyl being unsubstituted or substituted by C₁₋₆ alkyl, halogen, OH, C₆₋₈ aryl or NR⁹R¹⁰;
C₁₋₆ alkynyl, the C₁₋₆-alkynyl being unsubstituted or substituted by C₁₋₆ alkyl, OH, C₆₋₈ aryl or NR¹¹R¹², preferably unsubstituted ethynyl;
SC₁₋₆ alkyl, the SC₁₋₆ alkyl being unsubstituted or substituted by C₁₋₆ alkyl, OH, C₆₋₈ aryl or NR⁹R¹⁰; and
C₆₋₈ aryl, the C₆₋₈ aryl being unsubstituted or substituted by C₁₋₆ alkyl, OH, NO₂, CN, halogen, C₆₋₈ aryl, C₁-C₆ alkoxy, NR⁹R¹⁰ or NR¹¹R¹²;
G1 is a group of formula (III);
E together with the two C atoms, to which the Y is double bonded and the squaric acid moiety is single bonded in formula (III), and together with the Y in formula (III), is selected from the group consisting of residues of formulae (j2), (k2), (12) and (m2) and their tautomeric forms,
R⁶⁰ and R⁶¹ independently from each other are selected from the group consisting of hydrogen;
C₁₋₈ alkyl, the C₁₋₈ alkyl being unsubstituted or substituted by C₁₋₈ alkyl, OH, C₆₋₁₂ aryl or NR³⁰R³¹;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy orNR³⁰R³¹; and
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
R⁶² to R⁶⁵ independently from each other selected from the group consisting of hydrogen, CN, halogen, NO₂, OH;
OC₁₋₈ alkyl, the OC₁₋₈ alkyl being unsubstituted or substituted by C₁₋₈ alkyl, OH, C₆₋₁₂ aryl or NR³⁰R³¹;
NR³²R³³;
C₁₋₈ alkyl, the C₁₋₈ alkyl being unsubstituted or substituted by C₁₋₈ alkyl, halogen, OH, C₆₋₁₂ aryl or NR³⁰R³¹;
SC₁₋₈ alkyl, the SC₁₋₈ alkyl being unsubstituted or substituted by C₁₋₈ alkyl, OH, C₆₋₁₂ aryl or NR³⁰R³¹; and
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR³⁰R³¹;
R⁹,R¹⁰, R¹¹, R¹², R³⁰, R³¹, R³² and R³³ are independently from each other selected from the group consisting of hydrogen, C₁₋₈ alkyl and C₆₋₁₂ aryl, preferably of hydrogen, methyl and ethyl; or
R¹¹ together with R¹², or, independently from R¹¹ and R¹², R³² together with R³³ form together with the N, to which they are connected, a five- or six-membered ring, which may contain further 1, 2 or 3 heteroatoms independently from each other selected from the group consisting of O, N and S, preferably a morpholino ring;
X represents O;
or the component (A) is a compound of formula (I), wherein
M represents a divalent metal atom or oxidized divalent metal atom selected from the group consisting of Al, Y, Zr, V(O), Cr, Mn, Fe, Co, Ni, Cu, Zn and Yb;
G1 is a group of formula (II);
R⁸⁰ and R⁸¹ together with the C atom to which they are connected according to formula (I), and R⁸² and R⁸³ together with the C atom to which they are connected according to formula (II), are identical, i.e. the compound of formula (I) represents a homoleptic complex, and represent a residue selected from the group of residues consisting of formulae (f), (g), (h), (j), (1) and (n) and their tautomeric forms,
n represents a number from 0 to 5;
R⁴⁰ and R⁴¹ independently from each other are selected from the group consisting of hydrogen,
C₁₋₆ alkyl, the C₁₋₆-alkyl being unsubstituted or substituted by C₁₋₆ alkyl, OH, NO₂, CN, halogen, C₁-C₆ alkoxy, NR⁹R¹⁰ or C₆₋₈ aryl, this C₆₋₈ aryl residue being unsubstitued or substituted by C₁₋₆ alkyl, OH, NO₂, CN, halogen, C₆₋₈ aryl, C₁-C₆ alkoxy or NR⁹R¹⁰;
C₆₋₈-aryl-C₁₋₈-alkyl, the C₆₋₈-aryl-C₁₋₈-alkyl being unsubstituted or substituted by C₁₋₆ alkyl, OH, NO₂, CN, halogen, C₆₋₈ aryl, C₁-C₆ alkoxy or NR⁹R¹⁰; and
C₆-C₈ aryl, the C₆₋₈ aryl being unsubstituted or substituted by C₁₋₆ alkyl, OH, NO₂, CN, halogen, C₆₋₈ aryl, C₁-C₆ alkoxy or NR⁹R¹⁰;
R⁴² to R⁴⁶ independently from each other are selected from the group consisting of hydrogen, CN, CO₂H, CO₂R⁹, halogen, NO₂, OH, SH;
OC₁₋₆ alkyl, the OC₁₋₆ alkyl being unsubstituted or substituted by C₁₋₆ alkyl, OH, C₆₋₈ aryl or NR¹¹R¹²;
NR¹¹R¹²;
C₁₋₆ alkyl, the C₁₋₆ alkyl being unsubstituted or substituted by C₁₋₆ alkyl, halogen, OH, C₆₋₈ aryl or NR⁹R¹⁰;
C₁₋₆ alkynyl, the C₁₋₆-alkynyl being unsubstituted or substituted by C₁₋₆ alkyl, OH, C₆₋₈ aryl or NR¹¹R¹², preferably unsubstituted ethynyl;
SC₁₋₆ alkyl, the SC₁₋₆ alkyl being unsubstituted or substituted by C₁₋₆ alkyl, OH, C₆₋₈ aryl or NR⁹R¹⁰; and
C₆₋₈ aryl, the C₆₋₈ aryl being unsubstituted or substituted by C₁₋₆ alkyl, OH, NO₂, CN, halogen, C₆₋₈ aryl, C₁-C₆ alkoxy, NR⁹R¹⁰ or NR¹¹R¹²;
R⁹, R¹⁰, R¹¹ and R¹² are independently from each other selected from the group consisting of hydrogen, C₁₋₈ alkyl and C₆₋₁₂ aryl, preferably of hydrogen, methyl and ethyl; or
R¹¹ together with R¹² form together with the N, to which they are connected, a five- or six-membered ring, which may contain further 1, 2 or 3 heteroatoms independently from each other selected from the group consisting of O, N and S, preferably a morpholino ring;
and
the component (B) is a compound of formula (X), wherein
XX represents O;
Xz represents a charge equal to 0 or +1;
Xm represents a number equal to Xz;
XAn⁻ represents chloride;
XM represents a metal ion selected from the group consisting of Al, Y, Zr, Cr, Fe, Co, Ni, Cu, Zn, Yb;
Xn represents the number 2 or 3;
XA together with XY is selected from the group consisting of residues of formulae (Xj), (Xk), (Xl) and (Xm) and their tautomeric forms, the (*) denoting the bond of XA to the squaric acid moiety in formula (X), 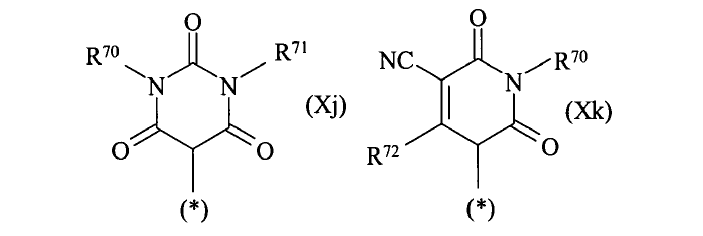 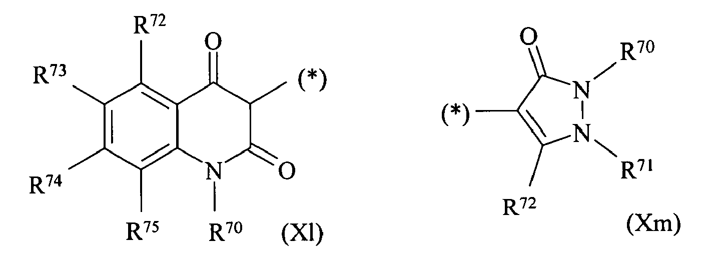 wherein
R70 and R71 independently from each other represent hydrogen;
C₁₋₈ alkyl, the C₁₋₈ alkyl being unsubstituted or substituted by C₁₋₈ alkyl, OH, C₆₋₁₂ aryl or NR55R56;
C₆₋₁₂-aryl-C₁₋₁₂-alkyl, the C₆₋₁₂-aryl-C₁₋₁₂-alkyl being unsubstituted or substituted by C₁₋₈ alkyl, OH, NO₂, CN, halogen, C₆₋₁₂ aryl, C₁-C₈ alkoxy, NR55R56; or
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR55R56;
R72 to R75 independently from each other represent hydrogen, CN, halogen, NO₂, hydroxyl;
C₁₋₈ alkoxy, the C₁₋₈ alkoxy being unsubstituted or substituted by C₁₋₈ alkyl, OH, C₆₋₁₂ aryl or NR55R56;
NR57R58;
C₁₋₈ alkyl, the C₁₋₈ alkyl being unsubstituted or substituted by C₁₋₈ alkyl, OH, C₆₋₁₂ aryl or NR55R56;
C(XU)₃;
C₁₋₈ alkylthio, the C₁₋₈ alkyl being unsubstituted or substituted by C₁₋₈ alkyl, OH, C₆₋₁₂ aryl or NR55R56; or
C₆₋₁₂ aryl, the C₆₋₁₂ aryl being unsubstituted or substituted by C₁₋₈ alkyl, OH, NO₂, CN, halogen, C₆₋₁₂ aryl, C₁-C₈ alkoxy or NR55R56;
R55 and R56 are independently from each other hydrogen, C₁₋₈ alkyl or C₆₋₁₂ aryl;
R57 and R58 are independently from each other hydrogen, C₁₋₈ alkyl or C₆₋₁₂ aryl; or
R57 and R58 form together with the N, to which they are connected, a five- or six-membered ring, which may contain further 1, 2 or 3 heteroatoms selected from the group consisting of O, N and S;
XU represents chlorine, fluorine or bromine.

15. A composition (C) according to claim 13 or 14, wherein the ratio of the weight of the component (A) to the weight of the component (B) is of from between 0.001 and 0.999 to 0.999 and 0.001.

16. A process for the preparation of a composition (C) as defined in one or more of the claims 13 to 15 by physically combining the components (A) and (B).

17. The use of a compound of formula (I), as defined in one or more of claims 1 to 5, or of a composition (C), as defined in one or more of the claims 13 to 15, in an optical layer for optical data recording.

18. The use according to claim 17 of a compound of formula (I) or of a composition (C), as a dye in an optical layer for optical data recording.

19. An optical layer comprising at least one compound of formula (I), as defined in one or more of claims 1 to 5.

20. A method for producing an optical layer as defined in claim 19, comprising the following steps
(a) providing a substrate,
(b) dissolving at least one compound of formula (I), as defined in one or more of claims 1 to 5, in an organic solvent to form a solution,
(c) coating the solution (b) on the substrate (a),
(d) evaporating the solvent to form an optical layer.

21. An optical layer according to claim 19, comprising at least one compound of formula (X), as defined in claim 13 or 14.

22. A method for producing an optical layer as defined in claim 21, comprising the following steps
(a) providing a substrate,
(b) dissolving at least one compound of formula (I), as defined in one or more of claims 1 to 5, and at least one compound of formula (X), as defined in claim 13 or 14, by
(b 1) dissolving a composition (C), as defined in one or more of claims 13 to 15, in an organic solvent to form a solution, or
(b2a) dissolving at least one compound of formula (I), as defined in one or more of claims 1 to 5, in an organic solvent to form a solution, and
(b2b) dissolving at least one compound of formula (X), as defined in claim 13 or 14, in an organic solvent to form a solution, or
(b3) dissolving at least one compound of formula (I), as defined in one or more of claims 1 to 5, together with at least one compound of formula (X), as defined in claim 13 or 14, in an organic solvent to form a solution,
(c) coating the solution or the solutions on the substrate by
(c1) coating the solution (b1) or the solution (b3) on the substrate (a), or
(c2) coating the solution (b2a) on the substrate (a), evaporating the solvent, and coating the solution (b2b) on the substrate (a),
(d) evaporating the solvent to form an optical layer.

23. A method according to claim 20 or 22, wherein the substrate is polycarbonate (PC) or polymethylmethacrylate (PMMA).

24. A method according to claim 20 or 22 or 23, wherein the organic solvent is selected from C₁₋₈ alcohol, halogen substituted C₁₋₈ alcohols, C₁₋₈ ketone, C₁₋₈ ether, halogen substituted C₁₋₄ alkane, or amides.

25. An optical data recording medium comprising an optical layer as defined in claim 19 or 21.
